# EUROPEAN PATENT APPLICATION

(11) **EP 4 144 473 A1**
(43) Date of publication of application: **08.03.2023**
(21) Application number: 20932956.4
(22) Date of filing: 30.04.2020
(51) Int. Cl.: B23K 26/00

(54) **PROCESSING SYSTEM**

(71) Applicant: NIKON CORPORATION, Minato-ku Tokyo 108-6290 (JP)
(72) Inventor: EGAMI, Shigeki, Tokyo 108-6290 (JP)
(74) Representative: Hoffmann Eitle
(86) International application number: PCT/JP2020/018298
(87) International publication number: WO 2021/220477

(57) **Abstract**

A processing system includes a holding apparatus for hold an object to be rotatable; a rotation apparatus for rotating the holding apparatus; a beam irradiation apparatus for irradiating the object with an energy beam; an object measurement apparatus for measuring the object; and a control apparatus for controlling at least one of the beam irradiation apparatus and the rotation apparatus based on an information related to the object measured by the object measurement apparatus and an information of a rotational axis of the rotation apparatus, and processes the object by irradiating the object held by the holding apparatus with the energy beam from the beam irradiation apparatus.

## Description

### Technical Field

The present invention relates to a processing system that is configured to process an object by an energy beam.

### Background Art

A Patent Literature 1 discloses a processing system that is configured to process an object by irradiating the object with a laser light. This type of processing system is required to properly process the object.

### Citation List

### Patent Literature

Patent Literature 1: US4,427,872B

### Summary of Invention

A first aspect provides a processing system including: a holding apparatus that is configured to hold an object to be rotatable; a rotation apparatus that is configured to rotate the holding apparatus; a beam irradiation apparatus that is configured to irradiate the object held by the holding apparatus with an energy beam; an object measurement apparatus that is configured to measure the object; and a control apparatus that is configured to control at least one of the beam irradiation apparatus and the rotation apparatus based on an information related to the object measured by the object measurement apparatus and an information of a rotational axis of the rotation apparatus, the object being processed by irradiating the object held by the holding apparatus with the energy beam from the beam irradiation apparatus.

A second aspect provides a processing system including: a holding apparatus that is configured to hold an object to be rotatable; a rotation apparatus that is configured to rotate the holding apparatus; a beam irradiation apparatus that is configured to irradiate the object held by the holding apparatus with an energy beam; an object measurement apparatus that is configured to measure the object; and a control apparatus that is configured to control at least one of the beam irradiation apparatus and the rotation apparatus based on a misalignment between the object measured by the object measurement apparatus and a rotational axis of the rotation apparatus, the object being processed by irradiating the object held by the holding apparatus with the energy beam from the beam irradiation apparatus.

A third aspect provides a processing system including: a holding apparatus that is configured to hold an object to be rotatable; a rotation apparatus that is configured to rotate the holding apparatus; a beam irradiation apparatus that is configured to irradiate the object held by the holding apparatus with an energy beam; an object measurement apparatus that is configured to measure the object; and a control apparatus that is configured to control at least one of the beam irradiation apparatus and the rotation apparatus based on an information related to the object measured by the object measurement apparatus and an information of at least one of a position and an attitude of the rotation apparatus, the object being processed by irradiating the object held by the holding apparatus with the energy beam from the beam irradiation apparatus.

A fourth aspect provides a processing system including: a holding apparatus that is configured to hold an object to be rotatable; a rotation apparatus that is configured to rotate the holding apparatus; a beam irradiation apparatus that is configured to irradiate the object held by the holding apparatus with an energy beam; a beam measurement apparatus that is configured to measure the energy beam from the beam irradiation apparatus; and a control apparatus that is configured to control the beam irradiation apparatus based on an information related to the energy beam measured by the beam measurement apparatus, the object being processed by irradiating the object held by the holding apparatus with the energy beam from the beam irradiation apparatus.

A fifth aspect provides a processing system including: a holding apparatus that is configured to hold an object to be rotatable; a rotation apparatus that is configured to rotate the holding apparatus; a beam irradiation apparatus that is configured to irradiate the object held by the holding apparatus with an energy beam; an object measurement apparatus that is configured to measure the object; a beam measurement apparatus that is configured to measure the energy beam from the beam irradiation apparatus; a movement apparatus that is configured to move at least one of the beam irradiation apparatus and the beam measurement apparatus; and a control apparatus that is configured to control at least the movement apparatus, the control apparatus being configured to: move at least one of the beam irradiation apparatus and the beam measurement apparatus to be at a position at which the beam measurement apparatus measures the energy beam from the beam irradiation apparatus; and move at least one of the beam irradiation apparatus and the beam measurement apparatus to be at a position at which the object measurement apparatus measures at least a part of the beam measurement apparatus.

A sixth aspect provides a processing system including: a holding apparatus that is configured to hold an object to be rotatable; a rotation apparatus that is configured to rotate the holding apparatus; a beam irradiation apparatus that is configured to irradiate the object held by the holding apparatus with an energy beam; an object measurement apparatus that is configured to measure the object; a beam measurement apparatus that is configured to measure the energy beam from the beam irradiation apparatus; a movement apparatus that is configured to move at least one of the beam irradiation apparatus and the beam measurement apparatus; an obtaining apparatus that is configured to obtain an information related to at least one of a position of the beam irradiation apparatus and a position of the beam measurement apparatus; and a control apparatus that is configured to control at least the movement apparatus, the control apparatus being configured to: move at least one of the beam irradiation apparatus and the beam measurement apparatus to an irradiation allowable position at which the beam irradiation apparatus irradiates at least a part of the beam measurement apparatus with the energy beam; obtain, by using the obtaining apparatus, an irradiation position information related to at least one of the position of the beam irradiation apparatus and the position of the beam measurement apparatus that has moved to the irradiation allowable position; and control at least one of the position of the beam irradiation apparatus and the position of the beam measurement apparatus based on the irradiation position information.

A seventh aspect provides a processing system including: a holding apparatus that is configured to hold an object to be rotatable; a rotation apparatus that is configured to rotate the holding apparatus; a beam irradiation apparatus that is configured to irradiate the object held by the holding apparatus with an energy beam; an object measurement apparatus that is configured to measure the object; a beam measurement apparatus that is configured to measure the energy beam from the beam irradiation apparatus; a movement apparatus that is configured to move at least one of the beam irradiation apparatus and the beam measurement apparatus; an obtaining apparatus that is configured to obtain an information related to at least one of a position of the beam irradiation apparatus and a position of the beam measurement apparatus; and a control apparatus that is configured to control at least the movement apparatus, the control apparatus being configured to: move at least one of the beam irradiation apparatus and the beam measurement apparatus to a measurement allowable position at which the object measurement apparatus measures at least a part of the beam measurement apparatus; obtain, by using the obtaining apparatus, a measurement position information related to at least one of the position of the beam irradiation apparatus and the position of the beam measurement apparatus that has moved to the measurement allowable position; and control at least one of the position of the beam irradiation apparatus and the position of the beam measurement apparatus based on the measurement position information.

A eighth aspect provides a processing system including: a holding apparatus that is configured to hold an object to be rotatable; a rotation apparatus that is configured to rotate the holding apparatus; a beam irradiation apparatus that is configured to irradiate the object held by the holding apparatus with an energy beam; an object measurement apparatus that is configured to measure a three-dimensional shape of the object; and a control apparatus that is configured to control at least one of the beam irradiation apparatus and the rotation apparatus based on a measured result by the object measurement apparatus, the object being processed by irradiating the object held by the holding apparatus with the energy beam from the beam irradiation apparatus.

A ninth aspect provides a processing system including: a holding apparatus that is configured to hold an object; a rotation apparatus that is configured to rotate the holding apparatus; a beam irradiation apparatus that is configured to irradiate the object held by the holding apparatus with an energy beam; an object measurement apparatus that is configured to measure the object; and a control apparatus that is configured to control the beam irradiation apparatus based on a measured result of the object by the object measurement apparatus, the bean irradiation apparatus changing an irradiation position of the energy beam on a surface of the object along the surface of the object in a period during which the beam irradiation apparatus irradiates the object with the energy beam, the control apparatus being configured to control the beam irradiation apparatus based on the measured result of the object including a processed mark by the energy beam.

A tenth aspect provides a processing system including: a holding apparatus that is configured to hold an object; a rotation apparatus that is configured to rotate the holding apparatus; a beam irradiation apparatus that is configured to irradiate the object held by the holding apparatus with an energy beam; an object measurement apparatus that is configured to measure the object; a control apparatus that is configured to control at least one of the beam irradiation apparatus and the rotation apparatus based on a measured result of the object by the object measurement apparatus; and a movement apparatus that is configured to move the rotation apparatus, the object measurement apparatus being configured to measure the object every time the movement apparatus moves the rotation apparatus along one direction, the control apparatus being configured to control at least one of the beam irradiation apparatus and the movement apparatus based on the measured result of the object by the object measurement apparatus in an irradiation period during which the beam irradiation apparatus irradiates the object with the energy beam.

A eleventh aspect provides a processing system including: a holding apparatus that is configured to hold an object; a rotation apparatus that is configured to rotate the holding apparatus; a beam irradiation apparatus that is configured to irradiate the object held by the holding apparatus with an energy beam; an object measurement apparatus that is configured to measure the object; and a control apparatus that is configured to control at least one of the beam irradiation apparatus and the rotation apparatus based on a measured result of the object by the object measurement apparatus, the object measurement apparatus being configured to measure the object every time the rotation apparatus rotates the rotation apparatus by a predetermined angle, the control apparatus being configured to control the beam irradiation apparatus based on the measured result of the object by the object measurement apparatus.

A twelfth aspect provides a processing system including: a holding apparatus that is configured to hold an object; a rotation apparatus that is configured to rotate the holding apparatus; a beam irradiation apparatus that is configured to irradiate the object held by the holding apparatus with an energy beam; an object measurement apparatus that is configured to measure the object; a control apparatus that is configured to control at least one of the beam irradiation apparatus and the rotation apparatus based on a measured result of the object by the object measurement apparatus; and a beam measurement apparatus that is disposed at the rotation apparatus and that is configured to measure the energy beam from the beam irradiation apparatus.

A thirteenth aspect provides a processing system including: a holding apparatus that is configured to hold an object to be rotatable; a rotation apparatus that is configured to rotate the holding apparatus; a beam irradiation apparatus that is configured to irradiate the object held by the holding apparatus with an energy beam; an object measurement apparatus that is configured to measure the object; a change apparatus that is configured to change an irradiation position of the energy beam with which the object is irradiated; and a control apparatus that is configured to control at least one of the rotation apparatus and the change apparatus, the control apparatus being configured to control the rotation apparatus and the change apparatus to rotate the rotation apparatus and to change the irradiation position based on an information related to the object measured by the object measurement apparatus, the object being processed by irradiating the object held by the holding apparatus with the energy beam from the beam irradiation apparatus.

### Brief Description of Drawings

[FIG. 1] FIG. 1 is a perspective view that conceptionally illustrates an exterior appearance of a processing system in a present example embodiment.
[FIG. 2] FIG. 2 is a system configuration diagram that illustrates a system configuration of the processing system in the present example embodiment.
[FIG. 3] Each of FIG. 3A to FIG. 3C is a cross-sectional view that illustrates an aspect of a removal processing performed on a workpiece.
[FIG. 4] FIG. 4 is a perspective view that conceptionally illustrates a configuration of an irradiation optical system.
[FIG. 5] FIG. 5 is a cross-sectional view that illustrates a configuration of a rotation apparatus.
[FIG. 6] FIG. 6 is a planar view that illustrates a configuration of a measurement apparatus.
[FIG. 7] FIG. 7 is a cross-sectional view that illustrates the configuration of the measurement apparatus.
[FIG. 8] FIG. 8 is a flowchart that illustrates a flow of a processing operation.
[FIG. 9] FIG. 9 is a perspective view that illustrates the workpiece being processed.
[FIG. 10] FIG. 10 is a cross-sectional view that illustrates a processing light with which the workpiece is irradiated.
[FIG. 11] FIG. 11 is a cross-sectional view that illustrates another example of the processing light with which the workpiece is irradiated.
[FIG. 12] FIG. 12 is a perspective view that illustrates another example of the processing light with which the workpiece is irradiated.
[FIG. 13] FIG. 13 is a cross-sectional view that illustrates one example of a beam damper.
[FIG. 14] FIG. 14 is a flowchart that illustrates a flow of a first axis information generation operation.
[FIG. 15] FIG. 15 is a planar view that illustrates a height image that is one example of a measured result of a test workpiece.
[FIG. 16] FIG. 16 is a top view that illustrates the test workpiece.

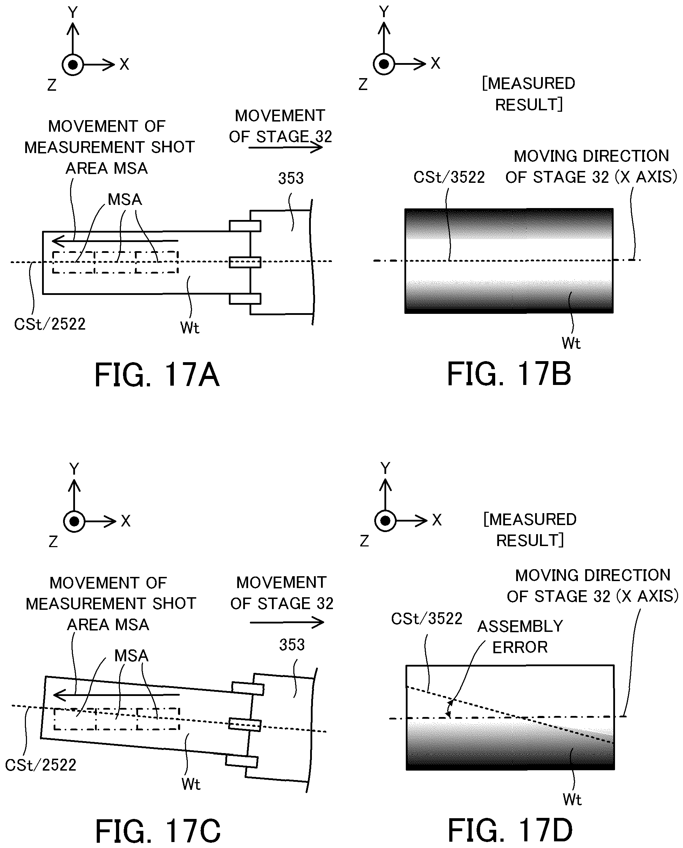

[FIG. 17] FIG. 17A is a top view that illustrates the ideal test workpiece having a rotational axis an extending direction of which is parallel to (alternatively, is coincident with) a moving direction of a stage, FIG. 17B is a planar view that illustrates the height image corresponding to the measured result of the test workpiece illustrated in FIG. 17A, FIG. 17C is a top view that illustrates the test workpiece having a rotational axis an extending direction of which is not parallel to (alternatively, is not coincident with) the moving direction of the stage, and FIG. 17D is a planar view that illustrates the height image corresponding to the measured result of the test workpiece illustrated in FIG. 17C.
[FIG. 18] FIG. 18 is a flowchart that illustrates a flow of another example of the first axis information generation operation.
[FIG. 19] FIG. 19A is a top view that illustrates the height image corresponding to the measured result of the ideal test workpiece having a rotational axis an extending direction of which is parallel to (alternatively, is coincident with) the moving direction of the stage, and FIG. 19B is a planar view that illustrates the height image corresponding to the measured result of the test workpiece having a rotational axis an extending direction of which is not parallel to (alternatively, is not coincident with) the moving direction of the stage.
[FIG. 20] FIG. 20 is a flowchart that illustrates a flow of a second axis information generation operation.

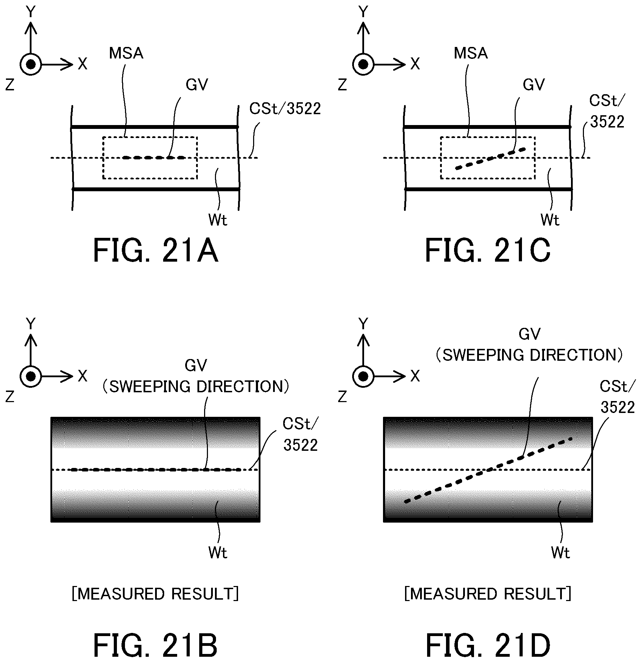

[FIG. 21] FIG. 21A is a top view that illustrates the ideal test workpiece having a rotational axis an extending direction of which is parallel to (alternatively, is coincident with) a sweeping direction of the processing light, FIG. 21B is a planar view that illustrates the height image corresponding to the measured result of the test workpiece illustrated in FIG. 21A, FIG. 21C is a top view that illustrates the test workpiece having a rotational axis an extending direction of which is not parallel to (alternatively, is not coincident with) the sweeping direction of the processing light, and FIG. 21D is a planar view that illustrates the height image corresponding to the measured result of the test workpiece illustrated in FIG. 21C.
[FIG. 22] Each of FIG. 22A and FIG. 22B is a top view that illustrates the workpiece having a chucking error.
[FIG. 23] FIG. 23 is a flowchart that illustrates a flow of a third axis information generation operation (especially, an operation for generating an eccentricity error information).
[FIG. 24] FIG. 24 is a cross-sectional view that illustrates an aspect in which the ideal workpiece whose central axis is coincident with the rotational axis is rotated.
[FIG. 25] FIG. 25 is a graph that illustrates a relationship between a position of an edge point of the workpiece illustrated in FIG. 24 in a Z axis direction and a rotational angle of the workpiece.
[FIG. 26] FIG. 26 is a cross-sectional view that illustrates an aspect in which the workpiece whose central axis is parallel to but is not coincident with the rotational axis is rotated.
[FIG. 27] FIG. 27 is a graph that illustrates a relationship between the position of the edge point of the workpiece illustrated in FIG. 26 in a Z axis direction and the rotational angle of the workpiece.
[FIG. 28] FIG. 28 is a cross-sectional view that illustrates an aspect in which the workpiece whose central axis is parallel to but is not coincident with the rotational axis is rotated.
[FIG. 29] FIG. 29 is a graph that illustrates a relationship between the position of the edge point of the workpiece illustrated in FIG. 28 in a Z axis direction and the rotational angle of the workpiece.
[FIG. 30] FIG. 30 is a cross-sectional view that illustrates one example of an irradiation position of the processing light EL controlled based on the eccentricity error information.
[FIG. 31] FIG. 31 is a flowchart that illustrates a flow of a third axis information generation operation (especially, an operation for generating an angular deviation error information).
[FIG. 32] FIG. 32 is a top view that illustrates the workpiece having an angular deviation error.
[FIG. 33] FIG. 33A is a cross-sectional view that illustrates an aspect in which a processing head irradiates a measurement apparatus with the processing light, FIG. 33B is a planar view that illustrates an aspect in which the processing head irradiates the measurement apparatus with the processing light, and FIG. 33C is a graph that illustrates an optical received result of the processing light by an optical reception element of the measurement apparatus.
[FIG. 34] FIG. 34 is a cross-sectional view that illustrates the processing light.
[FIG. 35] FIG. 35A is a cross-sectional view that illustrates the processing light with which the workpiece is irradiated from a direction that is skew relative to the rotational axis and FIG. 35B is a cross-sectional view that illustrates the processing light whose open angle is controlled.
[FIG. 36] FIG. 36 is a cross-sectional view that illustrates the measurement apparatus configured to measure the processing light.
[FIG. 37] FIG. 37 is a cross-sectional view that illustrates the measurement apparatus configured to measure the processing light.
[FIG. 38] FIG. 38 is a cross-sectional view that illustrates the measurement apparatus configured to measure the processing light.
[FIG. 39] FIG. 39 is a cross-sectional view that illustrates the measurement apparatus configured to measure the processing light.
[FIG. 40] FIG. 40A is a cross-sectional view that illustrates one example of a relative baseline, a processing baseline and a measurement baseline, and FIG. 40B is a planar view that illustrates one example of the relative baseline, the processing baseline and the measurement baseline.
[FIG. 41] FIG. 41 is a perspective view that conceptionally illustrates an exterior appearance of a processing system in a first modified example.
[FIG. 42] FIG. 42 is a perspective view that conceptionally illustrates an exterior appearance of a processing system in a second modified example.
[FIG. 43] FIG. 43 is a system configuration diagram that illustrates a system configuration of the processing system in the second modified example.
[FIG. 44] FIG. 44 is a cross-sectional view that conceptionally illustrates a configuration of an irradiation optical system in the second modified example.
[FIG. 45] FIG. 45 is a perspective view that conceptionally illustrates an exterior appearance of a processing system in a third modified example.

### Description of Embodiments

Next, with reference to drawings, an example embodiment of a processing system will be described. In the below described description, the example embodiment of the processing system will be described by using a processing system SYS that is configured to process a workpiece W by using a processing light EL that is one specific example of an energy beam. However, the present invention is not limited to the below described embodiment.

Moreover, in the below described description, a positional relationship of various components that constitute the processing system SYS will be described by using an XYZ rectangular coordinate system that is defined by a X axis, a Y axis and a Z axis that are perpendicular to one another. Note that each of an X axis direction and a Y axis direction is assumed to be a horizontal direction (namely, a predetermined direction in a horizontal plane) and a Z axis direction is assumed to be a vertical direction (namely, a direction that is perpendicular to the horizontal plane, and substantially an up-down direction), for the purpose of simple description, in the below described description. Moreover, rotational directions (in other words, inclination directions) around the X axis, the Y axis and the Z axis are referred to as a θX direction, a θY direction and a θZ direction, respectively. Here, the Z axis direction may be a gravity direction. An XY plane may be a horizontal direction.

### (1) Configuration of Processing System SYS

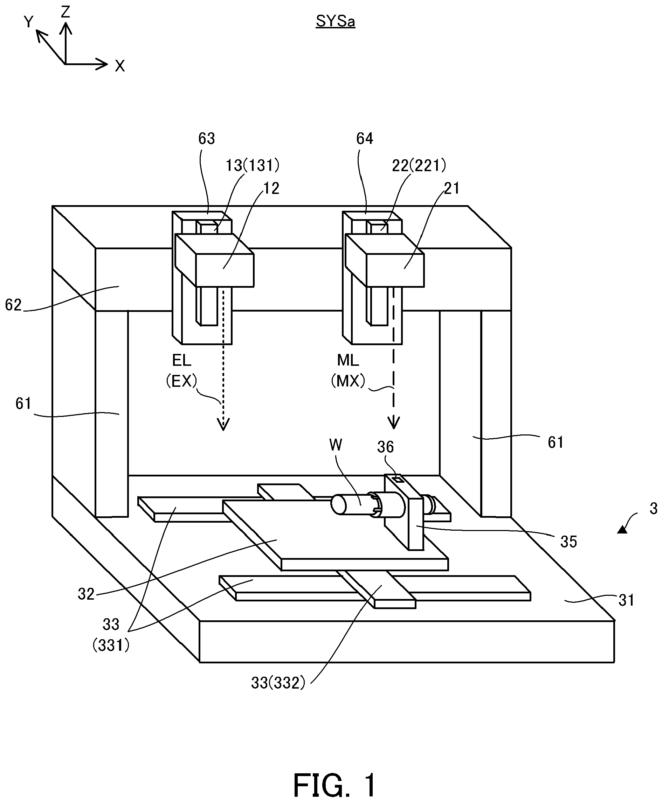

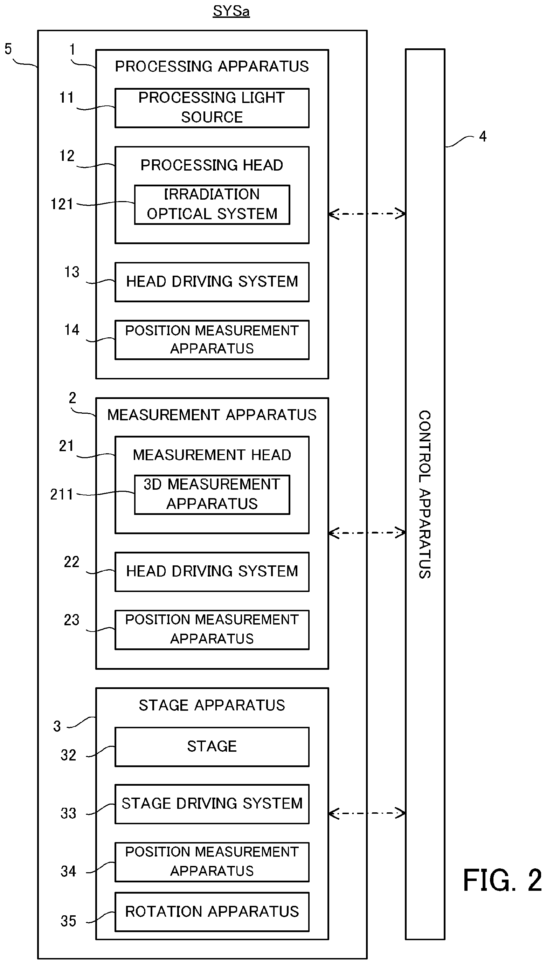

Firstly, with reference to FIG. 1 and FIG. 2, a configuration of the processing system SYS in the present example embodiment will be described. FIG. 1 is a perspective view that conceptionally illustrates an exterior appearance of the processing system SYS in the present example embodiment. FIG. 2 is a system configuration diagram that illustrates a system configuration of the processing system SYS in the present example embodiment.

As illustrated in FIG. 1 and FIG. 2, the processing system SYS includes a processing apparatus 1, a measurement apparatus 2, a stage apparatus 3 and a control apparatus 4. The processing apparatus 1, the measurement apparatus 2 and the stage apparatus 3 are contained in a housing 5. However, the processing apparatus 1, the measurement apparatus 2 and the stage apparatus 3 may not be contained in the housing 5. Namely, the processing system SYS may not include the housing 5 in which the processing apparatus 1, the measurement apparatus 2 and the stage apparatus 3 are contained. Note that the measurement apparatus 2 is located to be closer to a rotation apparatus 35 than the processing apparatus 1 is along the X axis direction in FIG. 1, However, an inverse arrangement may be used.

The processing apparatus 1 is configured to process the workpiece W under the control of the control apparatus 4. The workpiece W is an object that is processed by the processing apparatus 1. The workpiece W may be a metal, may be an alloy (for example, a duralumin and the like), may be a semiconductor (for example, a silicon), may be a resin, may be a composite material such as a CFRP (Carbon Fiber Reinforced Plastic), may be a glass, may be a ceramic or may be an object that is made from any other material, for example.

The processing apparatus 1 may perform a removal processing for removing a part of the workpiece W by irradiating the workpiece W with the processing light EL. The removal processing may include at least one of a surface processing, a cylindrical processing, a drilling processing, a smoothing processing, a cutting-off processing and a carving processing (in other words, a stamp processing) for forming (in other words, carving) any character or any pattern.

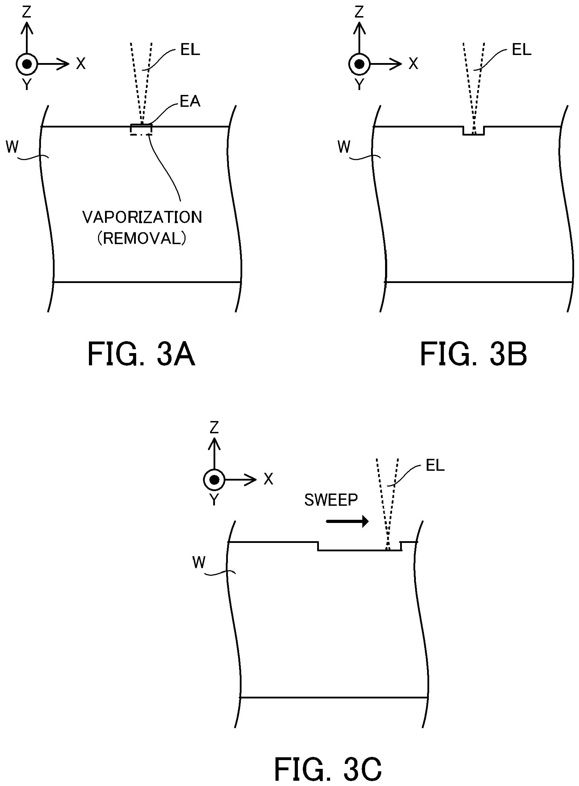

Here, with reference to each of FIG. 3A to FIG. 3C, one example of the removal processing using the processing light EL will be described. Each of FIG. 3A to FIG. 3C is a cross-sectional view that illustrates an aspect of the removal processing performed on the workpiece W. As illustrated in FIG. 3A, the processing apparatus 1 irradiates a target irradiation area EA set (in other words, formed) on a surface of the workpiece W with the processing light EL. When the target irradiation area EA is irradiated with the processing light EL, an energy of the processing light EL is transmitted to the target irradiation area EA and a part that is in vicinity of the target irradiation area EA of the workpiece W. When a heat caused by the energy of the processing light EL is transmitted, a material constituting the target irradiation area EA and a part that is in vicinity of the target irradiation area EA of the workpiece W is melted due to the heat caused by the energy of the processing light EL. The melted material spatters as liquid drop. Alternatively, the melted material evaporates due to the heat caused by the energy of the processing light EL. As a result, the target irradiation area EA and a part that is in vicinity of the target irradiation area EA of the workpiece W is removed. Namely, as illustrated in FIG. 3B, a concave part (in other words, a groove part) is formed at the surface of the workpiece W. In this case, it can be said that the processing apparatus 1 processes the workpiece W by using a principle of what we call a thermal processing. Furthermore, the processing apparatus 1 moves the target irradiation area EA on the surface of the workpiece W by using a Galvano mirror 1214 described below. Namely, the processing apparatus 1 sweeps the surface of the workpiece W with the processing light EL. As a result, as illustrated in FIG. 3C, the surface of the workpiece W is partially removed along a sweeping trajectory of the processing light EL (namely, a moving trajectory of the target irradiation area EA). Thus, the processing apparatus 1 appropriately removes a part of the workpiece W on which the removal processing should be performed by sweeping the surface of the workpiece W with the processing light EL along a desired sweeping trajectory corresponding to an area on which the removal processing should be performed.

On the other hand, the processing apparatus 1 may process the workpiece W by using a principle of non-thermal processing (for example, an ablation processing) depending on a characteristic of the processing light EL. Namely, the processing apparatus 1 may perform the non-thermal processing (for example, the ablation processing) on the workpiece W. For example, when a pulsed light an ON time of which is equal to or shorter than pico-second (alternatively, equal to or shorter than nano-second or femto-second in some cases) is used as the processing light EL, the material constituting the target irradiation area EA and a part that is in vicinity of the target irradiation area EA of the workpiece W evaporates and spatters in a moment. Note that the material constituting the target irradiation area EA and a part that is in vicinity of the target irradiation area EA of the workpiece W may be sublimated without being in a melted state when the pulsed light the ON time of which is equal to or shorter than pico-second (alternatively, equal to or shorter than nano-second or femto-second in some cases) is used as the processing light EL. Thus, the concave part (in other words, the groove part) is formed at the surface of the workpiece W while reducing an influence of the heat caused by the energy of the processing light EL to the workpiece W as much as possible.

When the removal processing is performed, the processing apparatus 1 may form a riblet structure on the workpiece W. The riblet structure may be a structure by which a resistance (especially, at least one of a frictional resistance and a turbulent frictional resistance) of the surface of the workpiece W to a fluid is reducible. The riblet structure may include a structure by which a noise, which is generated when the fluid and the surface of the workpiece W relatively move, is reducible. The riblet structure may include a structure in which a plurality of grooves each of which extends along a first direction (for example, the Y axis direction) that is along the surface of the workpiece W are arranged along a second direction (for example, the X axis direction) that is along the surface of the workpiece W and that intersects with the first direction, for example.

When the removal processing is performed, the processing apparatus 1 may form any structure having any shape on the surface of the workpiece W. A structure that generates a swirl relative to a flow of the fluid on the surface of the workpiece W is one example of any structure. A structure for giving a hydrophobic property to the workpiece W is one example of any structure. A fine texture structure (typically, a concave and convex structure) that is formed regularly or irregularly in a micro / nano-meter order is another example of any structure. This fine texture structure may include at least one of a shark skin structure and a dimple structure that has a function of reducing a resistance from a fluid (a liquid and / or a gas). The fine texture structure may include a lotus leaf surface structure that has at least one of a liquid repellent function and a self-cleaning function (for example, has a lotus effect). The fine texture structure may include at least one of a fine protrusion structure that has a liquid transporting function (US2017/0044002A1), a concave and convex structure that has a lyophile effect, a concave and convex structure that has an antifouling effect, a moth eye structure that has at least one of a reflectance reduction function and a liquid repellent function, a concave and convex structure that intensifies only light of a specific wavelength by interference to have a structural color, a pillar array structure that has an adhesion function using van der Waals force, a concave and convex structure that has an aerodynamic noise reduction function, a honeycomb structure that has a droplet collection function, a concave and convex structure that improve an adhesion to a layer formed on the surface and so on.

Again in FIG. 1 and FIG. 2, in order to process the workpiece W, the processing apparatus 1 includes a processing light source 11, a processing head 12, a head driving system 13 and a position measurement apparatus 14.

The processing light source 11 is configured to emit, as the processing light EL, at least one of an infrared light, a visible light, a ultraviolet light and an Extreme ultraviolet light, for example. However, another type of light may be used as the processing light EL. The processing light EL may include a pulsed light (namely, a plurality of pulsed beams). The processing light EL may be a laser light. In this case, the processing light source 11 may include a semiconductor laser such as a laser light source (for example, a Laser Diode (LD)). The laser light source may be a fiber laser, a CO₂ laser, a YAG laser, an Excimer laser and the like. However, the processing light EL may not be the laser light. The processing light source 11 may include any light source (for example, at least one of a LED (Light Emitting Diode), a discharge lamp and the like).

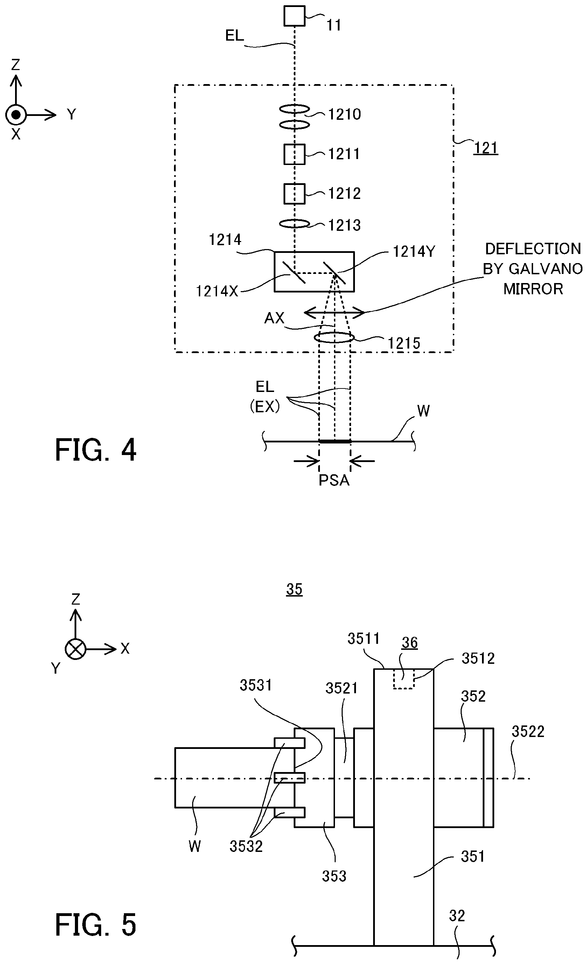

The processing head 12 is configured to irradiate the workpiece W with the processing light EL from the processing light source 11. Thus, the processing head 12 may be referred to as a beam irradiation apparatus. In an example illustrated in FIG. 1, a stage 32 on which the workpiece W is allowed to be placed is disposed below the processing head 12. Thus, the processing head 12 irradiates the workpiece W with the processing light EL by emitting the processing light EL in a downward direction from the processing head 12. In order to irradiate the workpiece W with the processing light EL, the processing head 12 includes a irradiation optical system 121. Next, with reference to FIG. 4, the irradiation optical system 121 will be described. FIG. 4 is a cross-sectional view that conceptionally illustrates a configuration of the irradiation optical system 121.

As illustrated in FIG. 4, the irradiation optical system 121 includes a condensed position change optical system 1210, an open angle change optical system 1211, an ellipticity change optical system 1212, a light rotation optical system 1213, a Galvano mirror 1214 and a fθ lens 1215, for example. However, the irradiation optical system 121 may not include at least one of the condensed position change optical system 1210, the open angle change optical system 1211, the ellipticity change optical system 1212 and the light rotation optical system 1213.

The condensed position change optical system 1210 is an optical member that is configured to change a condensed position of the processing light EL (namely, a converged position of the processing light EL) along a propagating direction of the processing light EL. The condensed position change optical system 1210 may include a plurality of lenses that are arranged along the propagating direction of the processing light EL, for example. In this case, the condensed position of the processing light EL may be changed by moving at least one of the plurality of lenses along its optical axis direction.

The open angle change optical system 1211 is an optical member that is configured to change an open angle of the processing light EL emitted from the processing head 12. "The open angle of the processing light EL" in the present example embodiment may mean an angle between outermost beam rays of the processing light EL. Alternatively, "the open angle of the processing light EL" in the present example embodiment may mean an angle between the outermost beam ray of the processing light EL and a principal ray of the processing light EL. In this case, the open angle change optical system 1211 may be regarded to substantially change an numerical aperture of the irradiation optical system 121. Note that the open angle change optical system may be referred to as an open angle change apparatus.

The ellipticity change optical system 1212 is an optical member that is configured to change an ellipticity of the processing light EL emitted from the processing head 12. Specifically, the ellipticity change optical system 1212 changes an ellipticity of a spot of the processing light EL in a plane intersecting with an irradiation axis EX along the propagating direction of the processing light EL. For example, the ellipticity change optical system 1212 may include an optical member (for example, at least one of a toric lens and a cylindrical lens) in which a refractive index changes between two perpendicular directions, and may change the ellipticity by rotating the optical member around an optical axis or an axis that is parallel to the optical axis. For example, the ellipticity change optical system 1212 may include a plurality of optical members, and may change the ellipticity by changes an interval and so on between the plurality of optical members along an optical axis direction. Here, at least one of the plurality of optical members may be an optical member having the refractive index that is asymmetric relative to the optical axis. Note that the irradiation axis EX is an axis extending along the principal ray of the processing light EL. The principal ray of the processing light EL may be a line that connects a center point of a light intensity in a first cross-section that intersects with the propagating direction of the processing light EL and a center point of a light intensity in a second cross-section that intersects with the propagating direction and that is different from the first cross-section. In an example illustrated in FIG. 4, the irradiation axis EX is parallel to an optical axis AX of the fθ lens 1215, however, the irradiation axis EX may be inclined with respect to the optical axis AX of the fθ lens 1215. In the example illustrated in FIG. 4, the irradiation axis EX is parallel to the Z axis, however, the irradiation axis EX may be inclined with respect to the Z axis.

Incidentally, changing the open angle may be regarded to be substantially equivalent to changing at least one of the open angle of the processing light EL in a first plane that includes the irradiation axis EX and the open angle of the processing light EL in a second plane that includes the irradiation axis EX and that intersects with the first plane. Thus, the ellipticity change optical system 1212 may be referred to as an open angle change optical system or an open angle change apparatus. In this case, the above described open angle change optical system 1211 may serve as at least a part of the ellipticity change optical system 1212.

The light rotation optical system 1213 is an optical member that is configured to rotate the spot of the processing light EL around the optical axis AX (especially, around the irradiation axis EX) in a plane intersecting with the irradiation axis EX. In the present example embodiment, the light rotation optical system 1213 rotates a direction of a maximum diameter of the spot of the processing light EL (namely, a cross-section of the processing light EL) on an entrance pupil plane of the fθ lens 1215 around the optical axis AX (especially, around the irradiation axis EX). Namely, the light rotation optical system 1213 rotates a direction along which the diameter of the spot of the processing light EL (namely, a cross-section of the processing light EL) on the entrance pupil plane of the fθ lens 1215 is maximum around the optical axis AX (especially, around the irradiation axis EX). In this case, the light rotation optical system 1223 may be regarded to rotate a direction of a major axis or a direction of a short axis of the spot of the processing light EL on the entrance pupil plane of the fθ lens 1215 around the optical axis AX (especially, around the irradiation axis EX). For example, the light rotation optical system 1213 may include an optical member that is rotatable around an optical axis and may rotate the spot of the processing light EL by rotating the optical member around the optical axis. This optical member may be referred to as a beam rotator. Thus, the light rotation optical system 1213 may be referred to as a beam rotation member . Note that the ellipticity change optical system 1212 may be used as the light rotation optical system 1213.

The processing light EL that has passed through the condensed position change optical system 1210, the open angle change optical system 1211, the ellipticity change optical system 1212 and the light rotation optical system 1213 enters the Galvano mirror 1214. The Galvano mirror 1214 changes an emitting direction of the processing light EL from the Galvano mirror 1214 by deflecting the processing light EL (namely, changing an emitting angle of the processing light EL). Thus, the Galvano mirror 1214 may be referred to as beam deflection apparatus. Note that FIG. 4 illustrates an example in which the emitting direction of the processing light EL from the Galvano mirror 1214 is changed in a YZ plane. The Galvano mirror 1214 may change an irradiation position of the processing light EL relative to the processing head 12 (namely, an irradiation position of the processing light EL on the surface of the workpiece W) by changing the emitting direction of the processing light EL from the Galvano mirror 1214. Namely, the Galvano mirror 1214 may change (namely, move) the irradiation position of the processing light EL by deflecting the processing light EL. Note that FIG. 4 illustrates an example in which the irradiation position of the processing light EL is changed along the Y axis direction. Moreover, the Galvano mirror 1214 may change the propagating direction of the processing light EL from the Galvano mirror 1214 (namely, a direction along which the irradiation axis EX extends) by changing the emitting direction of the processing light EL from the Galvano mirror 1214. Namely, the Galvano mirror 1214 may change at least one of the irradiation position and the propagating direction of the processing light EL. Thus, the Galvano mirror 1214 may be referred to as a beam irradiation state change apparatus that is configured to change an irradiation state of the processing light EL including at least one of the irradiation position and the propagating direction.

The Galvano mirror 1214 includes a X sweeping mirror 1214X and a Y sweeping mirror 1214Y, for example. Each of the X sweeping mirror 1214X and the Y sweeping mirror 1214Y is tilt angle variable mirror an angle of which is variable relative to the optical path of the processing light EL entering each mirror. The X sweeping mirror 1214X reflects the processing light EL to the Y sweeping mirror 1214Y. The X sweeping mirror 1214X is configured to swing or rotate around a rotational axis along the Y axis direction. Due to the swing or the rotation of the X sweeping mirror 1214X, the surface of the workpiece W is swept with the processing light EL along the X axis direction. Due to the swing or the rotation of the X sweeping mirror 1214X, the target irradiation area EA moves on the surface of the workpiece W along the X axis direction. The Y sweeping mirror 1214Y reflects the processing light EL to the fθ lens 1215. The Y sweeping mirror 1214Y is configured to swing or rotate around a rotational axis along the X axis. Due to the swing or the rotation of the Y sweeping mirror 1214Y, the surface of the workpiece W is swept with the processing light EL along the Y axis direction. Due to the swing or the rotation of the Y sweeping mirror 1214X, the target irradiation area EA moves on the surface of the workpiece W along the Y axis direction.

The Galvano mirror 1214 allows a processing shot area PSA defined with respect to the processing head 12 to be swept with the processing light EL. Namely, the Galvano mirror 1214 allows the target irradiation area EA to move in the processing shot area PSA defined with respect to the processing head 12. Note that the processing shot area PSA indicates an area (in other words, a range) that is processable by the processing apparatus 1 in a state where a positional relationship between the processing head 12 and the workpiece W is fixed (namely, is not changed). Typically, the processing shot area PSA is set to be an area that is same as or narrower than a maximum swept range of the processing light EL that is deflected by the Galvano mirror 1214 in a state where the positional relationship between the processing head 12 and the workpiece W is fixed. When the processing shot area PSA is smaller than a part of the workpiece W that should be processed, an operation for processing a certain part of the workpiece W by sweeping the processing shot area PSA set at the certain part on the workpiece W with the processing light EL and an operation for changing a position of the processing shot area PSA on the workpiece W by changing the positional relationship between the processing head 12 and the workpiece W are repeated.

Incidentally, the irradiation optical system 121 may include any optical member that is configured to deflect the processing light EL (namely, that is configured to change at least one of the emitting direction and the irradiation position of the processing light EL), in addition to or instead of the Galvano mirror 1214. A polygonal mirror having a plurality of reflection surfaces angles of which are different from each other is one example of the optical member. The polygonal mirror is rotatable so as to change an incident angle of the processing light EL with respect to one reflection surface in a period during which the one reflection surface is irradiated with the processing light EL and to switch the reflection surface that is irradiated with the processing light EL between the plurality of reflection surfaces.

The fθ lens 1215 is an optical system that is configured to emit, toward the workpiece W, the processing light EL from the Galvano mirror 1214. Especially, the fθ lens 1215 is an optical element that is configured to condense the processing light EL from the Galvano mirror 1214 on a condensed plane that intersects with the optical axis AX of the fθ lens 1215. Thus, the fθ lens 1215 may be referred to as a condensing optical system. The condensed plane of the fθ lens 1215 may be set at an exit side of the fθ lens 1215. The condensed plane of the fθ lens 1215 may be set on the surface of the workpiece W, for example. In this case, the fθ lens 1215 is configured to condense the processing light EL from the Galvano mirror 1214 on the surface of the workpiece W.

Again in FIG. 1 and FIG. 2, the head driving system 13 is configured to move the processing head 12 and therefore the irradiation optical system 121 along at least one of the X axis direction, the Y axis direction, the Z axis direction, the θX direction, the θY direction and the θZ direction under the control of the control apparatus 4. Thus, the head driving system 13 may be referred to as a movement apparatus. FIG. 1 illustrates an example in which the head driving system 13 moves the processing head 12 along the Z axis direction. In this case, the head driving system 13 may include a Z slide member 131 that extends along the Z axis direction, for example. The Z slide member 131 is disposed at a support frame 6 that is disposed on a below described surface plate 31 through a vibration isolator. The support frame 6 may include: a pair of leg members 61 that are disposed on the surface plate 31 through the vibration isolator and that extends along the Z axis direction; and a beam member 62 that extends along the X axis direction and that is disposed on the pair of the leg members 61 so as to connect upper end parts of the pair of the leg members 61. The Z slide member 131 is disposed at the beam member 62 through a support member 63 that extends along the Z axis direction, for example. The processing head 12 is connected to the Z slide member 131 so that the processing head 12 is movable along the Z slide member 131.

When the processing head 12 moves, a positional relationship between the processing head 12 and the below described stage 32 changes. Furthermore, when the processing head 12 moves, a positional relationship between the processing head 12 and the below described rotation apparatus 35 disposed on the stage 32 changes. Furthermore, when the processing head 12 moves, a positional relationship between the processing head 12 and the workpiece W held by the rotation apparatus 35 changes. Therefore, moving the processing head 12 may be regarded to be equivalent to changing the positional relationship between the processing head 12 and each of the stage 32, the rotation apparatus 35 and the workpiece W. Moreover, when the processing head 12 moves, the irradiation position of the processing light EL on the surface of the workpiece W moves relative to the surface of the workpiece W. Namely, the irradiation position of the processing light EL on the surface of the workpiece W is changed on the surface of the workpiece W. Therefore, moving the processing head 12 may be regarded to be equivalent to changing the irradiation position of the processing light EL on the surface of the workpiece W.

The position measurement apparatus 14 is configured to measure (in other word, is configured to detect) a position of the processing head 12. Namely, the position measurement apparatus 14 is an apparatus that is configured to obtain an information related to the position of the processing head 12. The position measurement apparatus 14 may include at least one of an encoder and an interferometer, for example.

The measurement apparatus 2 is configured to measure the workpiece W under the control of the control apparatus 4. The measurement apparatus 2 may be referred to as an object measurement apparatus or a workpiece measurement apparatus, because the measurement apparatus 2 measures the object such as the workpiece W. In order to measure the workpiece W, the measurement apparatus 2 includes a measurement head 21, a head driving system 22 and a position measurement apparatus 23.

The measurement head 21 is configured to measure the workpiece W under the control of the control apparatus 4. In the present example embodiment, the measurement head 21 measures the surface of the workpiece W three-dimensionally. Namely, the measurement head 21 measures a three-dimensional shape of the surface of the workpiece W. Thus, the measurement head 21 may include a three-dimensional measurement apparatus 211 that is configured to measure the three-dimensional shape of the surface of the workpiece W. A workpiece measurement information related to a measured result of the workpiece W by the measurement head 21 (namely, a measured result of the workpiece W by the three-dimensional measurement apparatus 211) is outputted from the measurement head 21 to the control apparatus 4. The control apparatus 4 controls an operation of the processing system SYS based on the workpiece measurement information. Specifically, the control apparatus 4 controls the processing system SYS (for example, at least one of the processing apparatus 1, the measurement apparatus 2 and the stage apparatus 3) based on the workpiece measurement information so that the processing system SYS processes the workpiece W properly. Note that the measurement apparatus 2, the measurement head 21 or the three-dimensional measurement apparatus 211 may be referred to as an object information obtaining apparatus or a workpiece information obtaining apparatus, because it obtains the workpiece measurement information related to the three-dimensional shape of the surface of the workpiece W.

The three-dimensional measurement apparatus 211 may measure the workpiece W in a non-contact manner. For example, the three-dimensional measurement apparatus 211 may optically measure the workpiece W. Namely, the three-dimensional measurement apparatus 211 may measure the workpiece W by using any measurement beam such as a measurement light. For example, the three-dimensional measurement apparatus 211 may measure the workpiece W by using a light section method that projects a slit light on the surface of the workpiece W and measures a shape of the projected slit light. For example, the three-dimensional measurement apparatus 211 may measure the workpiece W by using a white light interference method that measures an interference pattern of a white light through the workpiece W and a white light not through the workpiece W. For example, the three-dimensional measurement apparatus 211 may measure the workpiece W by using at least one of a pattern projection method that projects a light pattern on the surface of the workpiece W and measures a shape of the projected pattern, a time of flight method that performs an operation, which emits a light to the surface of the workpiece W and measures a distance to the workpiece W based on an elapsed time until the emitted light returns, at plurality of positions on the workpiece W, a moiré topography method ( specifically, a grid irradiation method or a grid projection method), a holography interference method, an auto collimation method, a stereo method, an astigmatism method, a critical angle method, a knife edge method, an interference measurement method and a confocal method is one example of another method. For example, the three-dimensional measurement apparatus 211 may measure the workpiece W by capturing an image of the workpiece W that is illuminated with an illumination light. In any case, the three-dimensional measurement apparatus 211 may include a light source that emits a measurement light ML (for example, the slit light, the white light or the illumination light) and a light receiver that optically receives a light (for example, a reflected light of the measurement light) from the workpiece W that is irradiated with the measurement light ML. Note that the three-dimensional measurement apparatus 211 may measure the workpiece W in a contact manner.

The measurement head 21 measures the workpiece W by a unit of a measurement shot area MSA. The measurement shot area MSA indicates an area (in other words, a range) that is measurable by the measurement head 21 in a state where a positional relationship between the measurement head 21 and the workpiece W is fixed (namely, is not changed). Typically, the measurement shot area MSA is set to be an area that is same as or narrower than a maximum range that can be irradiated with the measurement light ML by the measurement head 21 in a state where the positional relationship between the measurement head 21 and the workpiece W is fixed (namely, is not changed). Note that the measurement shot area MSA may be referred to as a measurable range or a measurable field.

In the example illustrated in FIG. 1, the measurement head 21 is aligned relative to the processing head 12 so that a measurement axis MX of the measurement head 21 is not same as the irradiation axis that is along the propagating direction of the processing light EL. In the example illustrated in FIG. 1, the measurement axis MX is parallel to the irradiation axis EX. Note that the measurement axis MX may be an axis that extends along an optical axis of an optical system of the measurement head 21, for example. The measurement axis MX may be an axis that extends along a principal ray of the measurement light ML from the measurement head 21, for example. Note that the measurement axis MX may not be parallel to the irradiation axis EX as described in a below described first modified example.

The head driving system 22 is configured to move the measurement head 21 along at least one of the X axis direction, the Y axis direction, the Z axis direction, the θX direction, the θY direction and the θZ direction, under the control of the control apparatus 4. Thus, the head driving system 22 may be referred to as a movement apparatus. FIG. 1 illustrates an example in which the head driving system 22 moves the measurement head 21 along the Z axis direction. In this case, the head driving system 22 may include a Z slide member 221 that extends along the Z axis direction, for example. The Z slide member 221 may be disposed at the beam member 62 through a support member 64 that extends along the Z axis direction. The measurement head 21 is connected to the Z slide member 221 so that the measurement head 21 is movable along the Z slide member 221.

When the measurement head 21 moves, a positional relationship between the measurement head 21 and each of the stage 32, the rotation apparatus 35 and the workpiece W changes. Therefore, moving the measurement head 21 may be regarded to be equivalent to changing the positional relationship between the measurement head 21 and each of the stage 32, the rotation apparatus 35 and the workpiece W.

The position measurement apparatus 23 is configured to measure (in other word, is configured to detect) a position of the measurement head 21. Namely, the position measurement apparatus 23 is an apparatus that is configured to obtain an information related to the position of the measurement head 21. The position measurement apparatus 23 may include at least one of an encoder and an interferometer, for example.

The stage apparatus 3 includes the surface plate 31, the stage 32, a stage driving system 33, a position measurement apparatus 34, the rotation apparatus 35 and a measurement apparatus 36.

The surface plate 31 is disposed on a bottom surface of the housing 5 (alternatively, a support surface such as a floor surface on which the housing 5 is placed). The stage 32 is disposed on the surface plate 31. A non-illustrated vibration isolator that reduces a transmission of vibration from the surface plate 31 to the stage 32 may be disposed between the surface plate 31 and the bottom surface of the housing 5 or the support surface such as the floor surface on which the housing 5 is placed. Moreover, the above described support frame 6 may be disposed on the surface plate 31.

The stage 32 is a placing apparatus on which the workpiece W is placed. The stage 32 may be configured to hold the workpiece W placed on the stage 32. Alternatively, the stage 32 may not be configured to hold the workpiece W placed on the stage 32. In this case, the workpiece W may be placed on the stage 32 without a clamp.

In the present example embodiment, the rotation apparatus 35 is disposed on the stage 32. The rotation apparatus 35 is an apparatus configured to rotate a chuck 353 that is a holding apparatus configured to hold the workpiece W to be rotatable, as described later in detail. Thus, in the present example embodiment, the workpiece W may placed on the stage 32 and may be held by the rotation apparatus 35 through the chuck 353. The processing head 12 may irradiate the workpiece W placed on the stage 32 with the processing light EL, and may irradiate the workpiece W held by the rotation apparatus 35 with the processing light EL. The measurement head 21 may measure the workpiece W placed on the stage 32 with the processing light EL, and may measure the workpiece W held by the rotation apparatus 35 with the processing light EL. In the below described description, the workpiece W is held by the rotation apparatus 35 when there is no specific notation. Note that the rotation apparatus 35 may be regarded to be an apparatus that rotates the workpiece W, because the rotation apparatus 35 rotates the chuck 353 that holds the workpiece W.

The stage driving system 33 is configured to move the stage 32 under the control of the control apparatus 4. Thus, the stage driving system 33 may be referred to as a movement apparatus. When the stage 32 moves, the rotation apparatus 35 disposed on the stage 32 also moves together with the stage 32. Moreover, when the stage 32 moves, the workpiece W that is placed on the stage 32 or that is held by the rotation apparatus 35 on the stage 32 also moves together with the stage 32. The stage driving system 33 is configured to move the stage 32 along at least one of the X axis direction, the Y axis direction, the Z axis direction, the θX direction, the θY direction and the θZ direction. FIG. 1 illustrates an example in which the stage driving system 33 moves the stage 32 along each of the X axis and the Y axis. Namely, in the example illustrated in FIG. 1, the stage driving system 33 moves the stage 32 along a direction that is along the XY plane intersecting with the propagating direction of each of the processing light EL and the measurement light ML. In this case, the stage driving system 33 may include a X slide member 331 (two X slide members 331 that are disposed to be parallel to each other in the example illustrated in FIG. 1) that extends along the X axis direction and a Y slide member 332 (one Y slide members 332 in the example illustrated in FIG. 1) that extends along the Y axis direction, for example. The two X slide members 331 are disposed on the surface plate 31 so as to be arranged along the Y axis direction. The Y slide member 332 is connected to the two X slide members 331 so as to be movable along the two X slide members 331. The stage 32 is connected to the Y slide member 332 so as to be movable along the Y slide member 332. Incidentally, the plurality of X slide members 331 are disposed in the example illustrated in FIG. 1, however, single X slide member 331 may be disposed. Moreover, the stage 32 may be configured to be supported to float on the surface plate 31 by an air bearing.

When the stage 32 moves, a positional relationship between each of the stage 32, the rotation apparatus 35 and the workpiece W and each of the processing head 12 and the measurement head 21 changes. Therefore, moving the stage 32 is equivalent to changing the positional relationship between each of the stage 32, the rotation apparatus 35 and the workpiece W and each of the processing head 12 and the measurement head 21. Moreover, when the stage 32 moves, the irradiation position of the processing light EL on the surface of the workpiece W moves relative to the surface of the workpiece W. Namely, the irradiation position of the processing light EL on the surface of the workpiece W is changed on the surface of the workpiece W. Therefore, moving the stage 32 may be regarded to be equivalent to changing the irradiation position of the processing light EL on the surface of the workpiece W.

The position measurement apparatus 34 is configured to measure (in other word, is configured to detect) a position of the stage 32. Namely, the position measurement apparatus 34 is an apparatus that is configured to obtain an information related to the position of the stage 32. The position measurement apparatus 34 may include at least one of an encoder and an interferometer, for example. Since the position measurement apparatus 34 is configured to obtain the information related to the position of the stage 32, the position measurement apparatus 34 may be referred to as a stage position information obtaining apparatus.

The rotation apparatus 35 is the apparatus that rotates the chuck 353 that is the holding apparatus for holding the workpiece W to be rotatable as described above. Here, a configuration of the rotation apparatus 35 will be described with reference to FIG. 5. FIG. 5 is a cross-sectional view that illustrates the configuration of the rotation apparatus 35.

As illustrated in FIG. 5, the rotation apparatus 35 includes a support frame 351 and a rotational motor 352. The support frame 351 is disposed on the stage 32. The rotational motor 352 is supported by the support frame 351. The rotational motor 352 operates to rotate a rotational shaft 3521. The rotational shaft 3521 may be a member that extends along a direction (the X axis direction in an example illustrated in FIG. 5) intersecting with the gravity direction. Namely, in the example illustrated in FIG. 5, the rotational motor 352 rotates the rotational shaft 3521 extending along the X axis direction around a rotational axis 3522 extending along the X axis direction. Note that the rotational axis 3522 is an axis that passes through a rotational center of the rotational shaft 3521 and that extends along the rotational shaft 3521. However, the rotational shaft 3521 may extend along a direction that is different from the X axis direction. The rotational motor 352 may rotate the rotational shaft 3521 extending along a direction that is different from the X axis direction around a rotational axis 3522 extending along the direction that is different from the X axis direction. Note that the rotational shaft 3521 may be configured to change an angle (for example, an angle in the XZ plane, an angle in the XY plane) between the rotational axis 3522 and the X axis. Namely, the rotational shaft 3521 may be movable in at least one of the θX direction and the θY direction. Moreover, although it is not illustrated in FIG. 5, the rotation apparatus 35 includes a rotary encoder that is configured to detect a rotational angle of the rotational motor 352 or a rotational angle of the rotational shaft 3521, and its output is outputted to the control apparatus 4. This rotary encoder may be referred to as a rotation detection apparatus that is configured to detect the rotational angle of the rotation apparatus.

The chuck 353 is coupled with the rotational shaft 3521. The chuck 353 is the holding apparatus that is configured to hold the workpiece W. In the example illustrated in FIG. 5, the chuck 353 holds the workpiece W by clamping the workpiece W that contacts with a holding surface 3531 of the chuck 353 with a plurality of clicks 3532 of the chuck 353. Especially, in the example illustrated in FIG. 5, the chuck 353 holds the workpiece W by clamping the workpiece W that contacts with the holding surface 3531, which is along the YZ plane intersecting with the X axis, with the plurality of clicks 3532 extending along the X axis direction, because the rotational shaft 3521 extends along the X axis direction. However, a method of holding the workpiece W by the chuck 353 is not limited to the method illustrated in FIG. 5.

The rotational motor 352 rotates the chuck 353, which is coupled with the rotational shaft 3521, around the rotational axis 3522 by rotating the rotational shaft 3521. As a result, the workpiece W held by the chuck 353 is also rotated around the rotational axis 3522. Thus, it can be said that the rotation apparatus 35 is configured to serve as a spindle that is configured to rotate the workpiece W held by the chuck 353. In the example illustrated in FIG. 5, the rotation apparatus 35 rotates the workpiece W around the X axis.

Again in FIG. 1 and FIG. 2, the measurement apparatus 36 is an apparatus that is configured to measure the processing light EL from the processing head 12. Thus, the measurement apparatus 36 may be referred to as a beam measurement apparatus. Furthermore, at least a part of the measurement apparatus 36 is measurable by the measurement head 21. In this case, at least a part of the measurement apparatus 36 may be regarded to serve as a mark (alternatively, a fiducial) that is measurable by the measurement head 21. Each of a processing light measurement information related to a measured result of the processing light EL by the measurement apparatus 36 and a mark measurement information related to a measured result of the measurement apparatus 36 by the measurement head 21 is outputted to the control apparatus 4 from the measurement head 21. The control apparatus 4 controls the operation of the processing system SYS based on at least one of the processing light measurement information and the mark measurement information. Specifically, the control apparatus 4 controls the processing system SYS (for example, at least one of the processing apparatus 1, the measurement apparatus 2 and the stage apparatus 3) based on at least one of the processing light measurement information and the mark measurement information so that the processing system SYS properly processes the workpiece W.

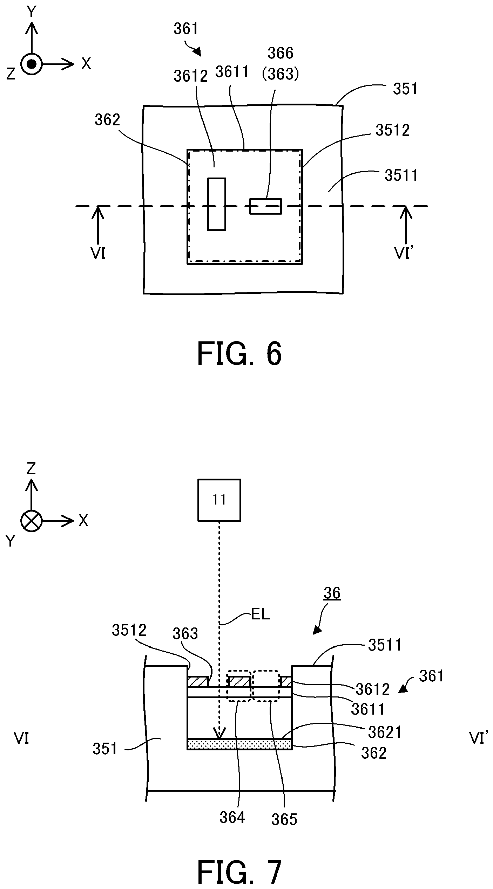

Here, with reference to FIG. 6 to FIG. 7, a configuration of the measurement apparatus 36 will be described. FIG. 6 is a planar view that illustrates the configuration of the measurement apparatus 36. FIG. 7 is a cross-sectional view that illustrates the configuration of the measurement apparatus 36. Note that FIG. 7 corresponds to a VI-VI' cross-sectional view of FIG. 6.

As illustrated in FIG. 6 and FIG. 7 (furthermore, as illustrated in FIG. 5 described above), the measurement apparatus 36 is disposed at (namely, installed at) the rotation apparatus 35. In an example illustrated in FIG. 5 to FIG. 7, the measurement apparatus 36 is disposed at the support frame 351 of the rotation apparatus 35. Since the measurement apparatus 36 measures the processing light EL and the measurement head 21 measures at least a part of the measurement apparatus 36, the measurement apparatus 36 may be disposed at an upper surface 3511 (namely, a surface facing toward the processing head 12 and the measurement head 21) of the support frame 351. However, the measurement apparatus 36 may be disposed at a surface of the support frame 351 that is different from the upper surface 3511. The measurement apparatus 36 may be disposed at a member that is different from the support frame 351. For example, the measurement apparatus 36 may be disposed at the stage 32. At least a part of the measurement apparatus 36 may be detachable from the support frame 351. Alternatively, the measurement apparatus 36 may be integrated with the support frame 351. Moreover, a plurality of measurement apparatuses 36 may be disposed at the support frame 351. Note that the measurement apparatus 36 may be disposed at the chuck 353. The plurality of measurement apparatuses 36 may be disposed at the chuck 353.

As illustrated in FIG. 6 and FIG. 7, the measurement apparatus 36 includes a beam passing member 361 and a light reception element 362. The beam passing member 361 is a plate-like member along the XY plane. A shape of the beam passing member 361 in the XY plane is a rectangular shape, however, may be any other shape (for example, a circular shape or an oval shape). Note that the beam passing member 361 is a planar plate, however, may have a curved shape. A size of one side of the beam passing member 361 is a several millimeters to a dozen millimeters, however, may be another size. The light reception element 362 has a light reception surface 3621 that spread along the XY plane. A shape of the light reception surface 3621 in the XY plane is a rectangular shape, however, may be any other shape (for example, a circular shape or an oval shape). A size of one side of the light reception surface 3621 may be equal to the size of one side of the beam passing member 361, may be smaller than the size of one side of the beam passing member 361 and may be larger than the size of one side of the beam passing member 361.

The beam passing member 361 and the light reception element 362 are disposed in a hole 3512 (namely, a concave part) formed in the support frame 351. Namely, the beam passing member 361 and the light reception element 362 are disposed in the hole 3512 that is depressed from the upper surface 3511 of the support frame 351 toward the -Z side. However, at least one of the beam passing member 361 and the light reception element 362 may be disposed at a position that is different from the hole 3512.

The beam passing member 361 is disposed above the light reception element 362 in the hole 3512. Namely, the beam passing member 361 is disposed at a position closer to the processing head 12 and the measurement head 21 than the light reception element 362 is. In this case, as illustrated in FIG. 7, a surface of the beam passing member 361 (specifically, a surface facing toward the processing head 12 and measurement head 21, and the surface at the +Z side) may be located below the upper surface 3511. As a result, there is a lower possibility that workpiece W mistakenly contacts with measurement apparatus 36 (especially, the beam passing member 361), because the measurement apparatus 36 does not protrude from the surface of the support frame 351. As a result, the beam passing member 361 is damaged and / or contaminated due to the contact between the workpiece W and the beam passing member 361. However, the surface of the beam passing member 361 may be located at a same height as the upper surface 3511 or may be located above the upper surface 3511.

The beam passing member 361 includes a glass substrate 3611 and an attenuation film 3612 that is formed on at least a part of a surface of the glass substrate 3611. The attenuation film 3612 is a member that is configured to attenuate the processing light EL entering the attenuation film 3612. Note that "the attenuation of the processing light EL by the attenuation film 3612" in the present example embodiment may include not only allowing an intensity of the processing light EL that has passed through the attenuation film 3612 to be lower than an intensity of the processing light EL entering the attenuation film 3612 but also shielding (namely, blocking) the processing light EL entering the attenuation film 3612. Therefore, when the processing light EL enters the attenuation film 3612, the processing light EL that has been attenuated by the attenuation film 3612 enters the light reception element 362 through the attenuation film 3612 or the processing light EL does not enter the light reception element 362 because of the attenuation film 3612 shielding the processing light EL. Note that the attenuation film 3612 may be formed by a chromium film or a chromium oxide film.

At least one aperture 363 is formed in the attenuation film 3612. In the example illustrated in FIG. 6 to FIG. 7, a plurality of apertures 363 are formed in the attenuation film 3612. The aperture 363 is a through hole that penetrates the attenuation film 3612 in the Z axis direction. Thus, when the processing light EL enters the aperture 363 formed in the attenuation film 3612, the processing light EL passes through the beam passing member 361 through the aperture 363. Namely, the processing light EL is not attenuated or shielded by the attenuation film 3612 to enter the light reception element 362 through the aperture 363.

In this manner, a part of the glass substrate 3611 on which the attenuation film 3612 is formed (namely, a part at which the aperture 363 is not formed) serves as an attenuation area 364 in which the processing light EL is attenuated. On the other hand, a part of the glass substrate 3611 on which the attenuation film 3612 is not formed (namely, a part at which the aperture 363 is formed) serves as a passing area 365 through which the processing light EL is allowed to pass. In this case, the passing area 365 does not attenuate the processing light EL passing through the passing area 365. However, the passing area 365 may attenuate the processing light EL passing through the passing area 365. Namely, the passing area 365 may not be an area through which all (namely, 100%) of the processing light EL entering the passing area 365 passes, and may be an area through which a part of the processing light EL entering the passing area 365 passes. However, an attenuation rate of the processing light EL by the passing area 365 is smaller than an attenuation rate of the processing light EL by the attenuation area 364. The attenuation area 364 is typically disposed to be adjacent to the passing area 365. Namely, the passing area 355 is disposed in the attenuation area 364.

Since the measurement apparatus 36 is disposed at the support frame 3511 (namely, disposed at the rotation apparatus 35), a positional relationship between the rotation apparatus 35 and each of the attenuation area 364 and the passing area 365 is fixed. Namely, the positional relationship between the rotation apparatus 35 and each of the attenuation area 364 and the passing area 365 is a predetermined relationship that is known to the control apparatus 4.

The passing area 365 that is formed by the aperture 363 may form a mark (namely, a pattern) 366 having a predetermined shape in a plane (typically, the XY plane) along the surface of the attenuation film 3612. This mark 366 may serve as the mark that is measurable by the measurement head 21.

For example, as illustrated in FIG. 6, a mark 366 (this mark 366 may be referred to as a slit mark) having a slit shape may be formed in the beam passing member 361. The mark 366 having the slit shape is a mark that is formed by the passing area 365 having a single linear shape (for example, a slit-like shape) in the plane along the surface of the attenuation film 3612. In the example illustrated in FIG. 6, a plurality of marks 366 whose angles relative to each of the X axis and the Y axis are different from each other are formed in the beam passing member 361. However, the mark 366 having another shape may be formed in the beam passing member 361. For example, the mark 366 (this mark 366 may be referred to as a fine mark) that is formed by the plurality of linear passing areas 365 each of which extends along one direction and which are arranged along another direction intersecting with the one direction may be formed. For example, the mark 366 (this mark 366 may be referred to as a rectangular mark that is formed by the passing area 365 having a rectangular shape in a plane along the surface of the attenuation film 3612 may be formed in the beam passing member 361. For example, the mark 366 (this mark 366 may be referred to as a cross mark) that is formed by the plurality of linear passing areas 365 each of which extends along a first direction and which are arranged along a second direction intersecting with the first direction and the plurality of linear passing areas 365 each of which extends along a third direction intersecting with the first direction and which are arranged along a fourth direction intersecting with the third direction may be formed in the beam passing member 361. For example, the mark 366 (this mark 366 may be referred to as a search mark) that is formed by two first linear passing areas 365 each of which extends along a fifth direction and which are away from each other along a sixth direction perpendicular to the fifth direction and a second linear passing area 365 that extends along a seventh direction inclined with respect to (namely, obliquely intersecting with) the fifth direction may be formed in the beam passing member 361.

The light reception element 362 is a light reception part that is configured to optically receive (for example, is configured to detect) the processing light EL, which enters the light reception element 362 through the passing area 365 (namely, the aperture 363), by the light reception surface 3621. The light reception element 362 is a light reception part that is configured to optically receive the processing light EL, which has passed through the passing area 365 (namely, the aperture 363), by the light reception surface 3621. A photoelectric converter that is configured to photoelectric-converts the received processing light EL is one example of the light reception part.

When the plurality of passing areas 365 are formed in the beam passing member 361, the light reception element 362 is configured to optically receive, by the light reception surface 3621, the processing light EL entering the light reception element 362 through each of the plurality of passing areas 365. Note that the light reception surface 3621 may be formed by one photoelectric conversion surface of a photoelectric conversion element. For example, the light reception element 362 may be configured to optically receive, by a first part of the light reception surface 3621, the processing light EL entering the light reception element 362 through a first passing area 365. For example, the light reception element 362 may be configured to optically receive, by a second part of the light reception surface 3621, the processing light EL entering the light reception element 362 through a second passing area 365. In this manner, in the present example embodiment, the measurement apparatus 36 may not include a plurality of light reception elements 362 that correspond to the plurality of passing areas 365, respectively. The measurement apparatus 36 may include the light reception element 362 common to the plurality of passing areas 365. However, the measurement apparatus 36 may include the plurality of light reception elements 362 that correspond to the plurality of passing areas 365, respectively.

When the light reception element 362 optically receives the processing light EL through the passing area 365, the condensed position of the processing light EL may be set on or near the passing area 365 of the beam passing member 361. On the other hand, when the workpiece W is processed by the processing light EL, the condensed position of the processing light EL may be set on or near the surface of the workpiece W. Thus, the control apparatus 4 may set the condensed position of the processing light EL at a proper position by using the condensed position change optical system 1210.

Considering that the workpiece W is processed by the irradiation of the processing light EL, there is a possibility that at least a part of the measurement apparatus 36 is also processed (substantially, damaged) by the irradiation of the processing light EL. Thus, the intensity (for example, an energy amount per unit area in a plane intersecting with the propagating direction of the processing light EL) of the processing light EL may be controlled so that the intensity (for example, an energy amount per unit area in the light reception surface 3621 of the light reception element 362) of the processing light EL with which the measurement apparatus 36 is irradiated is lower than the intensity (for example, an energy amount per unit area in the surface of the workpiece W) of the processing light EL with which the workpiece W is irradiated to process the workpiece W. For example, the control apparatus 4 may reduce the intensity of the processing light EL may be reduced by controlling the processing light source 11. For example, the control apparatus 4 may reduce the intensity of the processing light EL may be reduced by controlling an attenuation member (not illustrated) that is disposed at an exit side of the processing light source 11.

The optical received result by the light reception element 362 includes an information related to a state of the processing light EL that has entered the light reception element 362. For example, the optical received result by the light reception element 362 includes an information related to an intensity (specifically, an intensity in the plane intersecting with the XY plane) of the processing light EL that has entered the light reception element 362. More specifically, the optical received result by the light reception element 362 includes an information related to an intensity distribution of the processing light EL in a plane along the XY plane. The optical received result by the light reception element 362 is outputted to the control apparatus 4 as the above described processing light measurement information. In addition, when the mark 366 is measured by the measurement head 21 as described above, a measured result of the mark 366 by the measurement head 21 is outputted to the control apparatus 4 as the above described mark measurement information.

Again in FIG. 1 and FIG. 2, the control apparatus 4 is configured to control the operation of the processing system SYS. For example, the control apparatus 4 may set a processing condition of the workpiece W and control at least one of the processing apparatus 1, the measurement apparatus 2 and the stage apparatus 3 so that the workpiece W is processed based on the set processing condition.

The control apparatus 4 is configured to control an operation of the processing system SYS. The control apparatus 4 may include an arithmetic apparatus and a storage apparatus. The arithmetic apparatus may include at least one of a CPU (Central Processing Unit) and a GPU (Graphic Processing Unit), for example. The storage apparatus may include a memory, for example. The control apparatus 4 serves as an apparatus for controlling the operation of the processing system SYS by means of the arithmetic apparatus executing a computer program. The computer program is a computer program that allows the arithmetic apparatus to execute (namely, to perform) a below described operation that should be executed by the control apparatus 4. Namely, the computer program is a computer program that allows the control apparatus 4 to function so as to make the processing system SYS execute the below described operation. The computer program executed by the arithmetic apparatus may be recorded in the storage apparatus (namely, a recording medium) of the control apparatus 4, or may be recorded in any recording medium (for example, a hard disk or a semiconductor memory) that is built in the control apparatus 4 or that is attachable to the control apparatus 4. Alternatively, the arithmetic apparatus may download the computer program that should be executed from an apparatus disposed at the outside of the control apparatus 4 through a network interface.

The control apparatus 4 may not be disposed in the processing system SYS. For example, the control apparatus 4 may be disposed at the outside of the processing system SYS as a server or the like. In this case, the control apparatus 4 may be connected to the processing system SYS through a wired and / or wireless network (alternatively, a data bus and / or a communication line). A network using a serial-bus-type interface such as at least one of IEEE1394, RS-232x, RS-422, RS-423, RS-485 and USB may be used as the wired network. A network using a parallel-bus-type interface may be used as the wired network. A network using an interface that is compatible to Ethernet such as at least one of 10-BASE-T, 100BASE-TX or 1000BASE-T may be used as the wired network. A network using an electrical wave may be used as the wireless network. A network that is compatible to IEEE802.1x (for example, at least one of a wireless LAN and Bluetooth (registered trademark)) is one example of the network using the electrical wave. A network using an infrared ray may be used as the wireless network. A network using an optical communication may be used as the wireless network. In this case, the control apparatus 4 and the processing system SYS may be configured to transmit and receive various information through the network. Moreover, the control apparatus 4 may be configured to transmit an information such as a command and a control parameter to the processing system SYS through the network. The processing system SYS may include a reception apparatus that is configured to receive the information such as the command and the control parameter from the control apparatus 4 through the network. The processing system SYS may include a transmission apparatus that is configured to transmit the information such as the command and the control parameter to the control apparatus 4 through the network (namely, an output apparatus that is configured to output an information to the control apparatus 4). Alternatively, a first control apparatus that is configured to perform a part of the arithmetic processing performed by the control apparatus 4 may be disposed in the processing system SYS and a second control apparatus that is configured to perform another part of the arithmetic processing performed by the control apparatus 4 may be disposed at an outside of the processing system SYS.

Note that at least one of an optical disc such as a CD-ROM, a CD-R, a CD-RW, a flexible disc, a MO, a DVD-ROM, a DVD-RAM, a DVD-R, a DVD+R, a DVD-RW, a DVD+RW and a Blu-ray (registered trademark), a magnetic disc such as a magnetic tape, an optical-magnetic disc, a semiconductor memory such as a USB memory, and another medium that is configured to store the program may be used as the recording medium recording therein the computer program that should be executed by the control apparatus 8. Moreover, the recording medium may include a device that is configured to record the computer program (for example, a device for a universal use or a device for an exclusive use in which the computer program is embedded to be executable in a form of at least one of a software, a firmware and the like). Moreover, various arithmetic processing or functions included in the computer program may be realized by a logical processing block that is realized in the control apparatus 8 by means of the control apparatus 8 (namely, a computer) executing the computer program, may be realized by a hardware such as a predetermined gate array (a FPGA, an ASIC) of the control apparatus 8, or may be realized in a form in which the logical process block and a partial hardware module that realizes an partial element of the hardware are combined.

### (2) Operation of Processing System SYS

Next, the operation of the processing system SYS will be described. As described above, the processing system SYS performs a processing operation for processing at least a part of the workpiece W by using the processing light EL. Furthermore, the processing system SYS performs an axis information generation operation for generating a rotational axis information related to the rotational axis 3522 of the rotation apparatus 35 by using the measurement apparatus 2 before performing the processing operation (alternatively, after completing the processing operation or while the processing operation is performed). Furthermore, the processing system SYS performs a light state information generation operation for generating a light state information related to a state of the processing light EL by using the measurement apparatus 36 before performing the processing operation (alternatively, after completing the processing operation or while the processing operation is performed). Furthermore, the processing system SYS performs an origin point information operation for generating an origin point information related to a processing origin point PO of the processing apparatus 1 and a measurement origin point MO of the measurement apparatus 2 by using the measurement apparatus 36 before performing the processing operation (alternatively, after completing the processing operation or while the processing operation is performed). Thus, in the below described description, the processing operation, the axis information generation operation, the light state generation operation and the origin point information generation operation will be described in order.

Incidentally, in the below described description, the processing operation, the axis information generation operation, the light state generation operation and the origin point information generation operation that are performed when the workpiece W that is held by the chuck 353 and that has a cylindrical shape is processed will be described for the convenience of description. However, the processing operation, the axis information generation operation, the light state generation operation and the origin point information generation operation may be performed on the workpiece W that has a shape different from the cylindrical shape. The processing operation, the axis information generation operation, the light state generation operation and the origin point information generation operation may be performed on the workpiece W that is not held by the chuck 353 (namely, that is placed on the stage 32).

### (2-1) Processing Operation

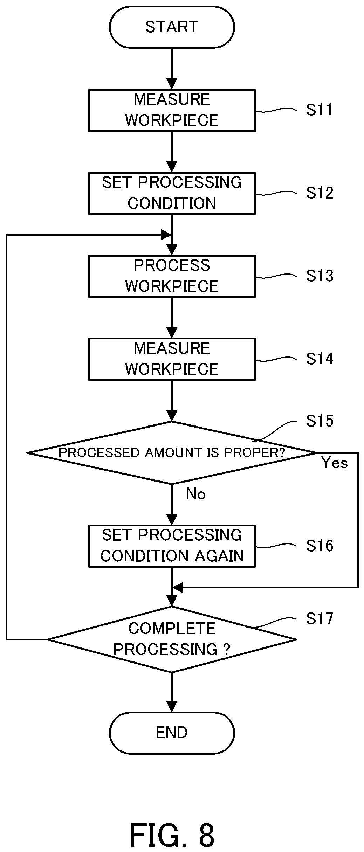

Firstly, with reference to FIG. 8, the processing operation for processing at least a part of the surface of the workpiece W by using the processing light EL will be described. FIG. 8 is a flowchart that illustrates a flow of the processing operation.

As illustrated in FIG. 8, firstly, the measurement head 21 measures the workpiece W held by the chuck 353 (a step S11). In this case, the measurement head 21 may measure the workpiece W that is being rotated by the rotation apparatus 35. Namely, the measurement head 21 may measure the workpiece W in at least a part of a period during which the rotation apparatus 35 rotates the workpiece W. Alternatively, the measurement head 21 may measure the static workpiece W. When the measurement head 21 measures the static workpiece W, the rotation apparatus 35 may rotate the workpiece W by a predetermined angle every time the measurement head 21 measures a measurement target part of the surface of the workpiece W on which the measurement shot area MSA is set so that new measurement target part of the surface of the workpiece W that is not yet measured by the measurement head 21 is included in the measurement shot area MSA. Namely, the processing system SYS may perform the measurement of the workpiece W by the measurement head 21 and the rotation of the workpiece W by the rotation apparatus 35 alternately. Specifically, the measurement head 21 measures a first measurement target part of the surface of the workpiece W in a state where the measurement shot area MSA is set on the first measurement target part of the surface of the workpiece W. Then, the rotation apparatus 35 rotates the workpiece W by the predetermined angle so that the measurement shot area MSA is set on a second measurement target part of the surface of the workpiece W that is different from the first measurement target part under the control of the control apparatus 4. Then, the measurement head 21 measures the second measurement target part of the surface of the workpiece W in a state where the measurement shot area MSA is set on the second measurement target part of the surface of the workpiece W. Then, the same operation is repeated. As a result, the measurement head 21 measures a plurality of measurement target parts, which are obtained by dividing (sectioning or segmentizing) the surface of the workpiece W, in order. In this case, the measurement target part on which the measurement shot area MSA is set after the rotation apparatus 35 rotates the workpiece W may be partially overlapped with the measurement target part on which the measurement shot area MSA is set before the rotation apparatus 35 rotates the workpiece W. Namely, the measurement target part that is expected to be measured by the measurement head 21 after the rotation apparatus 35 rotates the workpiece W may be partially overlapped with the measurement target part that has been already performed by the measurement head 21 before the rotation apparatus 35 rotates the workpiece W. However, the measurement target part on which the measurement shot area MSA is set after the rotation apparatus 35 rotates the workpiece W may not be overlapped with the measurement target part on which the measurement shot area MSA is set before the rotation apparatus 35 rotates the workpiece W. Namely, the measurement target part that is expected to be measured by the measurement head 21 after the rotation apparatus 35 rotates the workpiece W may not be overlapped with the measurement target part that has been already performed by the measurement head 21 before the rotation apparatus 35 rotates the workpiece W.

Moreover, when the measurement head 21 measures the static workpiece W, the stage 32 may move by a predetermined moving distance every time the measurement head 21 measures the measurement target part of the surface of the workpiece W on which the measurement shot area MSA is set so that new measurement target part of the surface of the workpiece W that is not yet measured by the measurement head 21 is included in the measurement shot area MSA. A moving direction in this case may be a direction that is parallel to the rotational axis 3522 of the rotation apparatus 35. Note that the moving direction may be a direction that intersects with the rotational axis 3522 of the rotation apparatus 35. In this manner, the processing system SYS may perform the measurement of the workpiece W by the measurement head 21 and the movement of the workpiece W by the stage 32 alternately.

Then, the control apparatus 4 sets the processing condition of the workpiece W based on the workpiece measurement information related to the measured result of the workpiece W by the measurement head 21 at the step S11 (a step S12). The processing condition may include a condition related to the processing light EL, for example. The condition related to the processing light EL may include at least one of an intensity of the processing light EL, an irradiation timing of the processing light EL and an irradiation time of the processing light EL, for example. The processing condition may include a condition related to the movement of the processing head 12, for example. The condition related to the movement of the processing head 12 may include at least one of a moving speed of the processing head 12, a moving timing of the processing head 12 and a moving distance of the processing head 12, for example. The processing condition may include a condition related to the movement of the stage 32, for example. The condition related to the movement of the stage 32 may include at least one of a moving speed of the stage 32, a moving timing of the processing head 12 and a moving distance of the stage 32, for example. The processing condition may include a condition related to the rotation of the workpiece W, for example. The condition related to the rotation of the workpiece W may include at least one of a rotational speed of the workpiece W, a rotational timing of the workpiece W and a rotational amount (namely, a rotational angle) of the workpiece W, for example.

Then, the processing system SYS processes the workpiece W based on the processing condition set at the step S12 (a step S13). Namely, the processing head 12 irradiates the workpiece W with the processing light EL and moves based on the processing condition set at the step S12. The stage 32 moves based on the processing condition set at the step S12. The rotation apparatus 35 rotates the workpiece W based on the processing condition set at the step S12.

The processing head 12 may process the workpiece W that is being rotated by the rotation apparatus 35. Namely, the processing head 12 may process the workpiece W in at least a part of the period during which the rotation apparatus 35 rotates the workpiece W. Alternatively, the processing head 12 may process the static workpiece W. When the processing head 12 processes the static workpiece W, the rotation apparatus 35 may rotate the workpiece W by a predetermined angle every time the processing head 12 processes a processing target part of the surface of the workpiece W on which the processing shot area PSA is set so that new processing target part of the surface of the workpiece W that is not yet processed by the processing head 12 is included in the processing shot area PSA. Namely, the processing system SYS may perform the processing of the workpiece W by the processing head 12 (namely, the irradiation of the workpiece W with the processing light EL by the processing head 12) and the rotation of the workpiece W by the rotation apparatus 35 alternately. Specifically, the processing head 12 processes a first processing target part of the surface of the workpiece W in a state where the processing shot area PSA is set on the first processing target part of the surface of the workpiece W. Then, the rotation apparatus 35 rotates the workpiece W by the predetermined angle so that the processing shot area PSA is set on a second processing target part of the surface of the workpiece W that is different from the first processing target part under the control of the control apparatus 4. Then, the processing head 12 processes the second processing target part of the surface of the workpiece W in a state where the processing shot area PSA is set on the second processing target part of the surface of the workpiece W. Then, the same operation is repeated. As a result, the processing head 12 processes a plurality of processing target parts, which are obtained by dividing (sectioning or segmentizing) the surface of the workpiece W, in order. Moreover, in this case, the control apparatus 4 may move the workpiece W by a predetermined moving distance so that the processing shot area PSA is set on the second processing target part of the surface of the workpiece W that is different from the first processing target part. A moving direction of the workpiece W in this case is typically a direction that is along the rotational axis 3522 of the rotation apparatus 35, however, may be a direction that intersects with the rotational axis 3522.

In any case,, the processing system SYS rotates the workpiece W by the rotation apparatus 35 (more specifically, rotates the chuck 353 holding the workpiece W by the rotation apparatus 35) in order to process the surface of the workpiece W by the processing light EL. In this case, the processing system SYS may be regarded to perform a turning processing on the surface of the workpiece W by the processing light EL. When the processing light EL is the laser light, the processing system SYS may be regarded to perform a laser turning processing on the surface of the workpiece W by the processing light EL.

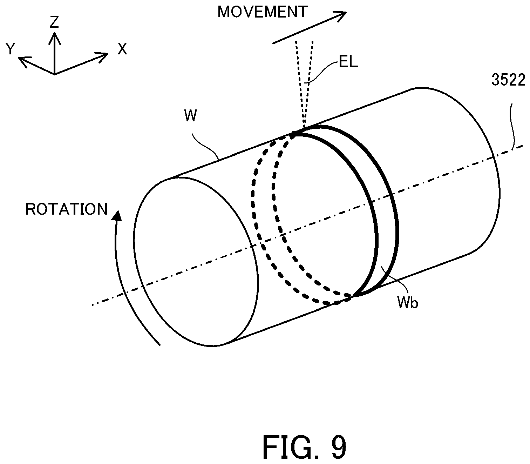

When the rotation apparatus 35 rotates the workpiece W, the processing head 12 is capable of processing a belt-like area Wb of the surface of the workpiece W that extends along a circumferential direction, as illustrated in FIG. 9 that is a perspective view illustrating the workpiece W being processed. In this case, the processing system SYS may repeat an operation for processing the belt-like area Wb while relatively moving the workpiece W and the processing light EL. Namely, the processing system SYS may process the surface of the workpiece W by the processing light EL while relatively moving the workpiece W and the processing light EL. The processing system SYS may process the belt-like area Wb of the surface of the workpiece W by the processing light EL while moving the irradiation position of the processing light EL on the surface of the workpiece W relative to the surface of the workpiece W. Specifically, as illustrated in FIG. 9, the processing system SYS may process the belt-like area Wb of the surface of the workpiece W by the processing light EL while moving the irradiation position of the processing light EL on the surface of the workpiece W along a direction parallel to the rotational axis 3522. Namely, the processing system SYS may alternately perform an operation for processing the belt-like area Wb of the surface of the workpiece W by the processing light EL by rotating the workpiece W by using the rotation apparatus 35 and an operation for moving the irradiation position of the processing light EL on the surface of the workpiece along the direction parallel to the rotational axis 3522 in a state where the rotation of the workpiece W by the rotation apparatus 35 is stopped. As a result, the processing system SYS is capable of processing whole of the workpiece W (alternatively, a part of the surface of the workpiece W that should be processed by the processing light EL). Note that the operation for moving the irradiation position of the processing light EL along the direction parallel to the rotational axis 3522 includes not only an operation for moving the irradiation position of the processing light EL along the direction parallel to the rotational axis 3522 literally but also an operation for moving the irradiation position of the processing light EL along a direction that is not strictly parallel to the rotational axis 3522 but may be regarded to be substantially parallel to the rotational axis 3522.

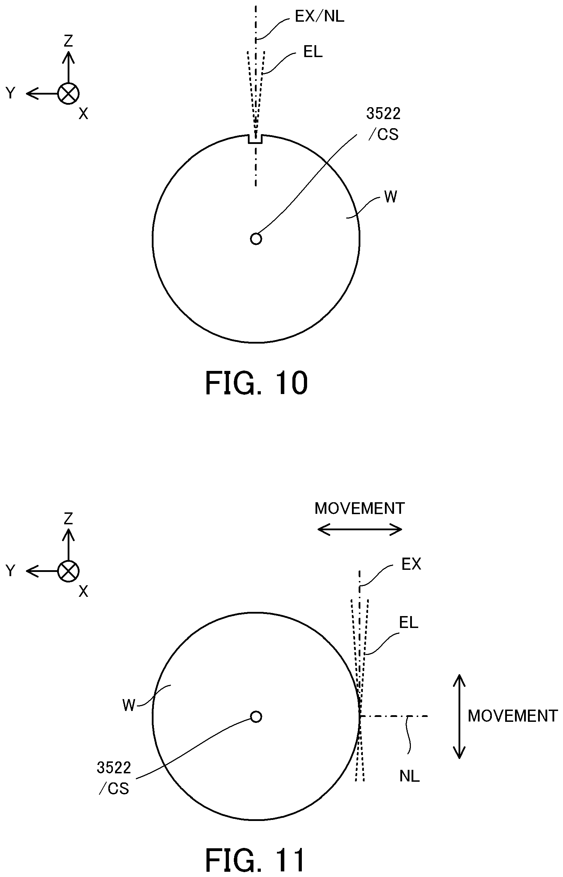

As described above, the processing head 12 irradiates the workpiece W with the processing light EL that propagates along the Z axis direction. Namely, the processing head 12 irradiates the workpiece W with the processing light EL whose irradiation axis EX is parallel to the Z axis direction. In this case, as illustrated in FIG. 10 that is a cross-sectional view illustrating the processing light EL with which the workpiece W is irradiated, the processing head 12 may irradiate the workpiece W with the processing light EL from a direction that intersects with the rotational axis 3522 of the rotation apparatus 35 (namely, a central axis CS of the workpiece W). Namely, the processing head 12 may irradiate the workpiece W with the processing light EL whose irradiation axis EX intersects with the rotational axis 3522. In this case, since the processing head 12 is located above the workpiece W, the processing head 12 may irradiate an upper surface (namely, a surface facing toward the processing head 12) of the workpiece W with the processing light EL. Namely, the processing head 12 may irradiate a part of the surface of the workpiece W with the processing light EL from a direction along a normal line NL of this part.

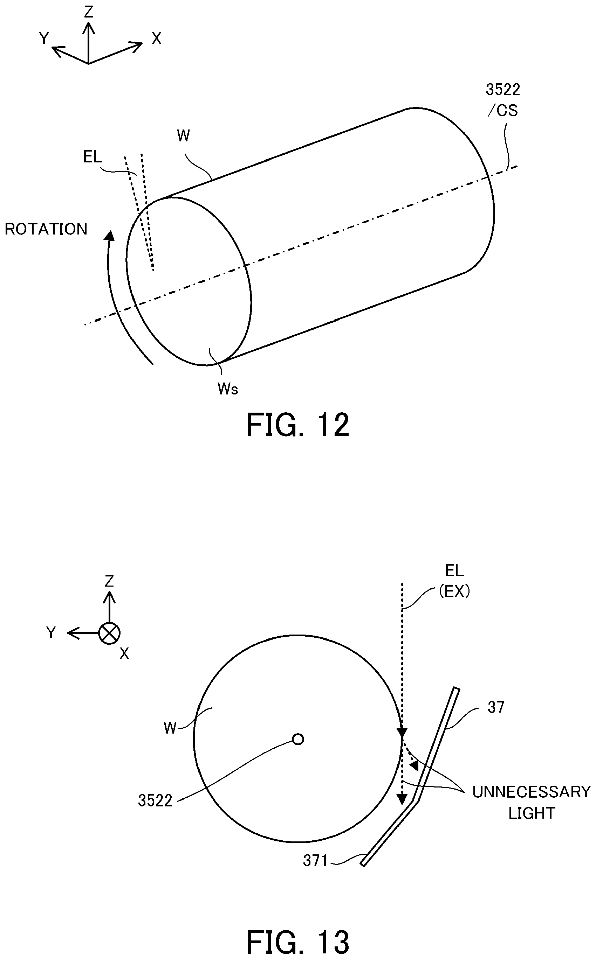

Alternatively, as illustrated in FIG. 11 that is a cross-sectional view illustrating another example of the processing light EL with which the workpiece W is irradiated, the processing head 12 may irradiate the workpiece W with the processing light EL from a direction that is skew relative to the rotational axis 3522 of the rotation apparatus 35 (namely, the central axis CS of the workpiece W). Namely, the processing head 12 may irradiate the workpiece W with the processing light EL whose irradiation axis EX is skew relative to the rotational axis 3522. Note that the direction that is skew relative to the rotational axis 3522 may be referred to as a direction along an axis that is skew relative to the rotational axis 3522. In this case, the processing head 12 typically irradiates a part of the surface of the workpiece W with the processing light EL from a direction intersecting with the normal line NL of this part. For example, the processing head 12 may irradiate a part of the surface of the workpiece W with the processing light EL that propagates along the irradiation axis EX, wherein an angle between the irradiation axis EX and the normal line NL of this part is larger than 0 degree. For example, the processing head 12 may irradiate a part of the surface of the workpiece W with the processing light EL that propagates along the irradiation axis EX, wherein the angle between the irradiation axis EX and the normal line NL of this part is larger than 30 degree. For example, the processing head 12 may irradiate a part of the surface of the workpiece W with the processing light EL that propagates along the irradiation axis EX, wherein the angle between the irradiation axis EX and the normal line NL of this part is larger than 60 degree. For example, the processing head 12 may irradiate a part of the surface of the workpiece W with the processing light EL that propagates along the irradiation axis EX, wherein the angle between the irradiation axis EX and the normal line NL of this part is larger than 70 degree. For example, the processing head 12 may irradiate a part of the surface of the workpiece W with the processing light EL that propagates along the irradiation axis EX, wherein the angle between the irradiation axis EX and the normal line NL of this part is larger than 80 degree. For example, the processing head 12 may irradiate a part of the surface of the workpiece W with the processing light EL that propagates along the irradiation axis EX, wherein the angle between the irradiation axis EX and the normal line NL of this part is 90 degree. Note that FIG. 12 illustrates an example in which the processing head 12 irradiates a part of the surface of the workpiece W with the processing light EL that propagates along the irradiation axis EX, wherein the angle between the irradiation axis EX and the normal line NL of this part is larger than 30 degree.

When the processing head 12 irradiates the workpiece W with the processing light EL from the direction that is skew relative to the rotational axis 3522, the processing system SYS may change the irradiation position of the processing light EL along a direction intersecting with the rotational axis 3522. Since the shape of the workpiece W is a cylindrical shape, the direction intersecting with the rotational axis 3522 (namely, the direction intersecting with the central axis CS or the workpiece W) corresponds to a radial direction of the workpiece W. Thus, the processing system SYS may change the irradiation position of the processing light EL along the radial direction of the workpiece W. Note that the processing system SYS may change the irradiation position of the processing light EL along the direction intersecting with the rotational axis 3522 even when the processing head 12 irradiates the workpiece W with the processing light EL from the direction that intersects with the rotational axis 3522.

For example, as illustrated in FIG. 11, the processing system SYS may change the irradiation position (in this case, the irradiation position may mean the condensed position, the same is applied to the below described description) of the processing light EL along the Y axis direction that intersects with the rotational axis 3522 and that intersects with the irradiation axis EX. In this case, the processing system SYS may change the irradiation position of the processing light EL along the Y axis direction so that the irradiation position of the processing light EL is closer to the rotational axis 3522. The processing system SYS may change the irradiation position of the processing light EL along the Y axis direction so that the irradiation position of the processing light EL in a second period that is after a first period is closer to the rotational axis 3522 than the irradiation position of the processing light EL in the first period is. In an example illustrated in FIG. 11, the processing system SYS may change the irradiation position of the processing light EL along the Y axis direction so that the irradiation position of the processing light EL moves toward the +Y side.

For example, as illustrated in FIG. 11, the processing system SYS may change the irradiation position of the processing light EL along the Z axis direction that intersects with the rotational axis 3522 and that is along the irradiation axis EX. In this case, the change of the irradiation position results in a change of a defocus amount of the processing light EL with which the surface of the workpiece W is irradiated. As a result, the change of the irradiation position results in a change of a fluence of the processing light EL with which the surface of the workpiece W is irradiated. As one example, at a timing when the processing of the workpiece W is just started, the processing system SYS may change the irradiation position of the processing light EL so that the surface of the workpiece W is irradiated with the processing light EL having a relatively high fluence. Typically, the processing system SYS may change the irradiation position of the processing light EL so that the condensed position of the processing light EL is located on the surface of the workpiece W, because the fluence of the processing light EL is highest when the condensed position of the processing light EL is located on the surface of the workpiece W. As a result, a processed amount of the workpiece W by one-time irradiation of the processing light EL is relatively large. Thus, the processing system SYS is capable of performing a crude processing of the workpiece W relatively rapidly. On the other hand, at a timing when a finish processing of the workpiece W is performed, the processing system SYS may change the irradiation position of the processing light EL so that the surface of the workpiece W is irradiated with the processing light EL having a relatively low fluence in order to finely adjust the processed amount of the workpiece W by relatively decreasing the processed amount of the workpiece W by the one-time irradiation of the processing light EL. Typically, the processing system SYS may change the irradiation position of the processing light EL so that the condensed position of the processing light EL is away from the surface of the workpiece W (namely, the surface of the workpiece W is irradiated with the defocused processing light EL. Alternatively, the processing system SYS may decrease the intensity of the processing light EL so that the surface of the workpiece W is irradiated with the processing light EL having the relatively low fluence.

The above described FIG. 10 and FIG. 11 illustrate an example in which the processing head 12 irradiates, with the processing light EL, the surface of the workpiece W (for example, a side surface of the workpiece W having the cylindrical shape) that intersects with a plane parallel to the holding surface 3531 of the chuck 353 with which the workpiece W contacts when the chuck 353 holds the workpiece W. Namely, FIG. 10 and FIG. 11 illustrate an example in which the processing head 12 irradiates, with the processing light EL, the surface of the workpiece W that extends along the rotational axis 3522. On the other hand, as illustrated in FIG. 12 that is a perspective view illustrating another example of the processing light EL with which the workpiece W is irradiated, the processing head 12 may irradiate, with the processing light EL, a surface Ws of the workpiece W that intersects with the rotational axis 3522. Here, the surface Ws of the workpiece W may be irradiated with the processing light EL from a direction that is perpendicular to a direction of the rotational axis 3522 (the X direction). The surface Ws of the workpiece W may be irradiated with the processing light EL from a direction that is not perpendicular to but intersects with the direction of the rotational axis 3522 (the X direction). The surface Ws of the workpiece W may be irradiated with the processing light EL from a direction that is skew relative to the direction of the rotational axis 3522 (the X direction). Moreover, the surface Ws of the workpiece W may be irradiated with the processing light EL from the direction of the rotational axis 3522 (the X direction).

When the workpiece W is irradiated with the processing light EL, there is a possibility that a light, which is generated due to the irradiation of the processing light EL, is emitted from the workpiece W. The light that is generated due to the irradiation of the processing light EL may include at least one of a reflection light of the processing light EL from the workpiece W, a scattering light of the processing light EL from the workpiece W and a transmitted light of the processing light EL through the workpiece W, for example. Alternatively, there is a possibility that at least a part of the processing light propagating toward the workpiece W propagates directly beyond the workpiece W without the workpiece W being irradiated therewith. In this case, the stage apparatus 3 may include a beam damper 37 that is configured to terminate the light generated due to the irradiation of the processing light EL and the light part of the processing light EL with which workpiece W is not irradiated (hereinafter, both are collectively referred to an "unnecessary light"). FIG. 13 illustrates one example of the beam damper 37. As illustrated in FIG. 13, the beam damper 37 is disposed (namely, located) at a position that is away from the irradiation position of the processing light EL on the surface of the workpiece W toward a side opposite to the processing head 12. In an example illustrated in FIG. 13, the beam damper 37 includes a part that is away from the irradiation position of the processing light EL on the surface of the workpiece W toward the -Z side. The beam damper 37 includes an irradiation surface 371 that is irradiated with the unnecessary light. Thus, the irradiation surface 371 is disposed on an optical path of the unnecessary light. The irradiation surface 371 may absorb or scatter the unnecessary light. In this case, the irradiation surface 371 may be disposed to be inclined with respect to the irradiation axis EX of the processing light EL in order to reduce a possibility that the unnecessary with which the irradiation surface 371 is irradiated returns the processing head 12. For example, the irradiation surface 371 may be disposed so that an angle between the irradiation surface 371 and the irradiation axis EX is an acute angle. For example, the irradiation surface 371 may be a curved surface that includes at least one of a convex surface, a convex surface and the like. Note that the irradiation surface 371 of the beam damper 37 may be disposed at a position that is away from the condensed position of the processing light EL. The beam damper 37 may be attached on the stage 32, or may be attached to a member (for example, at least one of the surface plate 31 and the housing 5) that is different from the stage 32.

Again in FIG. 8, the surface of the workpiece W that has been processed by the processing light EL is measured by the measurement head 21 (a step S14). In this case, the measurement of the workpiece W by the measurement head 21 may be performed in parallel with the processing of the workpiece W by the processing head 12. Specifically, the measurement head 21 may measure a second part of the surface of the workpiece W that has been already processed by the processing light EL in at least a part of a period during which the processing head 12 irradiates a first part of the surface of the workpiece W with the processing light EL. Alternatively, the measurement of the workpiece W by the measurement head 21 may be performed in a state where the processing of the workpiece W by the processing head 12 is stopped.

Then, the control apparatus 4 determines based on the workpiece measurement information related to the measured result of the workpiece W by the measurement head 21 at the step S14 whether or not the processed amount of the workpiece W is proper (a step S15). Namely, the control apparatus 4 determines whether or not the processed amount of the workpiece W based on the processing condition set at the step S12 is a proper amount that is set in advance or is expected.

As a result of the determination at the step S15, when it is determined that the processed amount of the workpiece W is not proper (the step S15: No), the control apparatus 4 set the processing condition again so that the processed amount of the workpiece W is proper based on the workpiece measurement information related to the measured result of the workpiece W by the measurement head 21 at the step S14 (a step S16). On the other hand, as a result of the determination at the step S15, when it is determined that the processed amount of the workpiece W is proper (the step S15: Yes), the control apparatus 4 may not set the processing condition again. Then, the processing system SYS repeats the operation from the step S13 to the step S16 until the processing of the workpiece W is completed.

In this manner, in the present example embodiment, the processing system SYS preliminary measures the workpiece W that is not yet processed at the step S11, processes the workpiece W based on a preliminary measured result of the workpiece W at the step S13, measures the workpiece W that has been processed ex post facto at the step S14 and sets the processing condition again based on the ex post facto measured result of the workpiece W at the step S16. Thus, the processing system SYS is capable of properly processing the workpiece W. Especially, the processing system SYS is capable of performing the operation from the step S11 to the step S17 without detaching the workpiece W from the chuck 353, because the processing system SYS includes both of the processing head 12 and the measurement head 21.

### (2-2) Axis Information Generation Operation

Next, an axis information generation operation for generating the rotational axis information related to the rotational axis 3522 of the rotation apparatus 35 by using the measurement apparatus 2 will be described. In the present example embodiment, the processing system SYS may perform at least one of a first axis information generation operation to a third axis information generation operation. The first axis information generation operation is an operation for generating, as the rotational axis information, an assembly error information related to a misalignment between the extending direction of the rotational axis 3522 and the moving direction of the stage 32. In the below described description, the misalignment between the extending direction of the rotational axis 3522 and the moving direction of the stage 32 is referred to as an "assembly error (namely, an assembly error of the rotation apparatus 35 relative to the stage 32)". The second axis information generation operation is an operation for generating, as the rotational axis information, a sweeping error information related to a misalignment between the extending direction of the rotational axis 3522 and a moving direction of the irradiation position of the processing light EL (namely, a sweeping direction of the processing light EL) on the surface of the workpiece W by the Galvano mirror 1214. In the below described description, the misalignment between the extending direction of the rotational axis 3522 and the sweeping direction of the processing light EL by the Galvano mirror 1214 is referred to as a "sweeping error". The third axis information generation operation is an operation for generating, as the rotational axis information, a chucking error information related to a misalignment between the rotational axis 3522 and the workpiece W held by the chuck 353. In the below described description, the misalignment between the rotational axis 3522 and the workpiece W held by the chuck 353 is referred to as a "chucking error". Next, the first to third axis information generation operations will be described in order.

Note that the rotational axis information may be regarded to be an information related to at least one of a position and an attitude of the rotational axis 3522 (eventually, at least one of a position and an attitude of the rotation apparatus 35). For example, the assembly error information may be regarded to be the information related to at least one of the position and the attitude of the rotational axis 3522 (eventually, at least one of the position and the attitude of the rotation apparatus 35) relative to the moving direction of the stage 32. For example, the sweeping error information may be regarded to be the information related to at least one of the position and the attitude of the rotational axis 3522 (eventually, at least one of the position and the attitude of the rotation apparatus 35) relative to the sweeping direction of the processing light EL. For example, the chucking error information may be regarded to be the information related to at least one of the position and the attitude of the rotational axis 3522 (eventually, at least one of the position and the attitude of the rotation apparatus 35) relative to the workpiece W. In this case, the control apparatus 4 may be regarded to control at least one of the processing apparatus 1 (for example, the processing head 12) and the stage apparatus 3 (for example, the rotation apparatus 35) based on the information related to at least one of the position and the attitude of the rotational axis 3522 (eventually, at least one of the position and the attitude of the rotation apparatus 35) in order to process the workpiece W.

### (2-2-1) First Axis Information Generation Operation (Assembly Error)

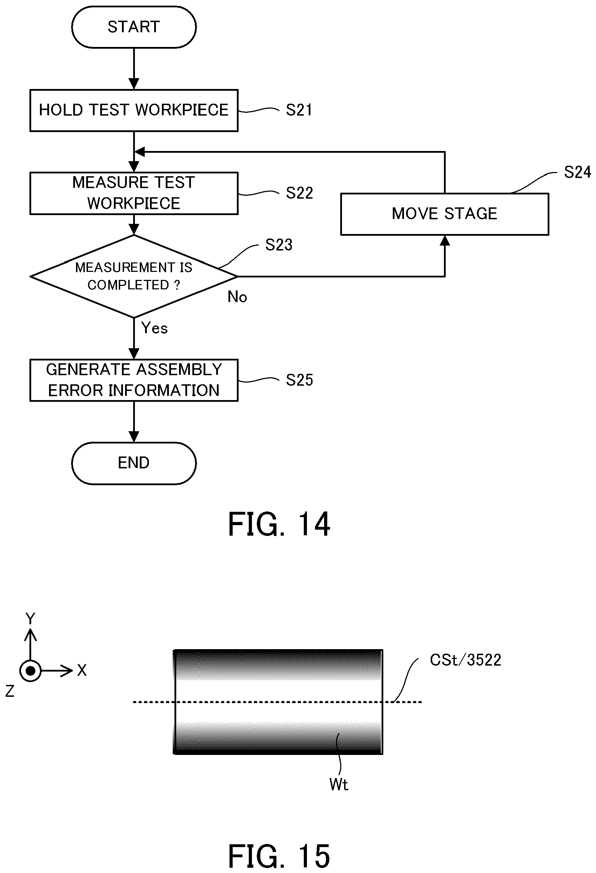

Firstly, the first axis information generation operation is an operation for generating the assembly error information related to the assembly error that is the misalignment between the extending direction of the rotational axis 3522 and the moving direction of the stage 32 will be described. Ideally, the extending direction of the rotational axis 3522 is parallel to (alternatively, is coincident with) the moving direction of the stage 32. For example, in the present example embodiment, since the rotational axis 3522 is an axis extending along the X axis direction, the extending direction of the rotational axis 3522 is parallel to (alternatively, is coincident with) the X axis in a stage coordinate system that is used to control the position of the stage 32. However, actually, there is a possibility that the extending direction of the rotational axis 3522 is not parallel to (alternatively, is not coincident with) the moving direction of the stage 32, because of an assembly accuracy for disposing the rotation apparatus 35 on the stage 32 or an assembly accuracy for attaching the chuck 353 to the rotational shaft 352. Moreover, there is a possibility that the extending direction of the rotational axis 3522 is not parallel to (alternatively, is not coincident with) the moving direction of the stage 32, because of a moving accuracy of the stage 32. Thus, the processing system SYS generates the assembly error information related to the misalignment between the extending direction of the rotational axis 3522 and the moving direction of the stage 32 (namely, the assembly error) by performing the first axis information generation operation. Next, with reference to FIG. 14, the first axis information generation operation will be described. FIG. 14 is a flowchart that illustrates a flow of the first axis information generation operation.

As illustrated in FIG. 14, a workpiece for a test (hereinafter, it is referred to as a "test workpiece Wt") for performing the first axis information generation operation is held by the chuck 353 (a step S21). In this case, the test workpiece Wt is held by the chuck 353 so that a central axis CSt of the test workpiece Wt is coincident with the rotational axis 3522. Note that a workpiece W whose roundness and straightness are known is used as the test workpiece Wt.

The test workpiece Wt is a workpiece having a shape that allows the central axis CSt of the test workpiece Wt to be calculated from a measured result of the test workpiece Wt by the measurement apparatus 2, for example. The test workpiece Wt having a cylindrical shape is one example of the test workpiece Wt. FIG. 15 illustrates a height image that is one example of the measured result of the test workpiece Wt having the cylindrical shape by the measurement apparatus 2. In the height image illustrated in FIG. 15 and FIG. 17B, FIG. 17D, FIG. 19, FIG 21B and FIG 21D described later, a contrasting density represents a height information, a light-colored part indicates that the height of this part is high (+Z axis side) and a light-colored part indicates that the height of this part is low (+Z axis side). As illustrated in FIG. 15, the height image of the test workpiece Wt is an image in which the test workpiece W is included in a state where a part along the central axis CSt is higher than another part other than the part along the central axis CSt. The control apparatus 4 is capable of calculating the central axis CSt of the test workpiece Wt from the measured result of the test workpiece Wt by the measurement apparatus 2, because the shape of the test workpiece Wt is an ideal cylindrical shape. The calculated central axis CSt is usable as the rotational axis 3522. This is because the test workpiece Wt is held by the chuck 353 so that the central axis CSt of the test workpiece Wt is coincident with the rotational axis 3522. Incidentally, when the workpiece W that is a processing target is usable as the test workpiece Wt, the workpiece W may be held by the chuck 353 instead of the test workpiece Wt at the step S21.

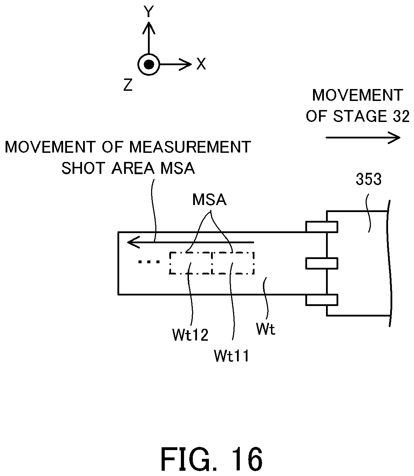

Then, the processing system SYS repeats an operation for measuring a part of the test workpiece Wt by using the measurement apparatus 2 (a step S22) and an operation for moving the stage 32 (a step S24) until the operation for measuring a part of the test workpiece Wt is performed the necessary number of times. Specifically, for example, as illustrated in FIG. 16 that is a top view illustrating the test workpiece Wt, the measurement apparatus 2 sets the measurement shot area MSA on a first measurement target part Wt11 of the surface of the test workpiece Wt and measures the first measurement target part Wt11. Then, the processing system SYS moves the stage 32 along one direction. For example, the processing system SYS moves the stage 32 along the one direction that is parallel to a direction along which the rotational axis 3522 should extend. For example, when the rotational axis 3522 should extend along the X axis direction, the processing system SYS moves the stage 32 along the X axis direction in the stage coordinate system. Due to the movement of the stage 32, the measurement shot area MSA moves on the surface of the test workpiece Wt. In this case, the processing system SYS moves the stage 32 so that the measurement shot area MSA is set on a second measurement target part Wt12 that is adjacent to the first measurement target part Wt11 on the surface of the test workpiece Wt. Then, the measurement apparatus 2 measures the second measurement target part Wt12. Then, the same operation is repeated until the operation for measuring a part of the test workpiece Wt is performed the necessary number of times.

Then, the control apparatus 4 generates the assembly error information based on the measured result of the test workpiece Wt at the step S22 (a step S25). Here, with reference to FIG. 17A to FIG. 17D, an operation for generating the assembly error information will be described.

FIG. 17A illustrates the ideal test workpiece Wt in which an extending direction of the rotational axis 3522 (namely, an extending direction of the central axis CSt) is parallel to (alternatively, is coincident with) the moving direction of the stage 32. FIG. 17B illustrates the height image that corresponds to the measured result of this test workpiece Wt. This height image corresponds to an image that is generated by combining a plurality of images, which correspond to the plurality of measured results of the test workpiece Wt, along a moving direction of the measurement shot area MSA. As illustrated in FIG. 17B, the control apparatus 4 may calculate the rotational axis 3522 (the central axis CSt) based on the test workpiece Wt included in the height image. Namely, the control apparatus 4 may obtain an information related to the rotational axis 3522. Furthermore, the height image of the test workpiece Wt is an image that extends along the moving direction of the stage 32, because the measurement shot area MSA moves along with the movement of the stage 32. Therefore, the control apparatus 4 may calculate the moving direction of the stage 32 based on the height image itself. Specifically, the control apparatus 4 may calculate, as the moving direction of the stage 32, a direction along which the plurality of images corresponding to the plurality of measured results of the test workpiece Wt are combined (namely, a longitudinal direction of the height image). In an example illustrated in FIG. 17B, since the extending direction of the rotational axis 3522 is parallel to (alternatively, is coincident with) the moving direction of the stage 32, the extending direction of the rotational axis 3522 calculated by the control apparatus 4 is parallel to (alternatively, is coincident with) the moving direction of the stage 32 calculated by the control apparatus 4.

On the other hand, FIG. 17C illustrates the test workpiece Wt in which the extending direction of the rotational axis 3522 (namely, the extending direction of the central axis CSt) is not parallel to (alternatively, is not coincident with) the moving direction of the stage 32. FIG. 17D illustrates the height image that corresponds to the measured result of this test workpiece Wt. As illustrated in FIG. 17D, in this case, the extending direction of the rotational axis 3522 calculated by the control apparatus 4 is not parallel to (alternatively, is not coincident with) the moving direction of the stage 32 calculated by the control apparatus 4.

Thus, the control apparatus 4 is capable of calculating a relationship (especially, the misalignment) between the extending direction of the rotational axis 3522 and the moving direction of the stage 32. As a result, the control apparatus 4 is capable of generating the assembly error information related to the misalignment between the extending direction of the rotational axis 3522 and the moving direction of the stage 32.

Incidentally, in the above described example illustrated in FIG. 17, the control apparatus 4 calculates the rotational axis 3522 (the central axis CSt) by using the height image corresponding to the measured result of the test workpiece Wt. However, the control apparatus 4 may calculate the rotational axis 3522 (the central axis CSt) by using an outline of the test workpiece Wt in addition to or instead of it. In this case, the control apparatus 4 may calculate, as the rotational axis 3522 (the central axis CSt), a median line of two sides of the outline of the test workpiece Wt each of which extends along the X axis direction. In this case, as described below, the processing system SYS may repeat the operation for measuring a part of the test workpiece Wt and the operation for moving the stage 32 along another direction (for example, the Y axis direction) intersecting with the direction along which the rotational axis 3522 should extend.

Moreover, the assembly error information includes an information related to an assembly error of the chuck 353 relative to the rotational shaft 352. In this case, the processing system SYS may perform the operation illustrated in FIG. 14, then rotate the rotation apparatus 35 by a predetermined angle (for example, 60 degree), then perform the operation illustrated in FIG. 14. The control apparatus 4 may repeat this operation a predetermine number of times (for example, repeat this operation six times, in this case, the operation illustrated in FIG. 14 is performed every time the rotational angle of the rotational shaft 352 is 0 degree, 60 degree, 120 degree, 180 degree, 240 degree and 300 degree), and calculate a misalignment of the central axis CSt due to the assembly error by averaging the result of the operation illustrated in FIG. 14 that has been performed the predetermine number of times. Incidentally, when the measurement of the test workpiece Wt is repeated a plurality of number of times while rotating the test workpiece Wt, an influence of a flexure of the test workpiece Wt due to its own weight.

The generated assembly error information may be used by the control apparatus 4 in order to perform the above described processing operation. Namely, the assembly error information may be used by the control apparatus 4 in a processing period during which the workpiece W is processed by irradiating the workpiece W with the processing light EL. Specifically, the control apparatus 4 may control the processing system SYS based on the assembly error information to process the workpiece W in a same manner as a case where there is no misalignment between the extending direction of the rotational axis 3522 and the moving direction of the stage 32 even when there is the misalignment between the extending direction of the rotational axis 3522 and the moving direction of the stage 32. For example, the control apparatus 4 may control at least one of the processing head 12 (especially, the Galvano mirror 1214) and the stage 32 based on the assembly error information so that the irradiation position of the processing light EL moves on the surface of the workpiece W in a same manner as a case where there is no misalignment between the extending direction of the rotational axis 3522 and the moving direction of the stage 32 even when there is the misalignment between the extending direction of the rotational axis 3522 and the moving direction of the stage 32. Typically, the control apparatus 4 may control at least one of the processing head 12 (especially, the Galvano mirror 1214) and the stage 32 based on the assembly error information so that the irradiation position of the processing light EL on the surface of the workpiece W moves along the extending direction of the rotational axis 3522. As a result, the processing system SYS is capable of processing the workpiece W more accurately, compared to a case where the assembly error information is not used. Note that the first axis information generation operation may be performed prior to the processing operation, because the control apparatus 4 uses the assembly error information in the processing period during which the workpiece W is processed by irradiating the workpiece W with the processing light EL.

The rotation apparatus 35 may be assembled on the stage 32 again based on the assembly error information, in addition to or instead of controlling at least one of the processing head 12 (especially, the Galvano mirror 1214) and the stage 32 based on the assembly error information by the control apparatus 4. Typically, the rotation apparatus 35 may be assembled on the stage 32 again so that the extending direction of the rotational axis 3522 is parallel to (alternatively, is coincident with) the moving direction of the stage 32. In this case, the processing system SYS is capable of processing the workpiece W more accurately, because the misalignment between the extending direction of the rotational axis 3522 and the moving direction of the stage 32 is canceled.

Incidentally, in the above described description, the processing system SYS repeats the operation for measuring a part of the test workpiece Wt and the operation for moving the stage 32 along one direction (the X axis direction in the above described example) parallel to the direction along which the rotational axis 3522 should extend in order to generate the assembly error information. However, the processing system SYS may repeat the operation for measuring a part of the test workpiece Wt and the operation for moving the stage 32 along another direction (the Y axis direction in the above described example) intersecting with the direction along which the rotational axis 3522 should extend. Even in this case, the processing system SYS is capable of generating the assembly error information related to the misalignment between the extending direction of the rotational axis 3522 and the moving direction of the stage 32.

Moreover, in the above described description, the test workpiece Wt is held by the chuck 353 so that the central axis CSt of the test workpiece Wt is coincident with the rotational axis 3522. However, actually, there is a possibility that the chuck 353 cannot hold the test workpiece Wt so that the central axis CSt of the test workpiece Wt is always coincident with the rotational axis 3522. Thus, the chuck 353 may hold the test workpiece Wt again every time the first axis information generation operation illustrated in FIG. 14 is completed. Namely, the test workpiece Wt may be detached from the chuck 353 and then the test workpiece Wt may be held by the chuck 353 again every time the first axis information generation operation illustrated in FIG. 14 is completed. After the chuck 353 holds the test workpiece Wt again, the processing system SYS may perform the first axis information generation operation illustrated in FIG. 14 again. As a result, a plurality of assembly errors are calculated by the first axis information generation operation performed a plurality of number of times. The control apparatus 4 may generate the assembly error information based on the plurality of assembly errors calculated in this manner. For example, the control apparatus 4 may generate the assembly error information related to an average value of the plurality of assembly errors. As a result, an influence caused by a mismatch between the central axis CSt of the test workpiece Wt and the rotational axis 3522 is reduced.

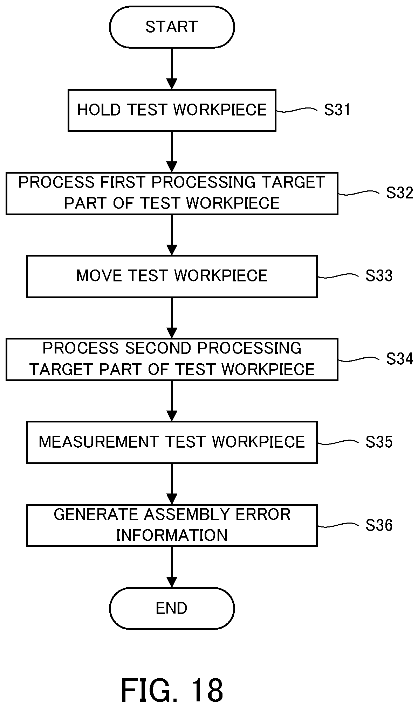

Moreover, the misalignment between the extending direction of the rotational axis 3522 and the moving direction of the stage 32 may be regarded to be equivalent to a misalignment between the rotational axis 3522 and a moving plane of the stage 32. Thus, the assembly error may be referred to as a stage moving error. Considering that the assembly error may be regarded to be equivalent to the stage moving error, the processing system SYS may generate the assembly error information (namely, a stage moving error information related to the stage moving error) by performing an operation illustrated in FIG. 18 in addition to or instead of the operation illustrated in FIG. 14.

Specifically, as illustrated in FIG. 18, the test workpiece Wt is held by the chuck 353 (a step S31). Incidentally, when the workpiece W that is the processing target is usable as the test workpiece Wt, the workpiece W may be held by the chuck 353 instead of the test workpiece Wt at the step S31.

Then, the processing system SYS processes a plurality of parts of the surface of the test workpiece Wt. Specifically, firstly, the processing system SYS sets the processing shot area PSA on a first processing target part of the surface of the test workpiece Wt, and processes at least a part of the first processing target part (a step S32). Then, the processing system SYS moves the stage 32 along one direction. For example, the processing system SYS moves the stage 32 along the one direction that is parallel to a direction along which the rotational axis 3522 should extend (a step S33). For example, when the rotational axis 3522 should extend along the X axis direction, the processing system SYS moves the stage 32 along the X axis direction in the stage coordinate system. Due to the movement of the stage 32, the processing shot area PSA moves on the surface of the test workpiece Wt. In this case, the processing system SYS moves the stage 32 so that the processing shot area PSA is set on a second processing target part that is adjacent to the first processing target part on the surface of the test workpiece Wt. Then, the processing system SYS processes at least a part of the second processing target part (a step S34). In this case, the irradiation position of the processing light EL in the processing shot area PSA when at least a part of the second processing target part is same as the irradiation position of the processing light EL in the processing shot area PSA when at least a part of the first processing target part. Thus, a processed mark in the second processing target part is located at a position that is away from the a processed mark in the first processing target part along the moving direction of the stage 32 at the step S33 by a moving distance of the stage 32 at the step S33. Note that FIG. 18 illustrates an example in which two parts of the surface of the test workpiece Wt are processed, however, three or more parts of the surface of the test workpiece Wt may be processed.

Then, the measurement apparatus 2 measures the surface of the test workpiece Wt (especially, the parts that have been processed at the steps S32 and S34, the processed marks) (a step S35).

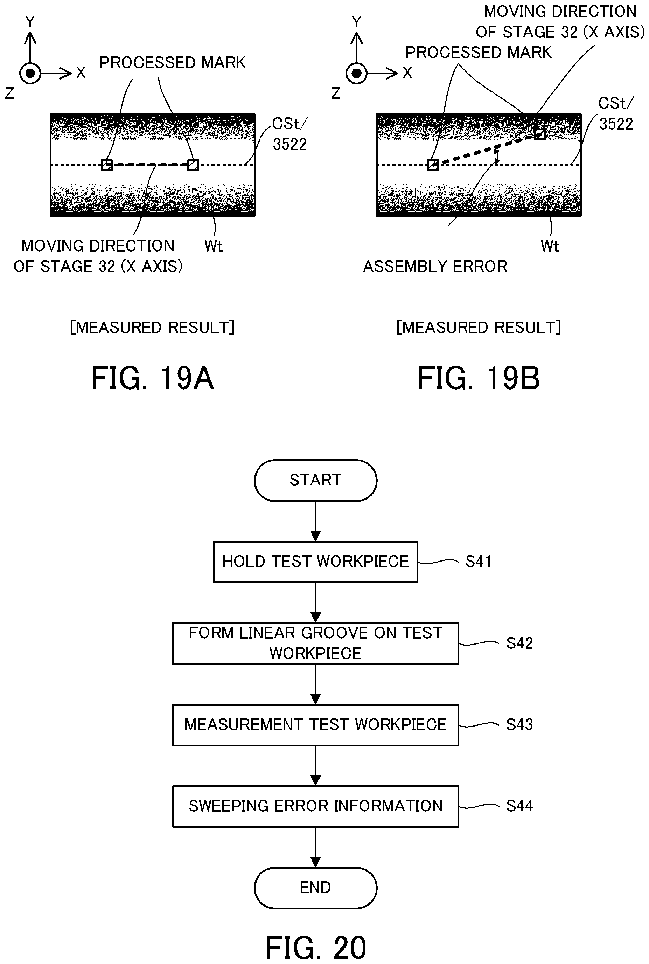

Then, the control apparatus 4 generates the assembly error information based on the measured result of the test workpiece W at the step S22 (a step S36). Here, with reference to FIG. 19A to FIG. 19B, an operation for generating the assembly error information will be described.

FIG. 19A illustrates the ideal test workpiece Wt in which the extending direction of the rotational axis 3522 is parallel to (alternatively, is coincident with) the moving direction of the stage 32. As illustrated in FIG. 19A, the control apparatus 4 may calculate the rotational axis 3522 based on the test workpiece Wt included in the height image. Furthermore, the plurality of processed marks are away from each other along the moving direction of the stage 32. Thus, the control apparatus 4 may calculate the moving direction of the stage 32 based on a relative positional relationship between the plurality of processed marks included in the height image. Specifically, the control apparatus 4 may calculate, as the moving direction of the stage 32, a direction along a line that connects the plurality of processed marks. In an example illustrated in FIG. 19A, since the extending direction of the rotational axis 3522 is parallel to (alternatively, is coincident with) the moving direction of the stage 32, the extending direction of the rotational axis 3522 calculated by the control apparatus 4 is parallel to (alternatively, is coincident with) the moving direction of the stage 32 calculated by the control apparatus 4.

On the other hand, FIG. 19B illustrates the test workpiece Wt in which the extending direction of the rotational axis 3522 is not parallel to (alternatively, is not coincident with) the moving direction of the stage 32. As illustrated in FIG. 19B, in this case, the extending direction of the rotational axis 3522 calculated by the control apparatus 4 is not parallel to (alternatively, is not coincident with) the moving direction of the stage 32 calculated by the control apparatus 4.

Thus, the control apparatus 4 is capable of calculating the relationship (especially, the misalignment) between the extending direction of the rotational axis 3522 and the moving direction of the stage 32. As a result, the control apparatus 4 is capable of generating the assembly error information related to the misalignment between the extending direction of the rotational axis 3522 and the moving direction of the stage 32.

### (2-2-2) Second Axis Information Generation Operation (Sweeping Error)

Next, the second axis information generation operation for generating the sweeping error information related to the sweeping error that is the misalignment between the extending direction of the rotational axis 3522 and the sweeping direction of the processing light EL by the Galvano mirror 1214 will be described. Ideally, the extending direction of the rotational axis 3522 is parallel to (alternatively, is coincident with) the sweeping direction of the processing light EL. For example, in the present example embodiment, since the rotational axis 3522 is the axis extending along the X axis direction, the extending direction of the rotational axis 3522 is parallel to (alternatively, is coincident with) the sweeping direction of the processing light EL by the X sweeping mirror 1214X of the Galvano mirror 1214. However, actually, there is a possibility that the extending direction of the rotational axis 3522 is not parallel to (alternatively, is not coincident with) the sweeping direction of the processing light EL by the Galvano mirror 1214, because of the assembly accuracy for disposing the rotation apparatus 35 on the stage 32 or the assembly accuracy for attaching the chuck 353 to the rotational shaft 352. Moreover, there is a possibility that the extending direction of the rotational axis 3522 is not parallel to (alternatively, is not coincident with) the sweeping direction of the processing light EL, because of an assembly error or a sweeping accuracy of the Galvano mirror 1214. Thus, the processing system SYS generated the sweeping error information related to the misalignment between the extending direction of the rotational axis 3522 and the sweeping direction of the processing light EL (namely, the sweeping error) by performing the second axis information generation operation. Incidentally, when the extending direction of the rotational axis 3522 is parallel to the sweeping direction of the processing light EL by the Galvano mirror 1214, the second axis information generation operation may be omitted. Next, with reference to FIG. 20, the second axis information generation operation will be described. FIG. 20 is a flowchart that illustrates a flow of the second axis information generation operation.

As illustrated in FIG. 20, the test workpiece Wt for performing the second axis information generation operation is held by the chuck 353 (a step S41). In this case, the test workpiece Wt is held by the chuck 353 so that the central axis CSt of the test workpiece Wt is coincident with the rotational axis 3522. Note that the test workpiece Wt for performing the second axis information generation operation may be same as the test workpiece Wt for performing the first axis information generation operation. When the workpiece W that is the processing target is usable as the test workpiece Wt, the workpiece W may be held by the chuck 353 instead of the test workpiece Wt at the step S41.

Then, the processing system SYS forms a linear groove GV (see FIG. 21A) on the surface of the test workpiece Wt by deflecting the processing light EL by using the Galvano mirror 1214 (a step S42). Specifically, for example, the processing system SYS forms the linear groove GV extending along one direction on the surface of the test workpiece Wt by controlling the Galvano mirror 1214 so that the irradiation position of the processing light EL moves on the surface of the test workpiece Wt along the one direction along that is parallel to the direction along which the rotational axis 3522 should extend. For example, when the rotational axis 3522 should extend along the X axis direction, the processing system SYS forms the linear groove GV extending along the X axis direction on the surface of the test workpiece Wt by controlling the X sweeping mirror 1214X. The processing head 12 and the stage 32 do not move in a period during which the test workpiece Wt is irradiated with the processing light EL to form the groove GV

Then, the measurement apparatus 2 measures the surface of the test workpiece Wt (especially, a part on which the groove GV has been formed at the steps S42 and S34, the processed mark) (a step S43).

Then, the control apparatus 4 generates the sweeping error information based on the measured result of the test workpiece W at the step S42 (a step S44). Here, with reference to FIG. 21A to FIG. 21D, an operation for generating the sweeping error information will be described.

FIG. 21A illustrates the ideal test workpiece Wt in which the extending direction of the rotational axis 3522 (namely, the extending direction of the central axis CSt) is parallel to (alternatively, is coincident with) the sweeping direction of the processing light EL. FIG. 21B illustrates the height image that corresponds to the measured result of this test workpiece Wt. As illustrated in FIG. 21B, the control apparatus 4 may calculate the rotational axis 3522 (the central axis CSt) based on the test workpiece Wt included in the height image. Furthermore, the control apparatus 4 may calculate the sweeping direction of the processing light EL based on an extending direction of the groove GV included in the height image. This is because the groove GV extends along the sweeping direction of the processing light EL and thus the extending direction of the groove GV is same as the sweeping direction of the processing light EL. In an example illustrated in FIG. 21B, since the extending direction of the rotational axis 3522 is parallel to (alternatively, is coincident with) the sweeping direction of the processing light EL, the extending direction of the rotational axis 3522 calculated by the control apparatus 4 is parallel to (alternatively, is coincident with) the sweeping direction of the processing light EL calculated by the control apparatus 4.

On the other hand, FIG. 21C illustrates the test workpiece Wt in which the extending direction of the rotational axis 3522 (namely, the extending direction of the central axis CSt) is not parallel to (alternatively, is not coincident with) the sweeping direction of the processing light EL. FIG. 21D illustrates the height image that corresponds to the measured result of this test workpiece Wt. As illustrated in FIG. 21D, in this case, the extending direction of the rotational axis 3522 calculated by the control apparatus 4 is parallel to (alternatively, is coincident with) the sweeping direction of the processing light EL calculated by the control apparatus 4.

Thus, the control apparatus 4 is capable of calculating the relationship (especially, the misalignment) between the extending direction of the rotational axis 3522 and the weeping direction of the processing light EL. As a result, the control apparatus 4 is capable of generating the sweeping error information related to the misalignment between the extending direction of the rotational axis 3522 and the weeping direction of the processing light EL.

Incidentally, in the above described example illustrated in FIG. 21, the control apparatus 4 calculates the rotational axis 3522 (the central axis CSt) by using the height image corresponding to the measured result of the test workpiece Wt. However, the control apparatus 4 may calculate the rotational axis 3522 (the central axis CSt) by using the outline of the test workpiece Wt in addition to or instead of it. In this case, the control apparatus 4 may calculate, as the rotational axis 3522 (the central axis CSt), the median line of two sides of the outline of the test workpiece Wt each of which extends along the X axis direction. In this case, as described below, the processing system SYS may repeat the operation for measuring a part of the test workpiece Wt and the operation for moving the stage 32 along another direction (for example, the Y axis direction) intersecting with the direction along which the rotational axis 3522 should extend.

Moreover, the processing system SYS may perform the operation illustrated in FIG. 20, then rotate the rotation apparatus 35 by a predetermined angle (for example, 60 degree), then perform the operation illustrated in FIG. 20. The control apparatus 4 may repeat this operation a predetermine number of times (for example, repeat this operation six times, in this case, the operation illustrated in FIG. 20 is performed every time the rotational angle of the rotational shaft 352 is 0 degree, 60 degree, 120 degree, 180 degree, 240 degree and 300 degree), and calculate the sweeping error information by averaging the result of the operation illustrated in FIG. 20 that has been performed the predetermine number of times. Incidentally, when the measurement of the test workpiece Wt is repeated a plurality of number of times while rotating the test workpiece Wt, an influence of a flexure of the test workpiece Wt due to its own weight.

Note that the processing system SYS may detach the test workpiece Wt from the chuck 353 after performing the above described operation illustrated in FIG. 20, and then, perform the operation illustrated in FIG. 20 after the test workpiece Wt is held by the chuck 353 again.

The generated sweeping error information may be used by the control apparatus 4 in order to perform the above described processing operation. Namely, the sweeping error information may be used by the control apparatus 4 in the processing period during which the workpiece W is processed by irradiating the workpiece W with the processing light EL. Specifically, the control apparatus 4 may control the processing system SYS based on the sweeping error information to process the workpiece W in a same manner as a case where there is no misalignment between the extending direction of the rotational axis 3522 and the sweeping direction of the processing light EL even when there is the misalignment between the extending direction of the rotational axis 3522 and the sweeping direction of the processing light EL. For example, the control apparatus 4 may control at least one of the processing head 12 (especially, the Galvano mirror 1214) and the stage 32 based on the sweeping error information so that the irradiation position of the processing light EL moves on the surface of the workpiece W in a same manner as a case where there is no misalignment between the extending direction of the rotational axis 3522 and the sweeping direction of the processing light EL even when there is the misalignment between the extending direction of the rotational axis 3522 and the sweeping direction of the processing light EL. Typically, the control apparatus 4 may control at least one of the processing head 12 (especially, the Galvano mirror 1214) and the stage 32 based on the sweeping error information so that the irradiation position of the processing light EL on the surface of the workpiece W moves along the extending direction of the rotational axis 3522. Incidentally, when the stage 32 does not move in the processing period, the control apparatus 4 may control the processing head 12 (especially, the Galvano mirror 1214). As a result, the processing system SYS is capable of processing the workpiece W more accurately, compared to a case where the sweeping error information is not used. Note that the second axis information generation operation may be performed prior to the processing operation, because the control apparatus 4 uses the sweeping error information in the processing period during which the workpiece W is processed by irradiating the workpiece W with the processing light EL.

Incidentally, in the above described description, the processing system SYS controls the Galvano mirror 1214 so that the irradiation position of the processing light EL moves along one direction parallel to the direction along which the rotational axis 3522 should extend in order to generate the sweeping error information. However, the processing system SYS may control the Galvano mirror 1214 so that the irradiation position of the processing light EL moves along another intersecting with the direction along which the rotational axis 3522 should extend. For example, the processing system SYS may form the linear groove GV extending along the Y axis direction on the surface of the test workpiece Wt by controlling the Y sweeping mirror 1214Y. Even in this case, the processing system SYS is capable of generating the sweeping error information related to the misalignment between the extending direction of the rotational axis 3522 and the sweeping direction of the processing light EL.

Moreover, in the above described description, the test workpiece Wt is held by the chuck 353 so that the central axis CSt of the test workpiece Wt is coincident with the rotational axis 3522. However, actually as described above, there is a possibility that the chuck 353 cannot hold the test workpiece Wt so that the central axis CSt of the test workpiece Wt is always coincident with the rotational axis 3522. Thus, the chuck 353 may hold the test workpiece Wt again every time the second axis information generation operation illustrated in FIG. 20 is completed. Namely, the test workpiece Wt may be detached from the chuck 353 and then the test workpiece Wt may be held by the chuck 353 again every time the second axis information generation operation illustrated in FIG. 20 is completed. After the chuck 353 holds the test workpiece Wt again, the processing system SYS may perform the second axis information generation operation illustrated in FIG. 20 again. As a result, a plurality of sweeping errors are calculated by the second axis information generation operation performed a plurality of number of times. The control apparatus 4 may generate the sweeping error information based on the plurality of sweeping errors calculated in this manner. For example, the control apparatus 4 may generate the sweeping error information related to an average value of the plurality of sweeping errors. As a result, an influence caused by a mismatch between the central axis CSt of the test workpiece Wt and the rotational axis 3522 is reduced.

### (2-2-3) Third Axis Information Generation Operation (Chucking Error)

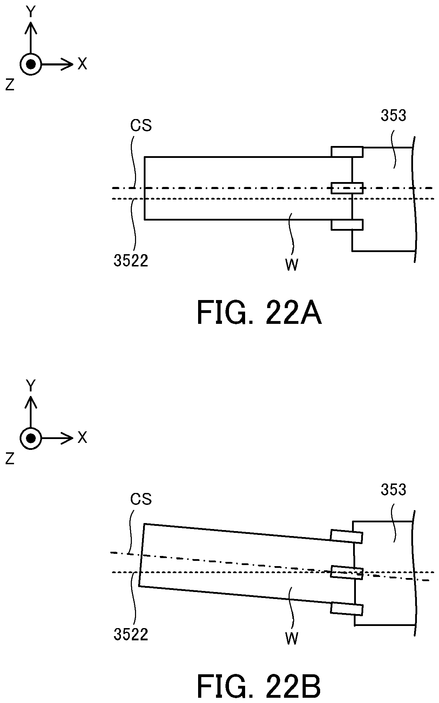

Next, the third axis information generation operation for generating the chucking error information related to the chucking error that is the misalignment between the rotational axis 3522 and the workpiece W held by the chuck 353. Ideally, the chuck 353 holds the workpiece W so that the rotational axis 3522 coincident with the central axis CS of the workpiece W. However, there is a possibility that the chuck 353 cannot hold the workpiece W so that the rotational axis 3522 coincident with the central axis CS of the workpiece W, because of an attaching accuracy of the workpiece W to the chuck 353. For example, as illustrated in FIG. 22A that is a top view illustrating the workpiece W having the chucking error, there is a possibility that the chuck 353 holds the workpiece W in a state where there is the chucking error that the rotational axis 3522 is parallel to but is not coincident with the central axis CS. For example, as illustrated in FIG. 22B that is a top view illustrating the workpiece W having the chucking error, there is a possibility that the chuck 353 holds the workpiece W in a state where there is the chucking error that the rotational axis 3522 is not parallel to the central axis CS. Note that the chucking error that the rotational axis 3522 is parallel to but is not coincident with the central axis CS is referred to as an "eccentricity error" for the convenience of description. The eccentricity error may be regarded to be an error related to a positional relationship between the rotational axis 3522 and the central axis CS. Moreover, the chucking error that the rotational axis 3522 is not parallel to the central axis CS is referred to as an "angular deviation error". The angular deviation error may be regarded to be an error related to an angular relationship between the rotational axis 3522 and the central axis CS. Thus, the processing system SYS may generate, as the chucking error information, an eccentricity error information related to the eccentricity error by performing the third axis information generation operation. The processing system SYS may generate, as the chucking error information, an angular deviation error information related to the angular deviation error by performing the third axis information generation operation. Next, an operation for generating the angular deviation error information and an operation for generating the angular deviation error information will be described in order.

### (2-2-3-1) Operation for Generating Eccentricity Error Information

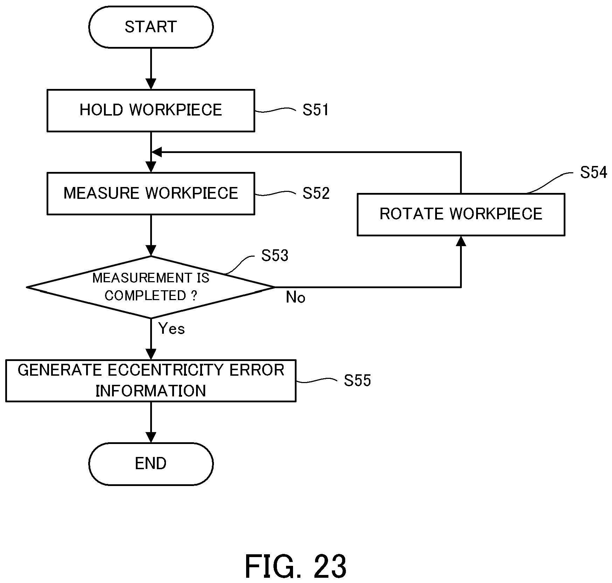

Firstly, with reference to FIG. 23, the operation for generating the eccentricity error information will be described. FIG. 23 is a flowchart that illustrates a flow of the operation for generating the eccentricity error information.

As illustrated in FIG. 23, the workpiece W is held by the chuck 353 (a step S51). Then, the processing system SYS repeats an operation for measuring a part of the workpiece W by using the measurement apparatus 2 (a step S52) and an operation for rotating the workpiece W by a predetermined angle by using the rotation apparatus 35 (a step S54) until the workpiece W is rotated by a necessary angle that is larger than the predetermined angle. For example, the necessary angle may be at least 360 degree. Namely, the processing system SYS repeats the operation for measuring a part of the workpiece W by using the measurement apparatus 2 (the step S52) and the operation for rotating the workpiece W by a predetermined angle by using the rotation apparatus 35 (the step S54) until the workpiece W is rotated at least one revolution. Here, the necessary angle may be equal to or larger than 360 degree or maybe equal to or smaller than 360 degree. Note that the processing head 12 may not move in a period during which the operation from the step S52 to the step S54 is performed.

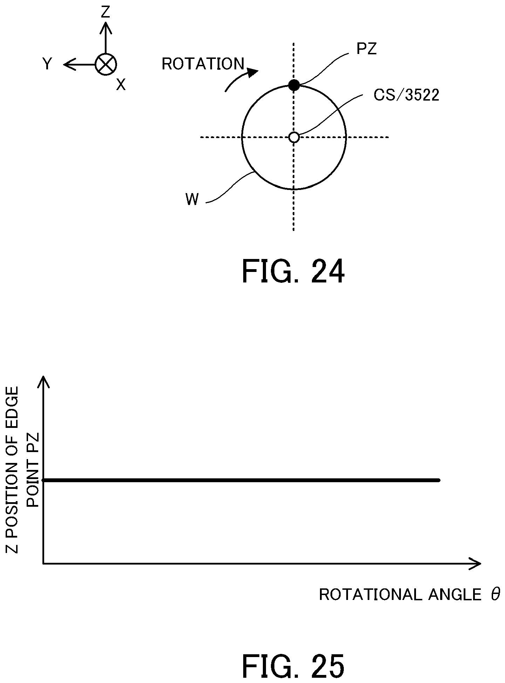

Then, the control apparatus 4 generates the eccentricity error information based on the measured result of the workpiece W at the step S52 (a step S55). Here, with reference to FIG. 24 to FIG. 29, an operation for generating the eccentricity error information will be described.

FIG. 24 is a cross-sectional view that illustrates an aspect in which the ideal workpiece W whose central axis CS is coincident with the rotational axis 3522 is rotated. As illustrated in FIG. 24, when the central axis CS is coincident with the rotational axis 3522, a position in one direction of an edge point (an edge part) of the surface of the workpiece W that is located at an edge along the one direction intersecting with the rotational axis 3522 does not vary even when the workpiece W is rotated by the rotation apparatus 35. In the below described description, an example in which an edge point PZ of the surface of the workpiece W that is located at an edge along the Z axis direction is used as the edge point will be described. In this case, as illustrated in FIG. 25 that is a graph illustrating a relationship between the position of the edge point PZ of the workpiece W illustrated in FIG. 24 in the Z axis direction and a rotational angle θ of the workpiece W, the position (namely, a height) of the edge point PZ in the Z axis direction does not vary even when the workpiece W is rotated by the rotation apparatus 35. Namely, the position (namely, the height) of the edge point PZ in the Z axis direction is a constant value regardless of the rotational angle θ.

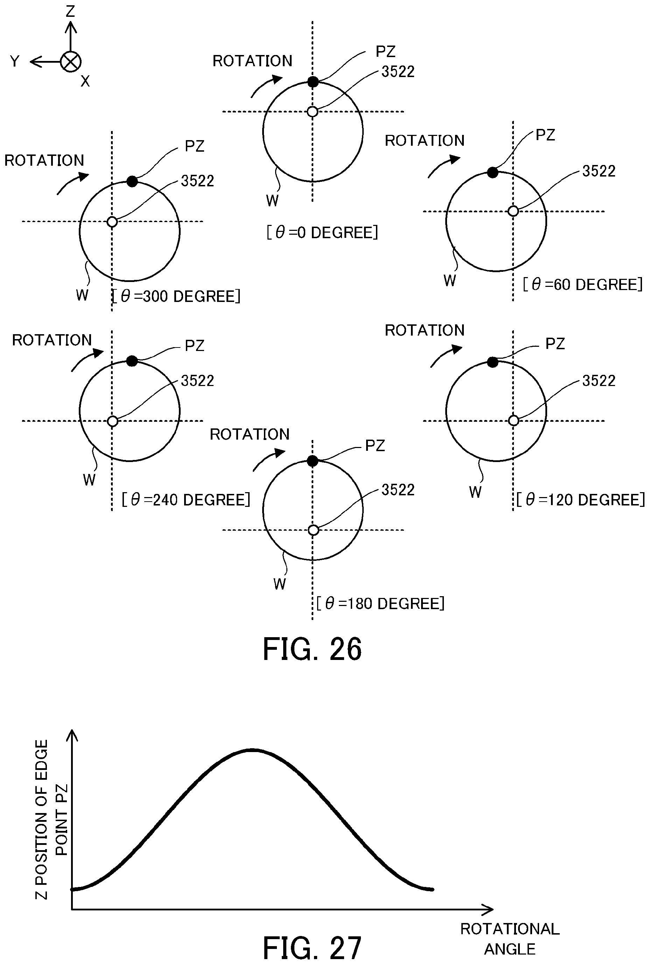

On the other hand, FIG. 26 is a cross-sectional view that illustrates an aspect in which the workpiece W whose central axis CS is parallel to but is not coincident with the rotational axis 3522 is rotated. As illustrated in FIG. 26, when the central axis CS is not coincident with the rotational axis 3522, the position in one direction of the edge point of the surface of the workpiece W that constitutes an edge part along the one direction intersecting with the rotational axis 3522 varies along with the rotation of the workpiece W when the workpiece W is rotated by the rotation apparatus 35. Specifically, as illustrated in FIG. 27 that is a graph illustrating a relationship between the position of the edge point PZ of the workpiece W illustrated in FIG. 26 in the Z axis direction and the rotational angle θ of the workpiece W, the position (namely, the height) of the edge point PZ in the Z axis direction varies in a sine-wave manner along with the rotation of the workpiece W when the workpiece W is rotated by the rotation apparatus 35. Namely, the position of the edge point PZ in the Z axis direction is a value that varies in the sine-wave manner depending on the rotational angle θ. In this case, the varied amount of the position of the edge point PZ in the Z axis direction (namely, a difference between a maximum value and a minimum value of the position of the edge point PZ in the Z axis direction) is larger as an amount of the eccentricity error that corresponds to a distance between the central axis CS and the rotational axis 3522 is larger.

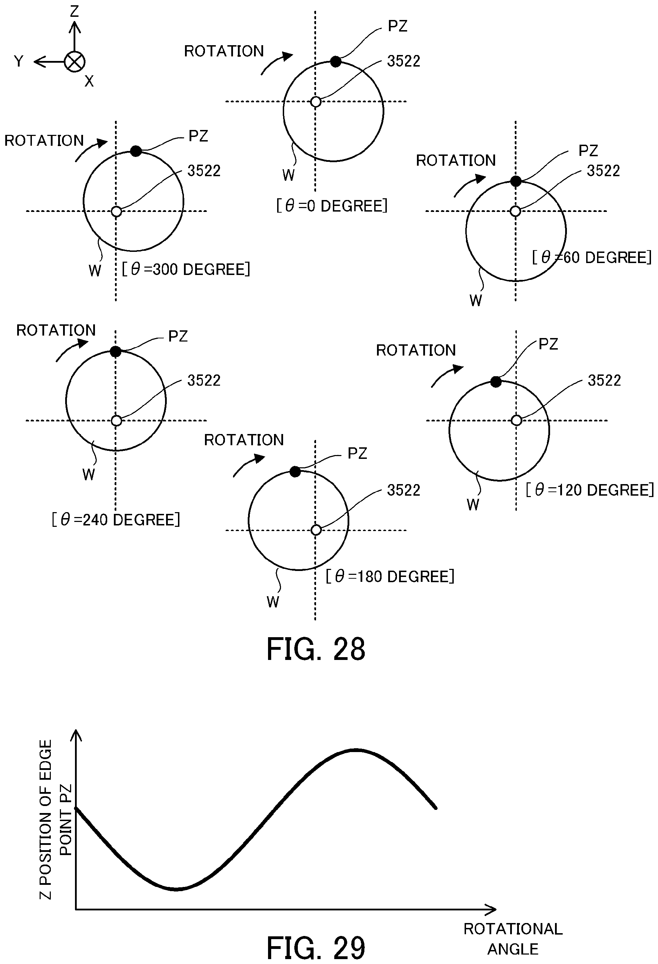

FIG. 28 is also a cross-sectional view that illustrates an aspect in which the workpiece W whose central axis CS is parallel to but is not coincident with the rotational axis 3522 is rotated, as with FIG. 26. However, an example illustrated in FIG. 28 is different from an example illustrated in FIG. 26 in which the edge point PZ is away from the rotational axis 3522 along only the Z axis direction in a situation where the rotational angle θ is 0 degree in that the edge point PZ is away from the rotational axis 3522 along not only the Z axis direction but also the Y axis direction intersecting with the Z axis direction in a situation where the rotational angle θ is 0 degree. In this case, as illustrated in FIG. 29 that is a graph illustrating a relationship between the position of the edge point PZ of the workpiece W illustrated in FIG. 28 in the Z axis direction and the rotational angle θ of the workpiece W, the position (namely, the height) of the edge point PZ in the Z axis direction varies in a sine-wave manner along with the rotation of the workpiece W when the workpiece W is rotated by the rotation apparatus 35. However, the variation of the position of the edge point PZ in the Z axis direction illustrated in FIG. 29 is different from the variation of the position of the edge point PZ in the Z axis direction illustrated in FIG. 27 in that phases of the variation are different from each other.

Thus, the control apparatus 4 may calculate the eccentricity error by calculating the relationship between the position of the edge point PZ of the workpiece W in the Z axis direction and the rotational angle θ of the workpiece W based on the measured result of the workpiece W by the measurement apparatus 2. Specifically, the control apparatus 4 may calculate the varied amount of the position of the edge point PZ in the Z axis direction based on the relationship between the position of the edge point PZ in the Z axis direction and the rotational angle θ, and calculate the distance between the central axis CS and the rotational axis 3522 (namely, the eccentricity error) based on the varied amount. Furthermore, the control apparatus 4 may calculate the phase of the variation of the position of the edge point PZ of the workpiece W in the Z axis direction based on the relationship between the position of the edge point PZ of the workpiece W in the Z axis direction and the rotational angle θ, and calculate a state of the workpiece W depending on the rotational angle θ of the workpiece W (specifically, an information related to a direction in which the central axis CS of the workpiece W is located relative to the rotational axis 3522) based on the phase. Namely, the control apparatus 4 may generate the eccentricity error information related to the eccentricity error that is a misalignment between the central axis CS of the workpiece W and the rotational axis 3522.

Note that the control apparatus 4 may calculate the rotational axis 3522 based on the outline of the workpiece W and calculate the eccentricity error based on a deviation of the calculated rotational axis 3522.

The generated eccentricity error information may be used by the control apparatus 4 in order to perform the above described processing operation. Namely, the eccentricity error information may be used by the control apparatus 4 in the processing period during which the workpiece W is processed by irradiating the workpiece W with the processing light EL. Specifically, the control apparatus 4 may control the processing system SYS based on the eccentricity error information to process the workpiece W in a same manner as a case where there is no eccentricity error even when there is the eccentricity error. For example, the control apparatus 4 may control the irradiation position of the processing light EL based on the eccentricity error information so that the workpiece W is irradiated with the processing light EL in a same manner as a case where there is no eccentricity error even when there is the eccentricity error. Note that the operation for generating the eccentricity error information may be performed prior to the processing operation, because the control apparatus 4 uses the eccentricity error information in the processing period during which the workpiece W is processed by irradiating the workpiece W with the processing light EL.

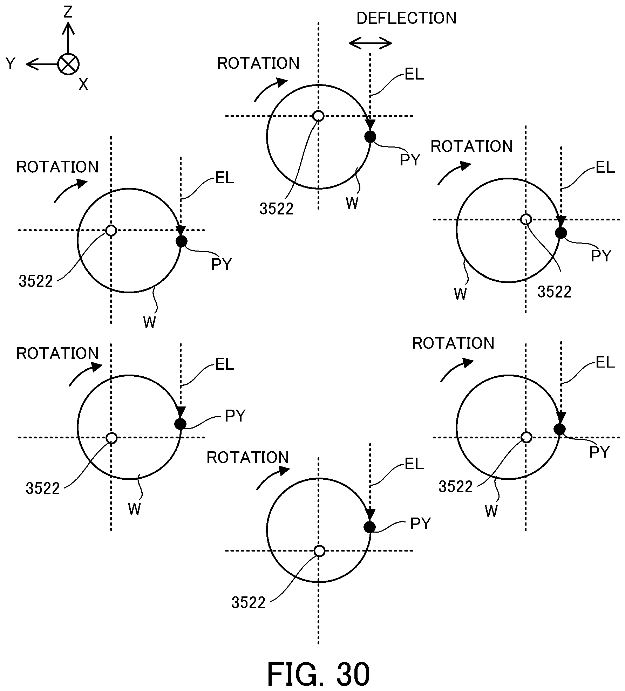

FIG. 30 illustrates one example of the irradiation position of the processing light EL controlled based on the eccentricity error information. FIG. 30 illustrates an example in which the edge point (specifically, an edge point PY located at an edge along the Y axis direction intersecting with the rotational axis 3522) of the workpiece W is irradiated with the processing light EL from a direction that is skew relative to the rotational axis 3522. As illustrated in FIG. 30, when there is the eccentricity error, the position of the edge point PY in the Y axis direction varies along with the rotation of the workpiece W. In this case, the control apparatus 4 may control the irradiation position (the condensed position in this case) of the processing light EL along the Y axis direction by controlling the Galvano mirror 1214. As a result, the processing system SYS is capable of processing the workpiece W more accurately, compared to a case where the eccentricity error information is not used.

### (2-2-3-2) Operation for Generating Angular Deviation Error Information

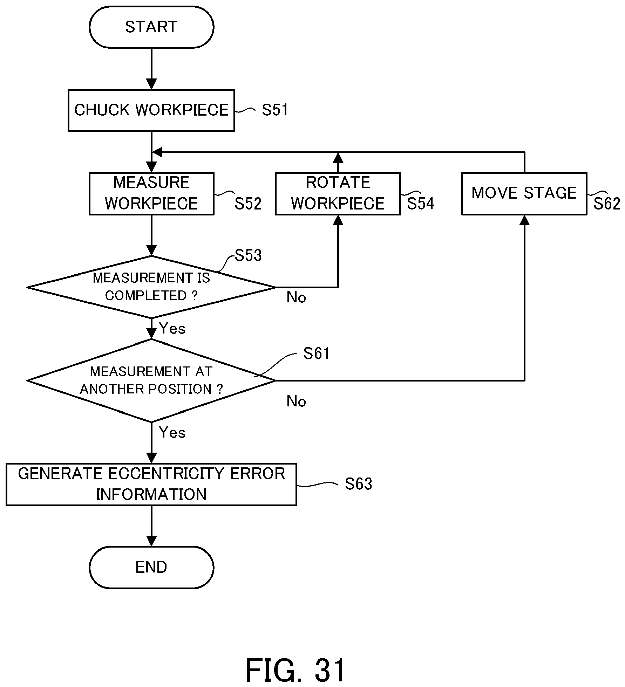

Firstly, with reference to FIG. 31, the operation for generating the angular deviation error information will be described. FIG. 31 is a flowchart that illustrates a flow of the operation for generating the angular deviation error information.

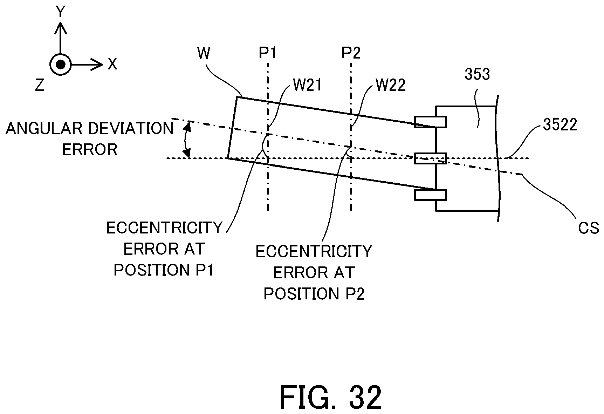

As illustrated in FIG. 31, the processing system SYS performs the above described operation from the step S51 to the step S54 that is also performed in the operation for generating the eccentricity error information. However, the processing system SYS performs the above described operation from the step S51 to the step S54 at a plurality of different positions (for example, two positions) of the workpiece W. Specifically, as illustrated in FIG. 32 that is a top view illustrating the workpiece W having the angular deviation error, the processing system SYS repeats the operation for measuring a first measurement target part W21 of the workpiece W by using the measurement apparatus 2 (the step S52) and the operation for rotating the workpiece W by the predetermined angle by using the rotation apparatus 35 (the step S54) until the workpiece W is rotated by the necessary angle (a step S53). Namely, the processing system SYS performs the above described operation from the step S51 to the step S54 at a first position P1 of the workpiece W at which the first measurement target part W21 exists. Then, the processing system SYS moves the stage 32 along the rotational axis 3522. In this case, the processing system SYS moves the stage 32 so that a second measurement target part W22 of the workpiece W is measurable by the measurement apparatus 2 (a step S62). Since the stage 32 moves along the rotational axis 3522, a position of the second measurement target part W22 in a direction along the rotational axis 3522 is different from a position of the first measurement target part W21 in the direction along the rotational axis 3522. Then, the processing system SYS repeats the operation for measuring the second measurement target part W22 of the workpiece W by using the measurement apparatus 2 (the step S52) and the operation for rotating the workpiece W by the predetermined angle by using the rotation apparatus 35 (the step S54) until the workpiece W is rotated by the necessary angle (the step S53). Namely, the processing system SYS performs the above described operation from the step S51 to the step S54 at a second position P2 of the workpiece W at which the second measurement target part W22 exists. The above described operation is repeated until it is determined that it is not necessary to perform the operation from the step S51 to the step S54 at another position of the workpiece W (a step S61).

Then, the control apparatus 4 generates the angular deviation error information based on the measured result of the workpiece W at the step S52 (a step S63). Specifically, the control apparatus 4 calculates, based on the measured result of the workpiece W at the step S52, the eccentricity error at each of the plurality of positions that are different from each other along the rotational axis 3522. For example, as illustrated in FIG. 32, the control apparatus 4 calculates the eccentricity error at the first position P1 and the eccentricity error at the second position P2. Then, the control apparatus 4 calculates the angular deviation error (for example, an angle between the central axis CS and the rotation axis 3522) based on the plurality of calculated eccentricities. Namely, the control apparatus 4 generates the angular deviation information related to the angular deviation error that is a misalignment between the central axis CS of the workpiece W and the rotational axis 3522.

The generated angular deviation error information may be used by the control apparatus 4 in order to perform the above described processing operation. Note that a control method using the angular deviation error information may be same as a control method using the eccentricity error information, and thus, its detailed description is omitted. As a result, the processing system SYS is capable of processing the workpiece W more accurately, compared to a case where the angular deviation error information is not used. Note that the operation for generating the angular deviation error information may be performed prior to the processing operation, because the control apparatus 4 uses the angular deviation error information in the processing period during which the workpiece W is processed by irradiating the workpiece W with the processing light EL.

Moreover, the assembly error information (especially, the assembly error occurred when the chuck 353 is attached to the rotational shaft 352) may be generated by an operation that is same as the third axis information generation operation.

### (2-3) Light State Generation Operation

Next, the light state information generation operation for generating the light state information related to the state of the processing light EL by using the measurement apparatus 36 will be described. In the present example embodiment, the light stage information may include an intensity distribution information related to an intensity distribution in an angular direction relative to the irradiation axis EX of the processing light EL. The light stage information may include a propagating direction information related to the propagating direction of the processing light EL. The light stage information may include a passing position information related to a position through which the processing light EL passes in a plane intersecting with the propagating direction of the processing light EL. Thus, in the below described description, an operation for generating the intensity distribution information, an operation for generating the propagating direction information and an operation for generating the passing position information will be described in order.

### (2-3-1) Operation for Generating Intensity Distribution Information

Firstly, the operation for generating the intensity distribution information related to the intensity distribution in the angular direction relative to the irradiation axis EX of the processing light EL will be described.

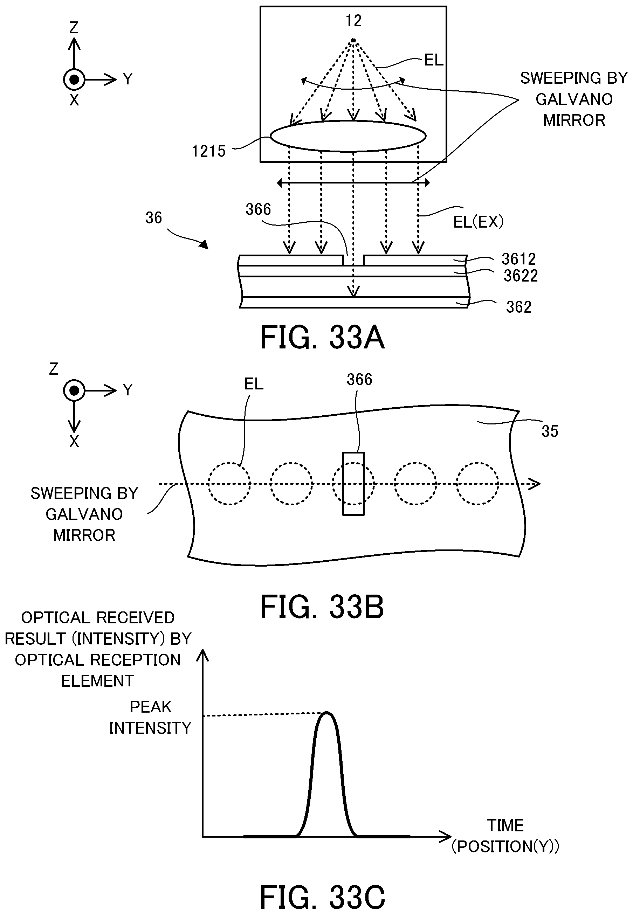

In order to generate the intensity distribution information, the processing system SYS measures the intensity distribution of the processing light EL by using the measurement apparatus 36. Next, with reference to FIG. 33A to FIG. 33C, an operation for measuring the intensity distribution of the processing light EL by using the measurement apparatus 36 will be described. FIG. 33A is a cross-sectional view that illustrates an aspect in which the processing head 12 irradiates the measurement apparatus 36 with the processing light EL, FIG. 33B is a planar view that illustrates an aspect in which the processing head 12 irradiates the measurement apparatus 36 with the processing light EL, and FIG. 33C is a graph that illustrates the optical received result of the processing light EL by the light reception element 362 of the measurement apparatus 36.

As illustrated in FIG. 33A and FIG. 33B, the control apparatus 4 controls the stage driving system 33 to move the stage 32 (namely, to move the rotation apparatus 35 at which the measurement apparatus 36 is disposed) to a position that allows the processing head 12 to irradiate the mark 366, which constitutes the passing area365 through which the processing light EL passes, with the processing head 12. Namely, the control apparatus 4 moves the stage 32 so that the mark 366 is located in the processing shot area PSA. In this case, the control apparatus 4 may move the processing head 12 in addition to or instead of the stage 32. Then, the control apparatus 4 irradiates the processing head 12 to irradiate the mark 366 with the processing light EL.

In this case, as illustrated in FIG. 33A and FIG. 33B, the processing head 12 deflects the processing light EL by using the Galvano mirror 1214 to sweep at least a part of the surface of the measurement apparatus 36 (specifically, a surface including a part at which the mark 366 is formed) with the processing light EL under the control of the control apparatus 4. Especially, the processing head 12 sweeps at least a part of the surface of the measurement apparatus 36 with the processing light EL so that the processing light EL (more specifically, the target irradiation area EA of the processing light EL) traverses the passing area 365 forming the mark 366 in a plane along the XY plane. Namely, at least a part of the surface of the measurement apparatus 36 may be swept with the processing light EL by moving the stage 32 under the control of the control apparatus 4.

As a result, the mark 366 is irradiated with the processing light EL in a certain timing in the period during which at least a part of the surface of the measurement apparatus 36 is swept with the processing light EL. Namely, the light reception element 362 optically receives the processing light EL in a certain timing in the period during which at least a part of the surface of the measurement apparatus 36 is swept with the processing light EL. As a result, the control apparatus 4 obtains, as the processing light measurement information corresponding to the optical received result of the processing light EL, a light reception signal indicating that the intensity of the processing light EL in a period during which the passing area 365 is irradiated with at least a part of the processing light EL is higher than the intensity of the processing light EL in a period during which passing area 365 forming the mark 366 is not irradiated with the processing light EL, as illustrated in FIG. 33C. Namely, the control apparatus 4 obtains, as the processing light measurement information, the information related to the intensity distribution of the processing light EL. In this case, it can be said that the measurement apparatus 36 measures the intensity distribution of the processing light EL. Note that a time (an optical received timing) represented by a horizontal axis of FIG. 33C may be replaced by a relative position of the processing light EL and the stage 32 along the sweeping direction (the Y axis direction).

The processing system SYS repeats an operation for measuring the processing light EL while changing a relative positional relationship between the measurement apparatus 36 and the processing head 12 in a direction that is along the irradiation axis EX along the propagating direction of the processing light EL. Specifically, the control apparatus 4 moves at least one of the processing head 12 and the stage 32 so that a position of the measurement apparatus 36 relative to the processing head 12 is a first position. Then, the measurement apparatus 36 measures the processing light EL. Then, the control apparatus 4 moves at least one of the processing head 12 and the stage 32 so that the position of the measurement apparatus 36 relative to the processing head 12 is a second position that is different from the first position in a direction along the irradiation axis EX. Typically, the control apparatus 4 moves at least one of the processing head 12 and the stage 32along the irradiation axis EX (along the Z axis direction in the example illustrated in FIG. 33A). Then, the measurement apparatus 36 measures the processing light EL. Namely, the measurement apparatus 36 measures the processing light EL at the first position along the direction along the irradiation axis EX (namely, the propagating direction of the processing light EL), and measures the processing light EL at the second position that is different from the first position along the direction along the irradiation axis EX (namely, the propagating direction of the processing light EL). Here, a change of a distance between the measurement apparatus 36 and the condensed position of the processing light EL in the direction along the irradiation axis EX may be a change by the condensed position change optical system 1210.

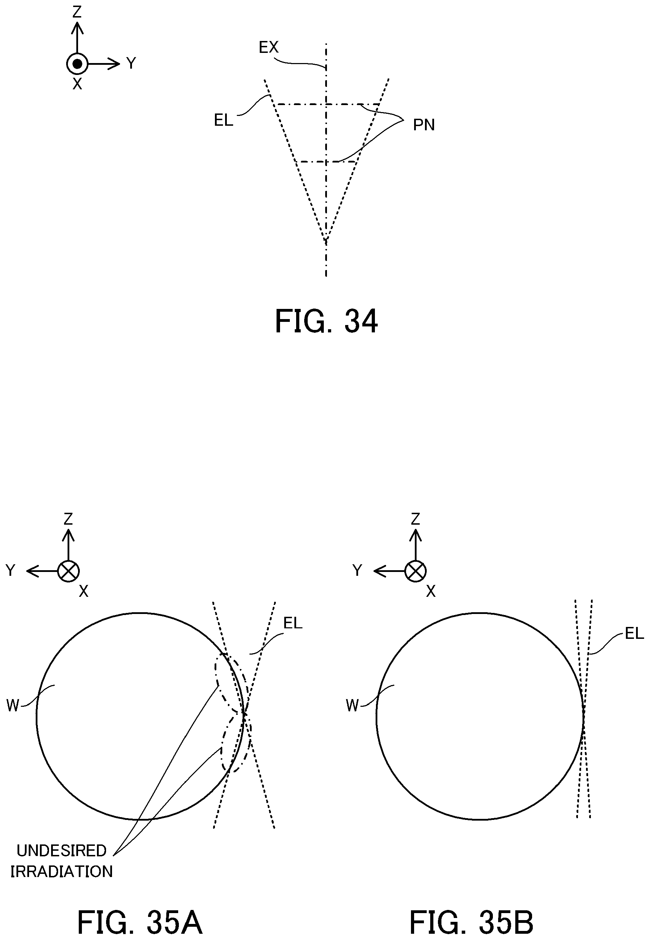

Then, the control apparatus 4 generates the intensity distribution information related to the intensity distribution of the processing light EL based on the processing light measurement information. Specifically, the processing light measurement information indicates the intensity distribution of the processing light EL on the surface of the beam passing member 361. Here, the operation for measuring the processing light EL is repeated while changing the relative positional relationship between the measurement apparatus 36 and the processing head 12 in the direction that is along the irradiation axis EX. Thus, as illustrated in FIG. 34 that is a cross-sectional view illustrating the processing light EL, the processing light measurement information indicates the intensity distributions of the processing light EL on a plurality of planes PN which intersect with the irradiation axis EX and whose positions in the direction along the irradiation axis EX are different from each other. The control apparatus 4 may combine the intensity distributions of the processing light EL on the plurality of planes PN whose positions in the direction along the irradiation axis EX are different from each other, and generate the intensity distribution information related to the intensity distribution in the angular direction relative to the irradiation axis EX of the processing light EL from the combined three-dimensional intensity distribution. Alternatively, the control apparatus 4 may predict (in other words, complement) an intensity distribution PN of the processing light EL between the plurality of planes based on the intensity distributions of the processing light EL on the plurality of planes PN whose positions in the direction along the irradiation axis EX are different from each other, and generate the intensity distribution information related to the intensity distribution in the angular direction relative to the irradiation axis EX of the processing light EL.

Alternatively, the processing system SYS may not change the relative positional relationship between the measurement apparatus 36 and the processing head 12 in the direction that is along the irradiation axis EX when the processing light EL is measured. Specifically, the control apparatus 4 may control a relative positional relationship between the condensed position of the processing light EL and the measurement apparatus 36 so that the condensed position of the processing light EL is away from the passing area 365 forming the mark 366 in the direction along the irradiation axis EX. Namely, the control apparatus 4 may control the relative positional relationship between the condensed position of the processing light EL and the measurement apparatus 36 so that the measurement apparatus 36 measures the processing light EL at a position that is different from the condensed position of the processing light EL in the direction along the irradiation axis EX. In other words, the control apparatus 4 may control the relative positional relationship between the condensed position of the processing light EL and the measurement apparatus 36 so that the mark 366 is irradiated with the defocused processing light EL.

Then, the control apparatus 4 generates the intensity distribution information related to the intensity distribution of the processing light EL based on the processing light measurement information. Specifically, as described above, the processing light measurement information indicates the intensity distribution of the processing light EL on the light reception surface 3621 of the light reception element 362. Furthermore, the distance between the measurement apparatus 36 and the condensed position of the processing light EL in the direction along the irradiation axis EX (what we call a defocused amount) is an information that is known to the control apparatus 4. This is because the control apparatus 4 controls the relative positional relationship between the condensed position of the processing light EL and the measurement apparatus 36 so that the condensed position of the processing light EL is away from the passing area 365 forming the mark 366 in the direction along the irradiation axis EX. As a result, the control apparatus 4 may predict (in other words, complement) the intensity distribution of the processing light EL at each of a plurality of planes whose positions in the direction along the irradiation axis EX are different from each other based on the intensity distribution of the processing light EL indicated by the processing light measurement information and the defocused amount. Namely, the control apparatus 4 may generate the intensity distribution information related to the intensity distribution in the angular direction relative to the irradiation axis EX of the processing light EL.

The generated intensity distribution information may be used by the control apparatus 4 in order to perform the above described processing operation. Namely, the intensity distribution information may be used by the control apparatus 4 in the processing period during which the workpiece W is processed by irradiating the workpiece W with the processing light EL. Note that the operation for generating the intensity distribution information may be performed prior to the processing operation, because the control apparatus 4 uses the intensity distribution information in the processing period during which the workpiece W is processed by irradiating the workpiece W with the processing light EL.

For example, the control apparatus 4 may control at least one of the irradiation position of the processing light EL and the propagating direction of the processing light EL based on the intensity distribution information so that a desired position of the workpiece W is irradiated with the processing light EL. In this case, the control apparatus 4 may control at least one of the irradiation position of the processing light EL and the propagating direction of the processing light EL by controlling the Galvano mirror 1214.

For example, the control apparatus 4 may calculate the open angle of the processing light EL based on the intensity distribution information, and control the open angle of the processing light based on the calculated open angle so that the open angle of the processing light EL is a desired angle. In this case, the control apparatus 4 may control the open angle of the processing light EL by controlling the open angle change optical system 1211. The open angle may be controlled when the workpiece W is irradiated with the processing light EL from a direction that is skew relative to the rotational axis 3522, for example. For example, as illustrated in FIG. 35A that is a cross-sectional view illustrating the processing light EL with which the workpiece W is irradiated from the direction that is skew relative to the rotational axis 3522, when the open angle is large, there is a possibility that not only a part of the surface of the workpiece W that should be irradiated with the processing light EL but also a part of the surface of the workpiece W that should not be irradiated with the processing light EL are irradiated with the processing light EL unintentionally. Namely, there is a possibility that the part of the surface of the workpiece W that should not be irradiated with the processing light EL is irradiated with the processing light EL unintentionally. Thus, as illustrated in FIG. 35B that is a cross-sectional view illustrating the processing light EL whose open angle is controlled, the control apparatus 4 may decrease the open angle of the processing light EL. As a result, the possibility that the part of the surface of the workpiece W that should not be irradiated with the processing light EL is irradiated with the processing light EL is reduced.

Moreover, the control apparatus 4 may perform the operation for generating the intensity distribution after performing an operation for changing the open angle of the processing light EL by the open angle change optical system 1211. The control apparatus 4 may control the open angle of the processing light EL based on the intensity distribution information obtained by this generation operation.

Note that the processing head 12 may irradiate a plurality of marks 366 which have a slit-like shape and whose longitudinal directions are different from each other with the processing light EL under the control of the control apparatus 4. For example, the processing head 12 may irradiate the plurality of marks 366 whose longitudinal directions intersect with (typically, are perpendicular to) each other. In this case, the control apparatus 4 may calculate an ellipticity of the processing light EL based on the processing light measurement information. The control apparatus 4 may control the ellipticity of the processing light EL based on the calculated ellipticity so that the ellipticity of the processing light EL is a desired ellipticity. In this case, the control apparatus 4 may control the ellipticity of the processing light EL by controlling the ellipticity change optical system 1212. Moreover, the control apparatus 4 may rotate the processing light EL around the optical axis AX (especially, around the irradiation axis EX) based on the ellipticity so that the direction of the maximum diameter of the spot of the processing light EL on the entrance pupil plane of the fθ lens 1215 is a desired direction. In this case, the control apparatus 4 may rotate the processing light EL around the optical axis AX (especially, around the irradiation axis EX) by controlling the light rotation optical system 1213. Note that the control apparatus 4 may perform the operation for generating the intensity distribution after performing an operation for changing the ellipticity of the processing light EL by the light rotation optical system 1213. The control apparatus 4 may control the ellipticity of the processing light EL based on the intensity distribution information obtained by this generation operation.

### (2-3-2) Operation for Generating Propagating Direction Information

Next, the operation for generating the propagating direction information related to the propagating direction of the processing light EL will be described. In order to generate the propagating direction information, the processing system SYS measures the processing light EL by using the measurement apparatus 36.

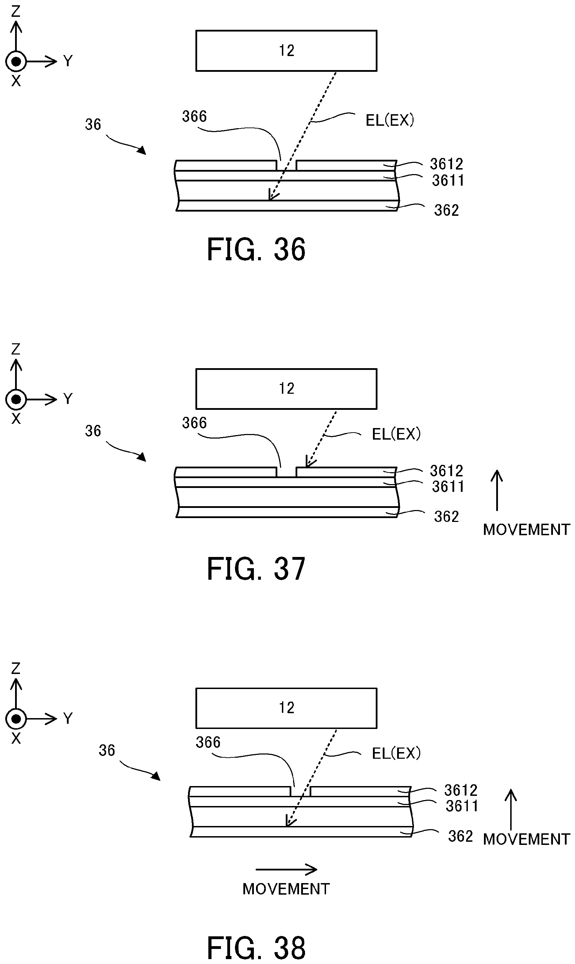

Specifically, as illustrated in FIG. 36 that is a cross-sectional view illustrating the measurement apparatus 36 measuring the processing light EL, the control apparatus 4 moves the stage 32 (namely, moves the rotation apparatus 35 at which the measurement apparatus 36 is disposed) so that the processing light EL is measurable by the measurement apparatus 36 (namely, the processing light is optically receivable by the light reception element 362) in a period during which the processing light EL is emitted from the processing head 12. In this case, the processing head 12 may not deflect the processing light EL by using the Galvano mirror 1214. The control apparatus 4 obtains, from the position measurement apparatus 34, the information related to the position of the stage 32 (namely, the position of the measurement apparatus 36) at a timing when the measurement apparatus 36 measures the processing light EL.

Then, the control apparatus 4 moves the stage 32 in the direction along the irradiation axis EX (namely, the Z axis direction) assuming that the propagating direction of the processing light EL that is the measurement target is a direction along the Z axis (namely, the irradiation axis EX is along the Z axis). Namely, the control apparatus 4 moves the measurement apparatus 36 in the direction along the irradiation axis EX (namely, the Z axis direction). Note that the control apparatus 4 may move the processing head 12 in the Z axis direction in addition to or instead of moving the stage 32 in the Z axis direction. As a result, the measurement apparatus 36 measures the processing light EL again from a position that is different in the direction along the irradiation axis EX (namely, the Z axis direction) from a position at which the processing light EL has been previously measured. Namely, the measurement apparatus 36 measures the processing light EL at a first position in the direction along the irradiation axis EX (namely, the Z axis direction) and measures the processing light EL at a second position that is different from the first position in the direction along the irradiation axis EX (namely, the Z axis direction). In this case, when the propagating direction of the processing light EL that is the measurement target is actually the direction along the Z axis, the measurement apparatus 36 is capable of measuring the processing light EL even when the measurement apparatus 36 moves in the direction along the irradiation axis EX (namely, the Z axis direction). On the other hand, as illustrated in FIG. 37 that is a cross-sectional view illustrating the measurement apparatus 36 measuring the processing light EL, when the propagating direction of the processing light EL that is the measurement target is not actually the direction along the Z axis (namely, the propagating direction of the processing light EL is inclined with respect to the Z axis), there is a possibility that the measurement apparatus 36 is not capable of measuring the processing light EL only by moving the measurement apparatus 36 in the direction along the irradiation axis EX (namely, the Z axis direction). Thus, as illustrated in FIG. 38 that is a cross-sectional view illustrating the measurement apparatus 36 measuring the processing light EL, the control apparatus 4 may move the stage 32 in not only the direction along the irradiation axis EX (namely, the Z axis direction) but also a direction intersecting with the irradiation axis EX (for example, at least one of the X axis direction and the Y axis direction). The control apparatus 4 obtains, from the position measurement apparatus 34, the information related to the position of the stage 32 (namely, the position of the measurement apparatus 36) at a timing when the measurement apparatus 36 measures the processing light EL.

Then, the control apparatus 4 generates the propagating direction information related to the propagating direction of the processing light EL based on the information related to the position of the measurement apparatus 36 at the timing when the measurement apparatus 36 measures the processing light EL. Specifically, the control apparatus 4 generates the propagating direction information based on the information related to the position of the measurement apparatus 36 at the timing when the measurement apparatus 36 measures the processing light EL before the measurement apparatus 36 moves in the direction along the irradiation axis EX (namely, the Z axis direction) (hereinafter, this position is referred to as a "first measured position") and the information related to the position of the measurement apparatus 36 at the timing when the measurement apparatus 36 measures the processing light EL after the measurement apparatus 36 has moved in the direction along the irradiation axis EX (namely, the Z axis direction) (hereinafter, this position is referred to as a "second measured position"). For example, the control apparatus 4 generates the propagating direction information based on the first and second measured positions in a direction intersecting with the irradiation axis EX (for example, at least one of the X axis direction and the Y axis direction). Specifically, when the first measured position and the second measured position are located at a same position along the direction intersecting with the irradiation axis EX (for example, at least one of the X axis direction and the Y axis direction), it is estimated that the propagating direction of the processing light EL is the Z axis direction. On the other hand, when the first measured position and the second measured position are located at different positions along the direction intersecting with the irradiation axis EX (for example, at least one of the X axis direction and the Y axis direction), it is estimated that the propagating direction of the processing light EL is a direction that is inclined with respect to the Z axis direction. In this case, an inclined amount of the propagating direction of the processing light EL with respect to the Z axis direction is calculatable from a distance between the first and second measured positions along the direction intersecting with the irradiation axis EX (for example, at least one of the X axis direction and the Y axis direction) and a distance between the first and second measured positions along the direction along with the irradiation axis EX (namely, the Z axis direction). In this manner, the control apparatus 4 generates the propagating direction information.

The generated propagating direction information may be used by the control apparatus 4 in order to perform the above described processing operation. Namely, the propagating direction information may be used by the control apparatus 4 in the processing period during which the workpiece W is processed by irradiating the workpiece W with the processing light EL. For example, the control apparatus 4 may control at least one of the irradiation position of the processing light EL and the propagating direction of the processing light EL based on the propagating direction information so that a desired position of the workpiece W is irradiated with the processing light EL. In this case, the control apparatus 4 may control at least one of the irradiation position of the processing light EL and the propagating direction of the processing light EL by controlling the Galvano mirror 1214. Note that an apparatus disclosed in US2018/0169788A1 may be used as the Galvano mirror 1214 in order to control at least one of the irradiation position of the processing light EL and the propagating direction of the processing light EL. Moreover, the operation for generating the propagating direction information may be performed prior to the processing operation, because the control apparatus 4 uses the propagating direction information in the processing period during which the workpiece W is processed by irradiating the workpiece W with the processing light EL.

### (2-3-3) Operation for Generating Passing Position Information

Next, the operation for generating the passing position information related to the position through which the processing light EL passes in the plane intersecting with the propagating direction of the processing light EL. In order to generate the passing position information, the processing system SYS measures the processing light EL by using the measurement apparatus 36.

Specifically, as illustrated in FIG. 38 that is a cross-sectional view illustrating the measurement apparatus 36 measuring the processing light EL, the control apparatus 4 controls the processing head 12 so that the irradiation position of the processing light EL relative to the processing head 12 is set at a plurality of locations. In this case, the control apparatus 4 may change the irradiation position of the processing light EL relative to the processing head 12 by deflecting the processing light EL by using the Galvano mirror 1214. For example, the control apparatus 4 may control the processing head 12 to set the irradiation position of the processing light EL relative to the processing head 12 at a first irradiation position IP#1. The measurement apparatus 36 measures the processing light EL in a period during which the irradiation position of the processing light EL relative to the processing head 12 is the first irradiation position IP#1. The control apparatus 4 obtains, from the position measurement apparatus 34, the information related to the position of the stage 32 (namely, the position of the measurement apparatus 36) at a timing when the measurement apparatus 36 measures the processing light EL with which the first irradiation position IP#1 is irradiated. Then, the control apparatus 4 may control the processing head 12 to set the irradiation position of the processing light EL relative to the processing head 12 at a second irradiation position IP#2. The second irradiation position IP#2 is different from the first irradiation position IP#2 in a direction along a plane intersecting with the propagating direction of the processing light EL (for example, a plane along the XY plane). The measurement apparatus 36 measures the processing light EL in a period during which the irradiation position of the processing light EL relative to the processing head 12 is the second irradiation position IP#2. The control apparatus 4 obtains, from the position measurement apparatus 34, the information related to the position of the stage 32 (namely, the position of the measurement apparatus 36) at a timing when the measurement apparatus 36 measures the processing light EL with which the second irradiation position IP#2 is irradiated.

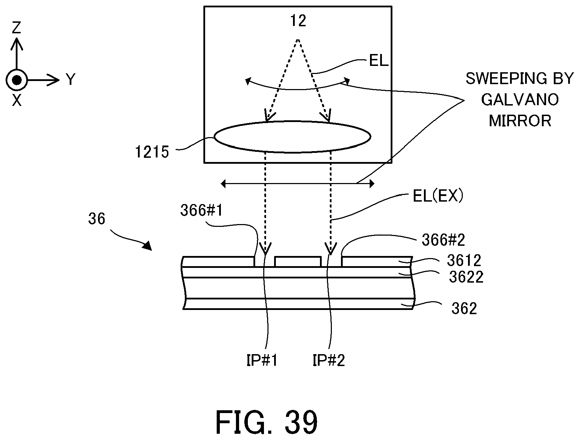

The measurement apparatus 36 may measures, through the plurality of marks 366, the processing light EL with which the plurality of irradiation positions are irradiated. For example, the measurement apparatus 36 may measure, through a first mark 366 (for example, a mark 366#1 in FIG. 39), the processing light EL with which the first irradiation position IP#1 is irradiated. For example, the measurement apparatus 36 may measure, through a second mark 366 (for example, a mark 366#2 in FIG. 39), the processing light EL with which the second irradiation position IP#2 is irradiated. In this case, the measurement apparatus 36 may not move in the plane intersecting with the propagating direction of the processing light EL (for example, the plane along the XY plane) in a period during which the processing light with which the plurality of irradiation positions are irradiated is measured. However, the measurement apparatus 36 may move in the plane intersecting with the propagating direction of the processing light EL (for example, the plane along the XY plane) in at least a part of the period during which the processing light with which the plurality of irradiation positions are irradiated is measured.

Alternatively, the measurement apparatus 36 may measures, through single mark 366, the processing light EL with which the plurality of irradiation positions are irradiated. For example, the control apparatus 4 may move the stage 32 (namely, the measurement apparatus 36) to a first stage position so that the mark 366 is located at the first irradiation position IP#1. The measurement apparatus 36 measures, through the mark 366, the processing light EL with which the first irradiation position IP#1 is irradiated in a period during which the mark 366 is located at the first irradiation position IP#1. Then, the control apparatus 4 may move the stage 32 (namely, the measurement apparatus 36) to a second stage position that is different from the first stage position so that the mark 366 is located at the second irradiation position IP#2. The measurement apparatus 36 measures, through the mark 366, the processing light EL with which the second irradiation position IP#2 is irradiated in a period during which the mark 366 is located at the second irradiation position IP#2.

Then, the control apparatus 4 generates the passing position information related to related to the position through which the processing light EL passes in the plane intersecting with the propagating direction of the processing light EL based on the information related to the position of the measurement apparatus 36 at the timing when the measurement apparatus 36 measures the processing light EL. The generated passing position information may be used by the control apparatus 4 in order to perform the above described processing operation. Namely, the passing position information may be used by the control apparatus 4 in the processing period during which the workpiece W is processed by irradiating the workpiece W with the processing light EL. For example, the control apparatus 4 may control at least one of the irradiation position of the processing light EL and the propagating direction of the processing light EL based on the passing position information so that a desired position of the workpiece W is irradiated with the processing light EL. In this case, the control apparatus 4 may control at least one of the irradiation position of the processing light EL and the propagating direction of the processing light EL by controlling the Galvano mirror 1214. Note that the operation for generating the passing position information may be performed prior to the processing operation, because the control apparatus 4 uses the passing position information in the processing period during which the workpiece W is processed by irradiating the workpiece W with the processing light EL.

When the plurality of marks 366 are used to measure the processing light EL with which the plurality of irradiation positions are irradiated, a positional relationship between the plurality of marks 366 and the rotational axis 3522 may be a predetermined relationship. Namely, a relative positional relationship between the plurality of marks 366 and the rotational axis 3522 may be an information know to the control apparatus 4. In this case, the control apparatus 4 may determine a relationship between the rotational axis 3522 and the irradiation position of the processing light EL based on the passing position information and an information related to the relative positional relationship between the plurality of marks 366 and the rotational axis 3522. As a result, the control apparatus 4 is capable of irradiating the desired position of the workpiece rotating around the rotational axis 3522 with the processing light EL.

When the single mark 366 is used to measure the processing light EL with which the plurality of irradiation positions are irradiated, the stage 32 moves as described above. In this case, a moving plane of the stage 32 (namely, a plane along which the stage 32 moves and which intersects with the propagating direction of the processing light EL) and the rotational axis 3522 may be a predetermined relationship. Namely, a relative positional relationship between the moving plane of the stage 32 and the rotational axis 3522 may be an information know to the control apparatus 4. In this case, the control apparatus 4 may determine a relationship between the rotational axis 3522 and the irradiation position of the processing light EL based on the passing position information and an information related to the relative positional relationship between the moving plane of the stage 32 and the rotational axis 3522. As a result, the control apparatus 4 is capable of irradiating the desired position of the workpiece rotating around the rotational axis 3522 with the processing light EL.

### (2-4) Origin Point Information Generation Operation

Next, the origin point information operation for generating the origin point information related to the processing origin point PO of the processing apparatus 1 and the measurement origin point MO of the measurement apparatus 2 by using the measurement apparatus 36 will be described. The origin point information may include an information related to a distance between the processing origin point PO and the measurement origin point MO. The origin point information may include an information related to a distance between the processing origin point PO and an apparatus origin point AO of the processing system SYS (for example, an origin point of the stage coordinate system that is used to control the position of the stage 32). The origin point information may include an information related to a distance between the measurement origin point MO and the apparatus origin point AO. The processing origin point PO corresponds to a position of the stage 32 when a center of the processing shot area PSA is located at a base position (for example, a center) of the stage 32 and the condensed position of the processing light EL is located on the surface of the workpiece W. he measurement origin point MO corresponds to a position of the stage 32 when a center of the measurement shot area MSA is located at the base position (for example, the center) of the stage 32 and the condensed position of the measurement light ML is located on the surface of the workpiece W.

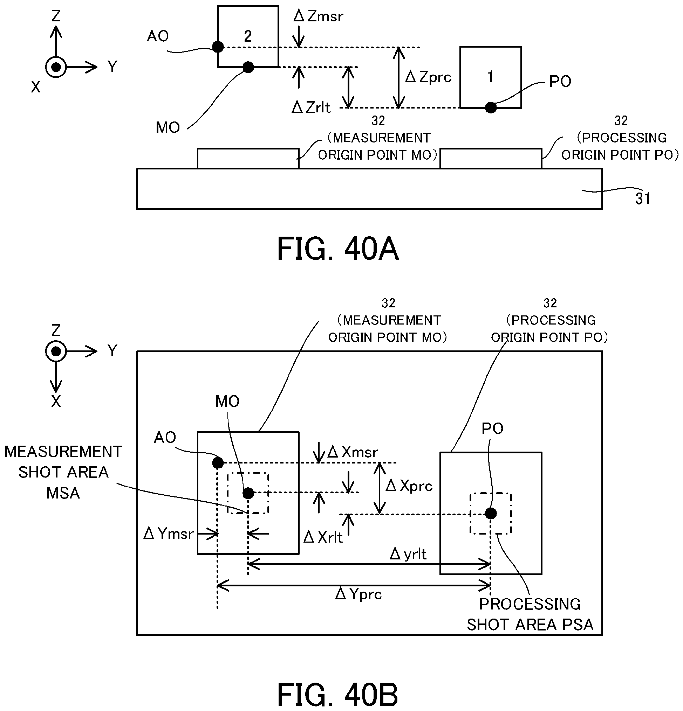

Incidentally, in the below described description, the distance between the processing origin point PO and the measurement origin point MO is referred to as a "relative baseline BLrlt", the distance between the processing origin point PO and the apparatus origin point AO is referred to as a "processing baseline BLprc" and the distance between the measurement origin point MO and the apparatus origin point AO is referred to as a "measurement baseline BLmsr". FIG. 40A and FIG. 40B illustrates examples of the relative baseline BLrlt, the processing baseline BLprc and the measurement baseline BLmsr. As illustrated in FIG. 40A and FIG. 40B, the relative baseline BLrlt may include at least one of a component ΔXrlt corresponding to the distance between the processing origin point PO and the measurement origin point MO in the X axis direction, a component ΔYrlt corresponding to the distance between the processing origin point PO and the measurement origin point MO in the Y axis direction and a component ΔZrlt corresponding to the distance between the processing origin point PO and the measurement origin point MO in the Z axis direction. The processing baseline BLprc may include at least one of a component ΔXprc corresponding to the distance between the apparatus origin point AO and the processing origin point PO in the X axis direction, a component ΔYprc corresponding to the distance between the apparatus origin point AO and the processing origin point PO in the Y axis direction and a component ΔZprc corresponding to the distance between the apparatus origin point AO and the processing origin point PO in the Z axis direction. The measurement baseline BLmsr may include at least one of a component ΔXmsr corresponding to the distance between the apparatus origin point AO and the measurement origin point MO in the X axis direction, a component ΔYmsr corresponding to the distance between the apparatus origin point AO and the measurement origin point MO in the Y axis direction and a component ΔZmsr corresponding to the distance between the apparatus origin point AO and the measurement origin point MO in the Z axis direction.

In order to generate the origin point information, the control apparatus 4 may set the apparatus origin point AO. However, when the origin point information does not include an information related to the apparatus origin point AO, the control apparatus 4 may not set the apparatus origin point AO. In order to set the apparatus origin point AO, the control apparatus 4 controls the measurement head 21 so as to measure a fiducial mark that is formed on the rotation apparatus 35 (alternatively, another member such as the stage 32 or the like) to define the apparatus origin point AO. In the present example embodiment, the apparatus origin point AO is set at a position that has a predetermined positional relationship relative to the fiducial mark. In this case, the control apparatus 4 obtains, from the position measurement apparatus 34, the position of the stage 32 at a timing when the measurement head 21 measures the fiducial mark. Then, the control apparatus 4 may set a position having the predetermined positional relationship relative to the obtained position of the stage 32 to be the apparatus origin point AO.

Then, the control apparatus 4 calculates the position of each of the processing origin point PO and the measurement origin point MO.

In order to calculate the position of the measurement origin point MO, the control apparatus 4 obtains the measured result of the mark 366 by the measurement head 21. Specifically, the control apparatus 4 controls the stage driving system 33 to move the stage 32 along each of the X axis direction and the Y axis direction so that a fiducial (for example, the mark 366) of the measurement apparatus 2 is located at the center of the measurement shot area MSA. Furthermore, the control apparatus 4 moves the stage 32 along the Z axis direction so that the condensed position of the measurement light ML is located on the surface of the rotation apparatus 35 (specifically, the surface of the measurement apparatus 36 disposed at the rotation apparatus 35). In this case, the control apparatus 4 may move the measurement head 21 by controlling the head driving system 22, or may not move the measurement head 21. Then, the measurement head 21 measures the mark 366. Furthermore, the control apparatus 4 obtains, from the position measurement apparatus 34, the position of the stage 32 (namely, the position of the measurement apparatus 36) at a timing when the measurement head 21 measures the mark 366. The position of the stage 32 obtained here corresponds to the position of the measurement origin point MO. Therefore, the control apparatus 4 is capable of calculating the distance between the apparatus origin point AO and the position of the stage 32 at the timing when the measurement head 21 measures the mark 366 and calculating the measurement baseline BLmsr based on the calculated distance. The control apparatus 4 is capable of calculating the distance between the processing origin point PO, the position of which is calculated by a below described method, and the position of the stage 32 at the timing when the measurement head 21 measures the mark 366 and calculating the relative baseline BLrlt based on the calculated distance.

After at least one of the relative baseline BLrlt and the measurement baseline BLmsr is calculated, the control apparatus 4 may move, based on at least one of the relative baseline BLrlt and the measurement baseline BLmsr, at least one of the stage 32 and the measurement head 21 in a period during which the measurement head 21 measures the workpiece W and the like. Namely, the control apparatus 4 may control, based on at least one of the relative baseline BLrlt and the measurement baseline BLmsr, the position of at least one of the stage 32 and the measurement head 21 in the period during which the measurement head 21 measures the workpiece W and the like. As a result, the measurement shot area MSA is set at a desired position in the stage coordinate system that is based on the apparatus origin point AO. Namely, the processing system SYSa is capable of properly processing the workpiece W based on the proper measured result of the workpiece W by the measurement apparatus 2.

Next, in order to calculate the processing baseline BLprc, the control apparatus 4 obtains the measured result of the processing light EL, which is through the passing area 365 forming the mark 366, by the measurement apparatus 36 (namely, the processing light measurement information). Specifically, the control apparatus 4 controls the stage driving system 33 to move the stage 32 (namely, to move the measurement apparatus 36) in each of the X axis direction and the Y axis direction so that the fiducial (for example, the mark 366) of the measurement apparatus 36 is located at a center of the processing shot area PSA. Furthermore, the control apparatus 4 moves the stage 32 along the Z axis direction so that the condensed position of the processing light EL is located on the surface of the rotation apparatus 35 (specifically, the surface of the measurement apparatus 36 disposed at the rotation apparatus 35). In this case, the control apparatus 4 may move the processing head 12 by controlling the head driving system 13, or may not move the processing head 12. Then, the processing head 12 irradiates the mark 366 with the processing light EL. As a result, the light reception element 362 optically receives the processing light EL through the passing area 365 forming the mark 366. The control apparatus 4 obtains, from the position measurement apparatus 34, the position of the stage 32 (namely, the position of the measurement apparatus 36) at a timing when the light reception element 362 optically receives the processing light EL. The position of the stage 32 obtained here corresponds to the position of the processing origin point PO. Therefore, the control apparatus 4 is capable of calculating the distance between the apparatus origin point AO and the position of the stage 32 at the timing when the light reception element 362 optically receives the processing light EL through the mark 366 and calculating the processing baseline BLprc based on the calculated distance. The control apparatus 4 is capable of calculating the distance between the measurement origin point MO, the position of which is calculated by the above described method, and the position of the stage 32 at the timing when the light reception element 362 optically receives the processing light EL through the mark 366 and calculating the relative baseline BLrlt based on the calculated distance.

After at least one of the relative baseline BLrlt and the processing baseline BLprc is calculated, the control apparatus 4 may move, based on at least one of the relative baseline BLrlt and the processing baseline BLprc, at least one of the stage 32 and the processing head 12 in a period during which the processing head 12 processes the workpiece W and the like. Namely, the control apparatus 4 may control, based on at least one of the relative baseline BLrlt and the processing baseline BLprc, the position of at least one of the stage 32 and the processing head 12 in 5the period during which the processing head 12 processes the workpiece W and the like. As a result, the processing shot area PSA is set at a desired position in the stage coordinate system that is based on the apparatus origin point AO. Namely, the processing system SYSa is capable of properly processing the workpiece W.

### (3) Technical Effect of Processing System SYS

The above described processing system SYS is capable of properly processing the workpiece W by using the processing light EL. Furthermore, the processing system SYS is capable of properly measuring the workpiece W by using the measurement light ML.

Especially, the processing system SYS is capable of generating the above described rotational axis information by using the measurement light ML and processing the workpiece W based on the rotational axis information. Thus, the processing system SYS is capable of processing the workpiece W that is held to be rotatable more properly, compared to a case where the workpiece W is processed without using the rotational axis information.

Furthermore, the processing system SYS is capable of generating the above described light state information by using the measurement apparatus 36 and processing the workpiece W based on the light state information. Thus, the processing system SYS is capable of processing the workpiece W by using the processing light EL more properly, compared to a case where the workpiece W is processed without using the light state information.

Furthermore, the processing system SYS is capable of generating the above described origin point information by using the measurement apparatus 36 and processing the workpiece W based on the origin point information. Thus, the processing system SYS is capable of processing the workpiece W by using the processing light EL more properly, compared to a case where the workpiece W is processed without using the origin point information.

### (4) Modified Example

Next, a modified example of the processing system SYS will be described.

### (4-1) First Modified Example

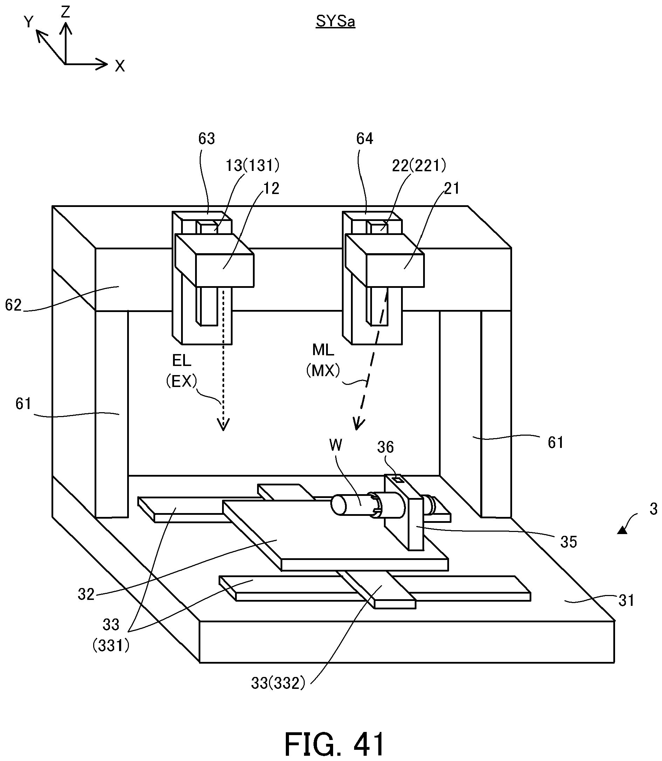

Firstly, with reference to FIG. 41, the processing system SYS in a first modified example (hereinafter, the processing system SYS in the first modified example is referred to as a "processing system SYSa") will be described. FIG. 41 is a perspective view that conceptionally illustrates an exterior appearance of the processing system SYSa in the first modified example.

As illustrated in FIG. 41, the processing system SYSa in the first modified example is different from the above described processing system SYS in which the measurement axis MX is parallel to the irradiation axis EX in that the measurement axis MX of the measurement head 21 intersects with the irradiation axis EX that is along the propagating direction of the processing light EL. Incidentally, in an example illustrated in FIG. 41, the irradiation axis EX is parallel to the Z axis, however, the irradiation axis EX may be inclined with respect to the Z axis. Moreover, in the example illustrated in FIG. 41, the measurement axis MX is inclined with respect to the Z axis, however, the measurement axis MX may be parallel to the Z axis. Another feature of the processing system SYSa may be same as another feature of the processing system SYS.

### (4-2) Second Modified Example

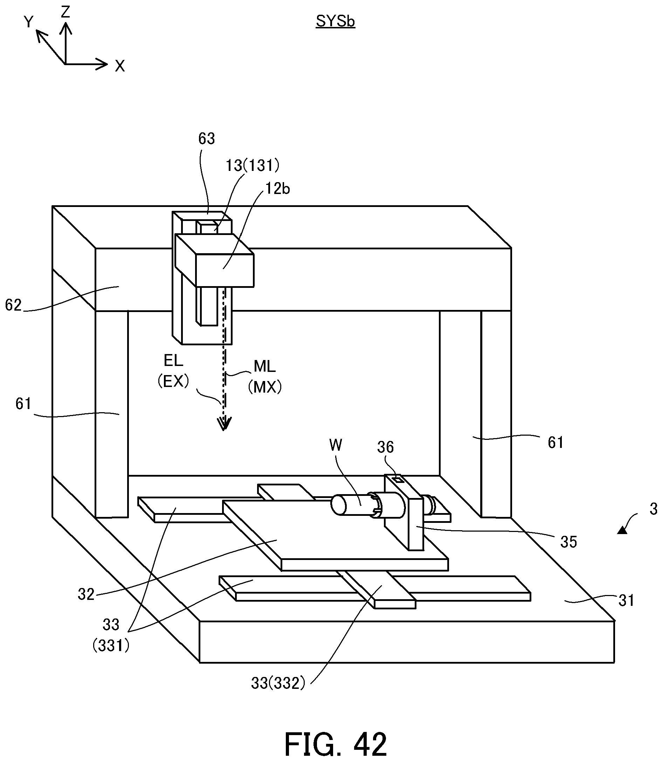

Next, with reference to FIG. 42, the processing system SYS in a second modified example (hereinafter, the processing system SYS in the second modified example is referred to as a "processing system SYSb") will be described. FIG. 42 is a perspective view that conceptionally illustrates an exterior appearance of the processing system SYSb in the second modified example.

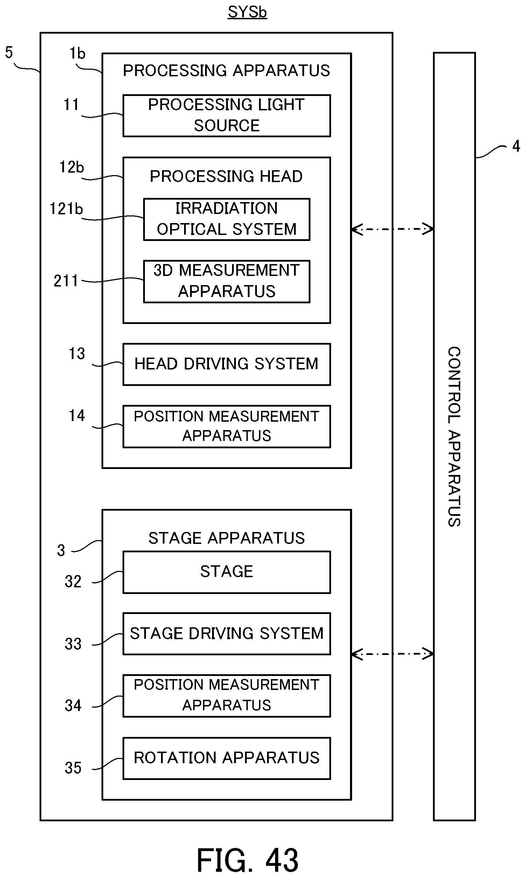

As illustrated in FIG. 42, the processing system SYSb in the second modified example is different from the above described processing system SYS in which the measurement axis MX is not coincident with the irradiation axis EX in that the measurement axis MX of the measurement head 21 is coincident with the irradiation axis EX along the propagating direction of the processing light EL. In this case, as illustrated in FIG. 43 that is a system configuration diagram illustrating a system configuration of the processing system SYSb in the second modified example, the processing system SYSb is different from the processing system SYS in that it includes a processing apparatus 1b instead of the processing apparatus 1. Furthermore, the processing system SYSb is different from the processing system SYS in that it may not include the measurement apparatus 2. Another feature of the processing system SYSb may be same as another feature of the processing system SYS. The processing apparatus 1b is different from the processing apparatus 1 in that it includes a processing head 12b instead of the processing head 12. Another feature of the processing apparatus 1b may be same as another feature of the processing apparatus 1. The processing head 12b is different from the processing head 12 in that it includes an irradiation optical system 121b instead of the irradiation optical system 121. Furthermore, the processing head 12b is different from the processing head 12 in that it includes a three-dimensional measurement apparatus 211. Another feature of the processing head 12b may be same as another feature of the processing head 12.

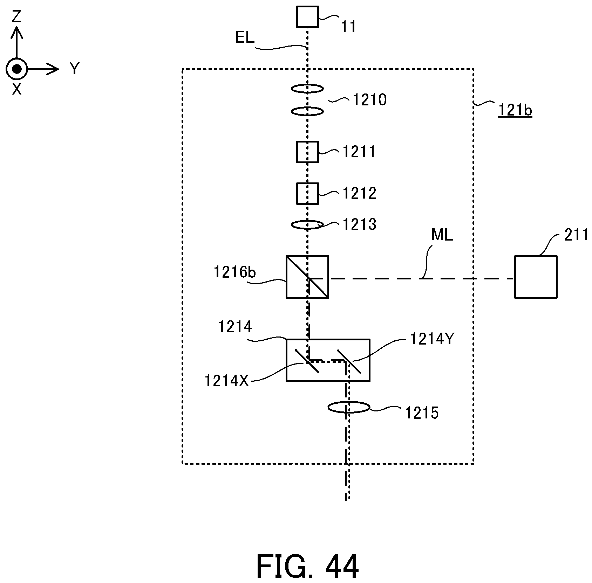

FIG. 44 illustrates a configuration of the irradiation optical system 121b. as illustrated in FIG. 44, the irradiation optical system 121b is different from the irradiation optical system 121 in that it includes a combining optical system 1216b. Another feature of the irradiation optical system 121b may be same as another feature of the irradiation optical system 121. The combining optical system 1216c combines the processing light EL that has passed through the condensed position change optical system 1210, the open angle change optical system 1211, the ellipticity change optical system 1212 and the light rotation optical system 1213 and the measurement light ML from the three-dimensional measurement apparatus 211. For example, the combining optical system 1216b may include a polarized beam splitter in order to combine the processing light EL and the measurement light ML. Either one of the processing light EL and the measurement light ML entering the polarized beam splitter may be reflected by a polarization split surface of the polarized beam splitter. The other one of the processing light EL and the measurement light ML entering the polarized beam splitter may pass through the polarization split surface of the polarized beam splitter. As a result, the polarized beam splitter emits the processing light EL and the measurement light ML, which has entered the polarized beam splitter from different directions, toward the same direction (specifically, toward the Galvano mirror 1214). Thus, the irradiation axis EX of the processing light EL is coincident with the measurement axis MX of the measurement light ML. Here, the irradiation axis EX of the processing light EL may not be coincident with the measurement axis MX of the measurement light ML (namely, may have a relationship in which both are parallel and are away along a lateral direction). Moreover, the combination and separation of the processing light EL and the measurement light ML may be performed by a dichroic mirror instead of the polarized beam splitter. In this case, wavelengths of the processing light EL and the measurement light ML may be different from each other.

Note that the processing system SYSb may include the measurement apparatus 2.

### (4-3) Third Modified Example

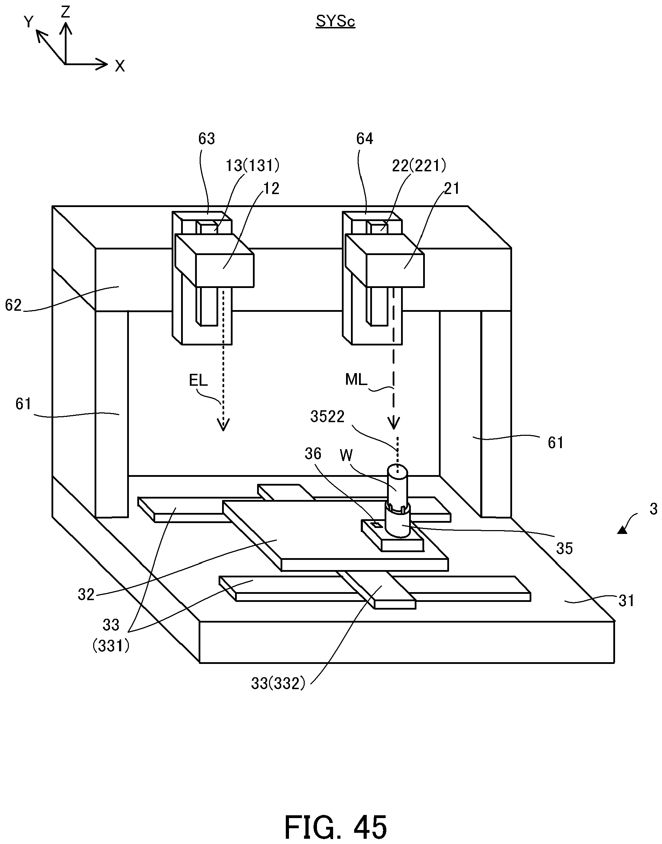

Next, with reference to FIG. 45, the processing system SYS in a third modified example (hereinafter, the processing system SYS in the third modified example is referred to as a "processing system SYSc") will be described. FIG. 45 is a perspective view that conceptionally illustrates an exterior appearance of the processing system SYSc in the third modified example.

As illustrated in FIG. 45, the processing system SYSc in the third modified example is different from the above described processing system SYS in which the rotational shaft 3521 extends along the direction intersecting with the gravity direction in that the rotational shaft 3521 extends along the gravity direction. The processing system SYSc is different from the above described processing system SYS in which the rotational axis 3522 extends along the direction intersecting with the gravity direction in that the rotational axis 3522 extends along the gravity direction. Another feature of the processing system SYSc may be same as another feature of the processing system SYS.

### (4-4) Other Modified Example

In the above described description, the processing system SYS processes the workpiece W by irradiating the workpiece W with the processing light EL. However, the processing system SYS may process the workpiece W by irradiating the workpiece W with any energy beam. In this case, the processing system SYS may include a beam irradiation apparatus that is configured to emit any energy beam in addition to or instead of the processing light source 11. At least one of a charged particle beam, an electromagnetic wave and the like is one example of any energy beam. A least one of an electron beam, an ion beam and the like is one example of the charged particle beam.

The features of each example embodiment described above may be appropriately combined with each other. A part of the features of each example embodiment described above may not be used. The feature of each example embodiment described above may be appropriately replaced with the feature of another example embodiment. Moreover, the disclosures of all publications and United States patents related to an apparatus and the like cited in each embodiment described above are incorporated in the disclosures of the present application by reference if it is legally permitted.

The present invention is not limited to the above described examples and is allowed to be changed, if desired, without departing from the essence or spirit of the invention which can be read from the claims and the entire specification, and a processing system, which involves such changes, is also intended to be within the technical scope of the present invention.

### Description of Reference Codes

- 1: processing apparatus
- 12: processing head
- 2: measurement apparatus
- 3: stage apparatus
- 32: stage
- 35: rotation apparatus
- 3521: rotational shaft
- 3522: rotational axis
- 36: measurement apparatus
- 361: beam passing member
- 362: optical reception element
- 363: aperture
- 364: attenuation area
- 365: passing area
- 366: mark
- EL: processing light
- ML: measurement light
- W: workpiece
- SYS: processing system

## Claims

1. A processing system comprising:
a holding apparatus that is configured to hold an object to be rotatable;
a rotation apparatus that is configured to rotate the holding apparatus;
a beam irradiation apparatus that is configured to irradiate the object held by the holding apparatus with an energy beam;
an object measurement apparatus that is configured to measure the object; and
a control apparatus that is configured to control at least one of the beam irradiation apparatus and the rotation apparatus based on an information related to the object measured by the object measurement apparatus and an information of a rotational axis of the rotation apparatus,
the object being processed by irradiating the object held by the holding apparatus with the energy beam from the beam irradiation apparatus.

2. The processing system according to claim 1, wherein
the control apparatus is configured to control at least one of the beam irradiation apparatus and the rotation apparatus based on a misalignment between the rotational axis and the object.

3. A processing system comprising:
a holding apparatus that is configured to hold an object to be rotatable;
a rotation apparatus that is configured to rotate the holding apparatus;
a beam irradiation apparatus that is configured to irradiate the object held by the holding apparatus with an energy beam;
an object measurement apparatus that is configured to measure the object; and
a control apparatus that is configured to control at least one of the beam irradiation apparatus and the rotation apparatus based on a misalignment between the object measured by the object measurement apparatus and a rotational axis of the rotation apparatus,
the object being processed by irradiating the object held by the holding apparatus with the energy beam from the beam irradiation apparatus.

4. The processing system according to any one of claims 1 to 3, wherein
the control apparatus is configured to control at least one of the beam irradiation apparatus and the rotation apparatus based on an angle relationship between the rotational axis and a central axis of the object.

5. The processing system according to any one of claims 1 to 4, wherein
the control apparatus is configured to control at least one of the beam irradiation apparatus and the rotation apparatus based on a positional relationship between the rotational axis and a central axis of the object.

6. The processing system according to any one of claims 1 to 5, wherein
the control apparatus is configured to control an irradiation position of the energy beam by the beam irradiation apparatus based on a misalignment between the rotational axis and the obj ect.

7. The processing system according to claim 6, wherein
the control apparatus is configured to control the irradiation position of the energy beam by the beam irradiation apparatus in a direction intersecting with the rotational axis based on the misalignment between the rotational axis and the object.

8. The processing system according to claim 6 or 7, wherein
the beam irradiation apparatus includes a beam irradiation position change apparatus that is configured to change an irradiation position of the energy beam relative to the beam irradiation apparatus.

9. The processing system according to any one of claims 1 to 8, wherein
the beam irradiation apparatus is configured to irradiate an irradiation position on a surface of the object with the energy beam from a direction intersecting with a normal line of the surface at the irradiation position.

10. The processing system according to claim 9, wherein
an angle between the normal line and an irradiation axis that is along a propagating direction of the energy beam with which the irradiation position is irradiated is equal to or larger than 60 degree.

11. The processing system according to claim 9 or 10, wherein
the irradiation position of the energy beam is changeable in a direction intersecting with the rotational axis.

12. The processing system according to any one of claims 1 to 11, wherein
an irradiation position of the energy beam at a second period that is after a first period is closer to the rotational axis than the irradiation position at the first period during which the beam irradiation apparatus irradiates the object with the energy beam is.

13. The processing system according to any one of claims 1 to 12 comprising a beam damper that is disposed at a position away from an irradiation position toward a side opposite to the beam irradiation apparatus and that is irradiated with the energy beam.

14. The processing system according to claim 13, wherein
the beam damper includes an irradiation surface that is irradiated with the energy beam,
the irradiation surface is inclined with respect to an irradiation axis that is along a propagating direction of the energy beam.

15. The processing system according to claim 14, wherein
an angle between the irradiation surface and the irradiation axis is an acute angle.

16. A processing system comprising:
a holding apparatus that is configured to hold an object to be rotatable;
a rotation apparatus that is configured to rotate the holding apparatus;
a beam irradiation apparatus that is configured to irradiate the object held by the holding apparatus with an energy beam;
an object measurement apparatus that is configured to measure the object; and
a control apparatus that is configured to control at least one of the beam irradiation apparatus and the rotation apparatus based on an information related to the object measured by the object measurement apparatus and an information of at least one of a position and an attitude of the rotation apparatus,
the object being processed by irradiating the object held by the holding apparatus with the energy beam from the beam irradiation apparatus.

17. The processing system according to claim 16, wherein
the object measurement apparatus is configured to obtain the information of at least one of the position and the attitude of the rotation apparatus.

18. The processing system according to claim 17 further comprising a beam measurement apparatus that is disposed at the rotation apparatus and that is configured to measure the energy beam from the beam irradiation apparatus.

19. The processing system according to claim 18, wherein
the object measurement apparatus is configured to measure at least one of a position and an attitude of the beam measurement apparatus.

20. The processing system according to any one of claims 1 to 19 further comprising a beam measurement apparatus that is configured to measure the energy beam from the beam irradiation apparatus.

21. A processing system comprising:
a holding apparatus that is configured to hold an object to be rotatable;
a rotation apparatus that is configured to rotate the holding apparatus;
a beam irradiation apparatus that is configured to irradiate the object held by the holding apparatus with an energy beam;
a beam measurement apparatus that is configured to measure the energy beam from the beam irradiation apparatus; and
a control apparatus that is configured to control the beam irradiation apparatus based on an information related to the energy beam measured by the beam measurement apparatus,
the object being processed by irradiating the object held by the holding apparatus with the energy beam from the beam irradiation apparatus.

22. The processing system according to claim 20 or 21, wherein
the beam measurement apparatus is configured to measure an intensity distribution in an angular direction relative to an irradiation axis that is along a propagating direction of the energy beam.

23. The processing system according to claim 22, wherein
the control apparatus is configured to control an irradiation position of the energy beam based on a measured result by the beam measurement apparatus.

24. The processing system according to claim 22 or 23, wherein
the control apparatus is configured to control a direction along which the energy beam propagates based on a measured result by the beam measurement apparatus.

25. The processing system according to claim 23 or 24, wherein
the beam irradiation apparatus includes a beam irradiation state change apparatus that is configured to change at least one of an irradiation position of the energy beam relative to the beam irradiation apparatus and a propagating direction of the energy beam from the beam irradiation apparatus.

26. The processing system according to any one of claims 22 to 25, wherein
the beam irradiation apparatus includes an open angle change apparatus that is configured to change an open angle of the energy beam,
the control apparatus is configured to control the open angle based on a measured result by the beam measurement apparatus.

27. The processing system according to claim 23, wherein
when the open angle change apparatus is a first open angle change apparatus, the beam irradiation apparatus includes a second open angle change apparatus that is configured to change at least one of a first open angle of the energy beam in a first plane that includes an irradiation axis along a propagating direction of the energy beam and a second open angle of the energy beam in a second plane that includes the irradiation axis and that intersects with the first plane,
the control apparatus is configured to control at least one of the first open angle and the second open angle based on a measured result by the beam measurement apparatus.

28. The processing system according to any one of claims 20 to 27, wherein
the beam irradiation apparatus includes:
a condensing optical system that is configured to condenses the energy beam; and
a beam rotation member that is configured to change, around an optical axis of the condensing optical system, a direction along which a diameter of a beam cross section at an entrance pupil of the condensing optical system is maximum.

29. The processing system according to any one of claims 20 to 28, wherein
the beam measurement apparatus is configured to measure the energy beam at a first position in a direction along which the energy beam propagates and measure the energy beam at a second position that is different from the first position in the propagating direction.

30. The processing system according to any one of claims 20 to 29, wherein
the beam measurement apparatus is configured to measure the energy beam at a first position in a direction along which the energy beam propagates,
the first position in the propagating direction is different from a condensed position at which the energy beam is condensed in the propagating direction.

31. The processing system according to any one of claims 20 to 30, wherein
the beam measurement apparatus is configured to measure a direction along which the energy beam propagates.

32. The processing system according to claim 31, wherein
the beam measurement apparatus is configured to measure the energy beam at a first position in a direction along which the energy beam propagates and measure the energy beam at a second position that is different from the first position in the propagating direction, and
measures the direction along which the energy beam propagates based on the first position and the second position in a direction that intersects with the direction along which the energy beam propagates

33. The processing system according to claim 31 or 32 controlling an irradiation position of the energy beam based on the direction along which the energy beam propagates measured by the beam measurement apparatus.

34. The processing system according to any one of claims 31 to 33 controlling the direction along which the energy beam propagates based on the direction along which the energy beam propagates measured by the beam measurement apparatus.

35. The processing system according to any one of claims 20 to 34, wherein
the beam measurement apparatus is configured to measure a position through which the energy beam passes in a plane intersecting with a direction along which the energy beam propagates.

36. The processing system according to any one of claims 20 to 35, wherein
the beam measurement apparatus is configured to measure the energy beam when an irradiation position of the energy beam relative to the beam irradiation apparatus is a first position and measure the energy beam when the irradiation position of the energy beam relative to the beam irradiation apparatus is a second position that is different from the first position.

37. The processing system according to claim 36, wherein
the beam measurement apparatus includes a first beam passing part that is formed in an attenuation area for attenuating the energy beam and a second beam passing part that is formed in an attenuation area for attenuating the energy beam and that is different from the first beam passing part,
a positional relationship between the first and second beam passing parts and a rotational axis is a predetermined relationship.

38. The processing system according to claim 37, wherein
the beam measurement apparatus is configured to optically receive the energy beam passing through the first beam passing part, when the irradiation position of the energy beam is the first position,
the beam measurement apparatus is configured to optically receive the energy beam passing through the second beam passing part, when the irradiation position of the energy beam is the second position.

39. The processing system according to claim 36 or 37, wherein
the rotation apparatus is disposed at a movable stage that is movable along a plane intersecting with a propagating direction of the energy beam.

40. The processing system according to claim 36, wherein
the beam measurement apparatus includes a beam passing part that is formed in an attenuation area for attenuating the energy beam,
a relationship between a rotational axis of the rotation apparatus and the intersecting plane along which the movable stage is movable is a predetermined relationship.

41. The processing system according to claim 40, wherein
the beam measurement apparatus is configured to optically receive the energy beam passing through the beam passing part, when the movable stage is located at a first stage position,
the beam measurement apparatus is configured to optically receives the energy beam passing through the beam passing part, when the movable stage is located at a second stage position that is different from the first stage position.

42. The processing system according to any one of claims 20 to 41, wherein
the beam measurement apparatus includes a beam passing part that is formed in an attenuation area for attenuating the energy beam,
a positional relationship between the beam passing part and the rotation apparatus is a predetermined relationship.

43. The processing system according to any one of claims 1 to 42, wherein
an irradiation axis that is along a direction along which the energy beam from the beam irradiation apparatus propagates is not coincident with a measurement axis of the object measurement apparatus.

44. The processing system according to claim 43, wherein
the irradiation axis is parallel to the measurement axis.

45. The processing system according to claim 43, wherein
the irradiation axis intersects with the measurement axis.

46. The processing system according to any one of claims 1 to 45, wherein
an irradiation axis that is along a direction along which the energy beam from the beam irradiation apparatus propagates is coincident with a measurement axis of the object measurement apparatus.

47. The processing system according to any one of claims 1 to 46, wherein
the object measurement apparatus is configured to measure a surface of the object three-dimensionally.

48. The processing system according to any one of claims 1 to 47, wherein
the control apparatus is configured to control the rotation apparatus to rotate the object after the object measurement apparatus measures the object,
the object measurement apparatus measures the object that has been rotated by the rotation apparatus.

49. The processing system according to claim 48, wherein
a measurement range on the object that has been rotated by the rotation apparatus is partially overlapped with a measurement range on the object that is not yet rotated by the rotation apparatus

50. The processing system according to any one of claims 1 to 47, wherein
the object measurement apparatus measures the object that is being rotated by the rotation apparatus.

51. The processing system according to any one of claims 1 to 50 further comprising:
a beam measurement apparatus that is configured to measure the energy beam from the beam irradiation apparatus; and
a movement apparatus that is configured to move at least one of the beam irradiation apparatus and the beam measurement apparatus,
the control apparatus being configured to:
move at least one of the beam irradiation apparatus and the beam measurement apparatus so that the beam measurement apparatus measures the energy beam from the beam irradiation apparatus; and
move at least one of the beam irradiation apparatus and the beam measurement apparatus so that the object measurement apparatus measures at least a part of the beam measurement apparatus.

52. A processing system comprising:
a holding apparatus that is configured to hold an object to be rotatable;
a rotation apparatus that is configured to rotate the holding apparatus;
a beam irradiation apparatus that is configured to irradiate the object held by the holding apparatus with an energy beam;
an object measurement apparatus that is configured to measure the object;
a beam measurement apparatus that is configured to measure the energy beam from the beam irradiation apparatus;
a movement apparatus that is configured to move at least one of the beam irradiation apparatus and the beam measurement apparatus; and
a control apparatus that is configured to control at least the movement apparatus,
the control apparatus being configured to:
move at least one of the beam irradiation apparatus and the beam measurement apparatus to be at a position at which the beam measurement apparatus measures the energy beam from the beam irradiation apparatus; and
move at least one of the beam irradiation apparatus and the beam measurement apparatus to be at a position at which the object measurement apparatus measures at least a part of the beam measurement apparatus.

53. The processing system according to claim 51 or 52, wherein
the control apparatus is configured to control the movement apparatus based on a first information related to a position of at least one of the beam irradiation apparatus and the beam measurement apparatus when the beam measurement apparatus measures the energy beam from the beam irradiation apparatus and a second information related to a position of at least one of the beam irradiation apparatus and the beam measurement apparatus when the object measurement apparatus measures at least a part of the beam measurement apparatus.

54. The processing system according to any one of claims 1 to 53 further comprising:
a beam measurement apparatus that is configured to measure the energy beam from the beam irradiation apparatus;
a movement apparatus that is configured to move at least one of a position of the beam irradiation apparatus and a position of the beam measurement apparatus; and
an obtaining apparatus that is configured to obtain an information related to at least one of the position of the beam irradiation apparatus and the position of the beam measurement apparatus,
the control apparatus being configured to:
move at least one of the beam irradiation apparatus and the beam measurement apparatus to an irradiation allowable position at which the beam irradiation apparatus irradiates at least a part of the beam measurement apparatus with the energy beam;
obtain, by using the obtaining apparatus, an irradiation position information related to at least one of the position of the beam irradiation apparatus and the position of the beam measurement apparatus that has moved to the irradiation allowable position; and
control at least one of the position of the beam irradiation apparatus and the position of the beam measurement apparatus based on the irradiation position information.

55. A processing system comprising:
a holding apparatus that is configured to hold an object to be rotatable;
a rotation apparatus that is configured to rotate the holding apparatus;
a beam irradiation apparatus that is configured to irradiate the object held by the holding apparatus with an energy beam;
an object measurement apparatus that is configured to measure the object;
a beam measurement apparatus that is configured to measure the energy beam from the beam irradiation apparatus;
a movement apparatus that is configured to move at least one of the beam irradiation apparatus and the beam measurement apparatus;
an obtaining apparatus that is configured to obtain an information related to at least one of a position of the beam irradiation apparatus and a position of the beam measurement apparatus; and
a control apparatus that is configured to control at least the movement apparatus,
the control apparatus being configured to:
move at least one of the beam irradiation apparatus and the beam measurement apparatus to an irradiation allowable position at which the beam irradiation apparatus irradiates at least a part of the beam measurement apparatus with the energy beam;
obtain, by using the obtaining apparatus, an irradiation position information related to at least one of the position of the beam irradiation apparatus and the position of the beam measurement apparatus that has moved to the irradiation allowable position; and
control at least one of the position of the beam irradiation apparatus and the position of the beam measurement apparatus based on the irradiation position information.

56. The processing system according to any one of claims 1 to 55 further comprising:
a beam measurement apparatus that is configured to measure the energy beam from the beam irradiation apparatus;
a movement apparatus that is configured to move at least one of the beam irradiation apparatus and the beam measurement apparatus; and
an obtaining apparatus that is configured to obtain an information related to at least one of a position of the beam irradiation apparatus and a position of the beam measurement apparatus,
the control apparatus being configured to:
move at least one of the beam irradiation apparatus and the beam measurement apparatus to a measurement allowable position at which the object measurement apparatus measures at least a part of the beam measurement apparatus;
obtain, by using the obtaining apparatus, a measurement position information related to at least one of the position of the beam irradiation apparatus and the position of the beam measurement apparatus that has moved to the measurement allowable position; and
control at least one of the position of the beam irradiation apparatus and the position of the beam measurement apparatus based on the measurement position information.

57. A processing system comprising:
a holding apparatus that is configured to hold an object to be rotatable;
a rotation apparatus that is configured to rotate the holding apparatus;
a beam irradiation apparatus that is configured to irradiate the object held by the holding apparatus with an energy beam;
an object measurement apparatus that is configured to measure the object;
a beam measurement apparatus that is configured to measure the energy beam from the beam irradiation apparatus;
a movement apparatus that is configured to move at least one of the beam irradiation apparatus and the beam measurement apparatus;
an obtaining apparatus that is configured to obtain an information related to at least one of a position of the beam irradiation apparatus and a position of the beam measurement apparatus; and
a control apparatus that is configured to control at least the movement apparatus,
the control apparatus being configured to:
move at least one of the beam irradiation apparatus and the beam measurement apparatus to a measurement allowable position at which the object measurement apparatus measures at least a part of the beam measurement apparatus;
obtain, by using the obtaining apparatus, a measurement position information related to at least one of the position of the beam irradiation apparatus and the position of the beam measurement apparatus that has moved to the measurement allowable position; and
control at least one of the position of the beam irradiation apparatus and the position of the beam measurement apparatus based on the measurement position information.

58. The processing system according to any one of claims 1 to 57, wherein
the beam irradiation apparatus is configured to irradiate the object that has been measured by the object measurement apparatus with the energy beam,
the object measurement apparatus is configured to measure the object that has been irradiated with the energy beam.

59. The processing system according to any one of claims 1 to 58, wherein
the beam irradiation apparatus is configured to irradiate the object that is being rated by the rotation apparatus.

60. The processing system according to any one of claims 1 to 58, wherein
the rotation apparatus is configured to rotate the object that has been irradiated with the energy beam by the beam irradiation apparatus,
the beam irradiation apparatus is configured to irradiate the object that has been rotated by the rotation apparatus.

61. The processing system according to any one of claims 1 to 60, wherein
the beam irradiation apparatus is configured to emit from a direction that intersects with a rotational axis of the rotation apparatus.

62. The processing system according to any one of claims 1 to 60, wherein
the beam irradiation apparatus is configured to emit from a direction that is skew relative to a rotational axis of the rotation apparatus.

63. The processing system according to claim 61 or 62, wherein
an irradiation position at which the object is irradiated with the energy beam from the beam irradiation apparatus is changeable along a direction parallel to the rotational axis.

64. The processing system according to any one of claims 1 to 63, wherein
the holding apparatus includes a holding surface that contacts with the object when the object is held,
the beam irradiation apparatus is configured to irradiate a surface of the object that intersects with a plane parallel to the holding surface with the energy beam.

65. The processing system according to any one of claims 1 to 64, wherein
the beam irradiation apparatus is configured to irradiate a surface of the object that intersects with a rotational axis of the rotation apparatus with the energy beam.

66. The processing system according to any one of claims 1 to 65 further comprising a movement apparatus that is configured to move at least one of the beam irradiation apparatus and the rotation apparatus.

67. The processing system according to any one of claims 1 to 64, wherein
the beam irradiation apparatus includes a beam irradiation position change apparatus that is configured to change an irradiation position of the energy beam relative to the beam irradiation apparatus.

68. The processing system according to any one of claims 1 to 67, wherein
a rotational axis of the rotation apparatus extends in a direction intersecting with a gravity direction.

69. The processing system according to any one of claims 1 to 67, wherein
a rotational axis of the rotation apparatus extends in a gravity direction.

70. The processing system according to any one of claims 1 to 69 performing a laser turning processing on a surface of the object by a laser beam as the energy beam while rotating the holding apparatus by the rotation apparatus.

71. A processing system comprising:
a holding apparatus that is configured to hold an object to be rotatable;
a rotation apparatus that is configured to rotate the holding apparatus;
a beam irradiation apparatus that is configured to irradiate the object held by the holding apparatus with an energy beam;
an object measurement apparatus that is configured to measure a three-dimensional shape of the object; and
a control apparatus that is configured to control at least one of the beam irradiation apparatus and the rotation apparatus based on a measured result by the object measurement apparatus,
the object being processed by irradiating the object held by the holding apparatus with the energy beam from the beam irradiation apparatus.

72. The processing system according to 71 performing a laser turning processing on a surface of the object by a laser beam as the energy beam while rotating the holding apparatus by the rotation apparatus.

73. The processing system according to claim 71 or 72, wherein
the control apparatus is configured to control at least one of the beam irradiation apparatus and the rotation apparatus based on a misalignment between a rotational axis of the rotation apparatus and the object that is obtainable from the measured result by the object measurement apparatus.

74. The processing system according to claim 71 being configured to process the surface of the object by the energy beam while relatively moving the object and the energy beam in a state where a rotation of the rotation apparatus is stopped.

75. The processing system according to claim 74, wherein
the relative movement is performed in a parallel direction to a rotational axis of the rotation apparatus.

76. A processing system comprising:
a holding apparatus that is configured to hold an object;
a rotation apparatus that is configured to rotate the holding apparatus;
a beam irradiation apparatus that is configured to irradiate the object held by the holding apparatus with an energy beam;
an object measurement apparatus that is configured to measure the object; and
a control apparatus that is configured to control the beam irradiation apparatus based on a measured result of the object by the object measurement apparatus,
the bean irradiation apparatus changing an irradiation position of the energy beam on a surface of the object along the surface of the object in a period during which the beam irradiation apparatus irradiates the object with the energy beam,
the control apparatus being configured to control the beam irradiation apparatus based on the measured result of the object including a processed mark by the energy beam.

77. The processing system according to claim 76, wherein
the beam irradiation apparatus is configured to change the irradiation position on a surface of a first object in a first period during which the beam irradiation apparatus irradiates the first object with the energy beam to process the first object as the object,
the control apparatus is configured to control the beam irradiation apparatus based on the measured result of the first object including the processed mark by the energy beam in a second period during which the beam irradiation apparatus irradiates a second object with the energy beam to process the second object as the object.

78. The processing system according to claim 77, wherein
the control apparatus is configured to generate a direction information related to a relationship between a direction along which the processed mark extends and a direction along which a rotational axis of the rotation apparatus extends based on the measured result of the first object, and control the beam irradiation apparatus based on the direction information in the second period.

79. The processing system according to claim 77 or 78, wherein
the control apparatus is configured to control the beam irradiation apparatus so that an irradiation position of the energy beam on a surface of the second object moves along the direction along which the rotational axis extends in the second period.

80. The processing system according to any one of claims 77 to 79, wherein
the beam irradiation apparatus changes the irradiation position by using a beam deflection apparatus that is configured to deflect the energy beam,
the control apparatus is configured to control the beam deflection apparatus so that an irradiation position of the energy beam on a surface of the second object moves along the direction along which the rotational axis extends in the second period.

81. The processing system according to any one of claims 77 to 80 further comprising a movement apparatus that is configured to move the rotation apparatus,
in the first period, the beam irradiation apparatus processing a first area of the first object, the movement apparatus moving the rotation apparatus after the first area is processed, the beam irradiation apparatus processing a second area of the first object after the rotation apparatus moves,
in the second period, the control apparatus controlling at least one of the beam irradiation apparatus and the movement apparatus based on the measured result of the first object including the processed mark of each of the first and second areas by the energy beam.

82. The processing system according to claim 81, wherein
the control apparatus is configured to generate a positional relationship information related to a relative positional relationship between the processed mark of the first area and the processed mark of the second area based on the measured result of the first object, and control at least one of the beam irradiation apparatus and the movement apparatus based on the positional relationship information in the second period.

83. The processing system according to claim 81 or 82, wherein
the positional relationship information includes an information related to a direction along a line that connects the processed mark of the first area and the processed mark of the second area

84. The processing system according to claim 83, wherein
the control apparatus is configured to control at least one of the beam irradiation apparatus and the movement apparatus so that an irradiation position of the energy beam on a surface of the second object moves along the direction along which the rotational axis extends in the second period.

85. A processing system comprising:
a holding apparatus that is configured to hold an object;
a rotation apparatus that is configured to rotate the holding apparatus;
a beam irradiation apparatus that is configured to irradiate the object held by the holding apparatus with an energy beam;
an object measurement apparatus that is configured to measure the object;
a control apparatus that is configured to control at least one of the beam irradiation apparatus and the rotation apparatus based on a measured result of the object by the object measurement apparatus; and
a movement apparatus that is configured to move the rotation apparatus,
the object measurement apparatus being configured to measure the object every time the movement apparatus moves the rotation apparatus along one direction,
the control apparatus being configured to control at least one of the beam irradiation apparatus and the movement apparatus based on the measured result of the object by the object measurement apparatus in an irradiation period during which the beam irradiation apparatus irradiates the object with the energy beam.

86. The processing system according to claim 85, wherein
the control apparatus is configured to generate a direction information related to a relationship between the one direction and a direction along which a rotational axis of the rotation apparatus extends based on the measured result of the object, and control at least one of the beam irradiation apparatus and the movement apparatus based on the direction information in the irradiation period.

87. The processing system according to claim 85 or 86, wherein
the control apparatus is configured to control at least one of the beam irradiation apparatus and the movement apparatus so that an irradiation position of the energy beam on a surface of the object moves along the direction along which the rotational axis extends in the irradiation period.

88. The processing system according to any one of claims 85 to 87, wherein
the object measurement apparatus is configured to measure a first object as the object every time the movement apparatus moves the rotation apparatus along the one direction in a period during which the holding apparatus holds the first object as the object,
the control apparatus is configured to control at least one of the beam irradiation apparatus and the movement apparatus based on the measured result of the first object by the object measurement apparatus in the irradiation period during which the beam irradiation apparatus irradiates a second object as the object with the energy beam.

89. The processing system according to claim 88, wherein
the control apparatus is configured to generate a direction information related to a relationship between the one direction and a direction along which a rotational axis of the rotation apparatus extends based on the measured result of the first object, and control at least one of the beam irradiation apparatus and the movement apparatus based on the direction information in the irradiation period.

90. The processing system according to claim 88 or 89, wherein
the control apparatus is configured to control at least one of the beam irradiation apparatus and the movement apparatus so that an irradiation position of the energy beam on a surface of the second object moves along the direction along which the rotational axis extends in the irradiation period.

91. A processing system comprising:
a holding apparatus that is configured to hold an object;
a rotation apparatus that is configured to rotate the holding apparatus;
a beam irradiation apparatus that is configured to irradiate the object held by the holding apparatus with an energy beam;
an object measurement apparatus that is configured to measure the object; and
a control apparatus that is configured to control at least one of the beam irradiation apparatus and the rotation apparatus based on a measured result of the object by the object measurement apparatus,
the object measurement apparatus being configured to measure the object every time the rotation apparatus rotates the rotation apparatus by a predetermined angle,
the control apparatus being configured to control the beam irradiation apparatus based on the measured result of the object by the object measurement apparatus.

92. The processing system according to claim 91, wherein
the object measurement apparatus is configured to measure an end part of the object that is located at an end along a first intersection direction that intersects with a rotational axis of the rotation apparatus every time the rotation apparatus rotates the rotation apparatus by the predetermined angle,
the control apparatus is configured to generate a position information related to a position of the end part based on the measured result of the object and control the beam irradiation apparatus based on the position information.

93. The processing system according to claim 91 or 92, wherein
the object measurement apparatus is configured to perform, at a first position on the object and a second position on the object that is different from the first position in a direction along the rotational axis, an operation for measuring the end part every time the rotation apparatus rotates the rotation apparatus by the predetermined angle,

94. The processing system according to claim 92 or 93, wherein
the position information includes an information related to a relationship between a position of the end part in the first intersection direction and a rotational angle of the object around the rotational axis.

95. The processing system according to any one of claims 92 to 94, wherein
the position information includes an information related to a phase of a changed amount of the position of the end part in the first intersection direction relative to the rotational angle.

96. The processing system according to any one of claims 92 to 95, wherein
the control apparatus is configured to control the beam irradiation apparatus to change an irradiation position of the energy beam along a second intersection direction that intersects with the rotational axis.

97. A processing system comprising:
a holding apparatus that is configured to hold an object;
a rotation apparatus that is configured to rotate the holding apparatus;
a beam irradiation apparatus that is configured to irradiate the object held by the holding apparatus with an energy beam;
an object measurement apparatus that is configured to measure the object;
a control apparatus that is configured to control at least one of the beam irradiation apparatus and the rotation apparatus based on a measured result of the object by the object measurement apparatus; and
a beam measurement apparatus that is disposed at the rotation apparatus and that is configured to measure the energy beam from the beam irradiation apparatus.

98. The processing system according to claim 97, wherein
the beam irradiation apparatus includes:
a beam passing member including an attenuation area that attenuates the energy beam and a passing area through which the energy beam passes; and
a detection part that is configured to detect the energy beam that has passed through the passing area.

99. The processing system according to claim 97 or 98 further comprising a movement apparatus that is configured to move the rotation apparatus,
the control apparatus being configured to control a position of the rotation apparatus based on an information related to a position of the rotation apparatus when the beam measurement apparatus detects the energy beam and an information related to a position of the rotation apparatus when the object measurement apparatus measures at least a part of the beam measurement apparatus.

100. A processing system comprising:
a holding apparatus that is configured to hold an object to be rotatable;
a rotation apparatus that is configured to rotate the holding apparatus;
a beam irradiation apparatus that is configured to irradiate the object held by the holding apparatus with an energy beam;
an object measurement apparatus that is configured to measure the object;
a change apparatus that is configured to change an irradiation position of the energy beam with which the object is irradiated; and
a control apparatus that is configured to control at least one of the rotation apparatus and the change apparatus,
the control apparatus being configured to control the rotation apparatus and the change apparatus to rotate the rotation apparatus and to change the irradiation position based on an information related to the object measured by the object measurement apparatus,
the object being processed by irradiating the object held by the holding apparatus with the energy beam from the beam irradiation apparatus.

101. The processing system according to claim 100, wherein
the beam irradiation apparatus includes the change apparatus.

102. The processing system according to claim 101, wherein
change apparatus is configured to change the irradiation position relative to the beam irradiation apparatus.

103. The processing system according to any one of claims 100 to 102 being configured to rotate the holding apparatus and move the irradiation position when the object is processed by the processing apparatus.

104. The processing system according to any one of claims 100 to 103, wherein
the rotation apparatus is configured to rotate the holding apparatus around a rotational axis,
the object is processed while moving the irradiation position in a direction parallel to the rotational axis and a direction intersecting with the rotational axis by the change apparatus.
